(19) Europäisches Patentamt
European Patent Office
Office européen des brevets

(11) EP 2 640 055 B1

(12) **EUROPEAN PATENT SPECIFICATION**

(45) Date of publication and mention of the grant of the patent:
**28.02.2018 Bulletin 2018/09**

(21) Application number: **11839139.0**

(22) Date of filing: **11.11.2011**

(51) Int Cl.:
***G06F 13/38*** (2006.01) ***G06T 1/00*** (2006.01)
***H04N 1/00*** (2006.01) ***H04N 5/378*** (2011.01)

(86) International application number:
**PCT/JP2011/076114**

(87) International publication number:
**WO 2012/063949 (18.05.2012 Gazette 2012/20)**

(54) **IMAGE OUTPUT DEVICE, IMAGE OUTPUT METHOD, IMAGE PROCESSING DEVICE, IMAGE PROCESSING METHOD, PROGRAM, DATA STRUCTURE, AND IMAGING DEVICE**

BILDAUSGABEVORRICHTUNG, BILDAUSGABEVERFAHREN, BILDVERARBEITUNGSVORRICHTUNG, BILDVERARBEITUNGSVERFAHREN, PROGRAMM, DATENSTRUKTUR UND ABBILDUNGSVORRICHTUNG

DISPOSITIF DE PRODUCTION D'IMAGES, PROCÉDÉ DE PRODUCTION D'IMAGES, DISPOSITIF DE TRAITEMENT D'IMAGES, PROCÉDÉ DE TRAITEMENT D'IMAGES, PROGRAMME, STRUCTURE DE DONNÉES ET DISPOSITIF D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2011 JP 2011246759**
**10.11.2011 JP 2011246758**
**12.11.2010 JP 2010254261**

(43) Date of publication of application:
**18.09.2013 Bulletin 2013/38**

(60) Divisional application:
**18150290.7**

(73) Proprietor: **Sony Corporation**
**Tokyo 108-0075 (JP)**

(72) Inventors:
- **SUGIOKA, Tatsuya**
**Tokyo 108-0075 (JP)**
- **SHIROSHITA, Hiroshi**
**Tokyo 108-0075 (JP)**
- **OZAWA, Miho**
**Tokyo 108-0075 (JP)**
- **KIHARA, Hiroki**
**Tokyo 108-0075 (JP)**
- **MARUKO, Kenichi**
**Tokyo 108-0075 (JP)**
- **SHINBASHI, Tatsuo**
**Tokyo 108-0075 (JP)**
- **FUNAMOTO, Kazuhisa**
**Tokyo 108-0075 (JP)**
- **MATSUMOTO, Hideyuki**
**Tokyo 108-0075 (JP)**
- **TOOYAMA, Takayuki**
**Tokyo 108-0075 (JP)**
- **WAKABAYASHI, Hayato**
**Tokyo 108-0075 (JP)**
- **KOSHISAKA, Naohiro**
**Yokohama-shi**
**Kanagawa 240-0005 (JP)**
- **SASAKI, Shigetoshi**
**Yokohama-shi**
**Kanagawa 240-0005 (JP)**
- **TAMORI, Masato**
**Yokohama-shi**
**Kanagawa 240-0005 (JP)**

(74) Representative: **D Young & Co LLP**
**120 Holborn**
**London EC1N 2DY (GB)**

(56) References cited:
**EP-A1- 2 187 640**
**WO-A2-2006/113776**
**JP-A- 2 257 782**
**JP-A- 2006 340 228**
**JP-A- 2008 252 739**
**JP-A- 2009 065 399**
**JP-A- 2009 156 992**
**JP-A- 2010 213 011**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present technology relates to an image output device, an image output method, an image processing device, an image processing method, a program, a data structure, and an imaging device, and especially relates to an image output device, an image output method, an image processing device, an image processing method, a program, a data structure, and an imaging device that enable image data to be efficiently transmitted.

BACKGROUND ART

With enhancement of picture quality and increase of a frame rate of an image sensor, a transmission capacity of data demanded for an interface of the image sensor and a digital signal processor (DSP) that processes an image picked up by the image sensor is increasing.
To respond to such a demand, for example, techniques are employed such as improvement of a clock frequency of an interface and reduction of a voltage for a signal. However, the techniques increase the difficulty in generation of a sampling timing at the DSP side, and make it difficult to transmit data correctly.

CITATION LIST

NON-PATENT DOCUMENT

Non-patent Document 1: Serial ATA: High Speed Serialized AT Attachment Revision 1.0a 7-January-2003

SUMMARY OF THE INVENTION

PROBLEMS TO BE SOLVED BY THE INVENTION

Incidentally, as a standard for increasing the transmission capacity between chips, PCI-Express, Serial ATA and the like are available. In PCI-Express or Serial ATA, a high transmission capacity is realized by enhancement of performance of a clock data recovery (CDR) circuit or an equalizer. Further, as an interface between chips for a mobile phone, the Mobile Industry Processor Interface (MIPI) standard is available.
Such standards involve many redundant functions to an interface between an image sensor and a DSP because they are produced as interface standards for more general purposes like an interface between central processing units (CPUs). If such standards are employed for an interface between an image sensor and a DSP, unnecessary functions for the interface between an image sensor and a DSP also need to be implemented. This increases a circuit area, power consumption and a cost for implementation.
Particularly, the influence of implementation of a circuit for a countermeasure against a transmission error is significant. In the standards such as MIPI, a reception-side chip issues a request to re-send data to a transmission-side chip as a countermeasure against a transmission error. However, this increases the circuit area and the like for an image sensor that is a device in which it is normally difficult to use an advanced/fine transistor because it places much value on an imaging characteristic. In the standards such as MIPI, since the reception-side chip issues a request to re-send data to the transmission-side chip, it is necessary to prepare a relatively large buffer in the transmission-side chip as a buffer for re-sending.
Further, if a transmission error is covered by re-sending of the data when the error occurs, the real-time property is damaged. This makes it difficult to transmit image data at a high frame rate.
The present technology has been made in view of the foregoing, and enables image data to be efficiently transmitted.
WO 2006/113776 A2 describes an audiovisual signal routing and distribution system in which an audiovisual signal is converted from a native format to a digital, packetized interchange format and transported between a capture node and a display node through a switch. The display node converts the audiovisual signal from the interchange format to a displayable format and causes display of the audiovisual signal. The use of a switch for video routing and distribution allows one-to-one, one-to-many, many-to-one, and many-to-many distribution. The use of the device-independent interchange format allows concurrent distribution of multiple heterogeneous audiovisual signals.

SOLUTIONS TO PROBLEMS

An image output device according to a first aspect of the present technology includes: an imaging unit; a header generation unit configured to generate a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information; a packet generation unit configured to generate a packet that includes, in a payload, pixel data for one line configuring an image obtained by imaging by the imaging unit, and into which the header is added; and an output unit configured to output the packet generated by the packet generation unit to an image processing device;
wherein the header generation unit is configured to generate the header including a plurality of sets of the header information and the error detection code.

Each of the first frame information, the second frame information, and the first line information may be one-bit information, and the second line information may be 13-bit information.

The image output device may further include an addition unit configured to add a start code indicating a start position of a packet to a head of the packet generated by the packet generation unit, and to add an end code indicating an end position of a packet to a tail end of the packet.

The addition unit may add a padding code to the payload of the packet when a transmission rate of data of a transmission line between the image output device and the image processing device is larger than a transmission rate of the pixel data output by the imaging unit.

The addition unit may add a skew code following the end code, the skew code being used in the image processing device in order to secure synchronization of data of the packet transmitted through a plurality of the transmission lines, and the output unit may output, to the image processing device, data of the packet to which at least the start code, the end code, and the skew code are added using a plurality of the transmission lines simultaneously.

Among a plurality of symbols that is known information configured from arrangement of a predetermined number of bits, the addition unit may generate the start code and the end code by combining four of three kinds of the symbols, and add the start code and the end code to the packet, generate the padding code by combining four of four kinds of the symbols, and add the padding code to the payload of the packet, and generate the skew code by combining two of the predetermined symbols, and add the skew code to the packet.

The addition unit may generate the start code, the end code, and the skew code so as to include at least one of the same kind of the symbols.

The image output device may further include a distribution unit configured to allocate data of the packet generated by the packet generation unit to a plurality of the transmission lines. In this case, corresponding to a plurality of the transmission lines, the same number of the addition units and the output units as the number of the transmission lines may be provided.

The imaging unit may output a plurality of pixel data as data of pixels at the same position, and the header generation unit may generate the header further including identification information of pixel data included in a payload.

The imaging unit may output a plurality of pixel data obtained by performing A/D conversion using different gains, a plurality of pixel data obtained by performing A/D conversion with different resolutions, a plurality of pixel data obtained by performing exposures in different shutter speeds, a plurality of pixel data obtained by a pixel having a vertical spectroscopic arrangement, or when pixels at a same position are made of a plurality of pixels having different sensitivities, a plurality of pixel data obtained from the respective pixels.

The header generation unit may generate the header further including identification information of an area in the imaging unit where pixel data included in a payload is obtained.

An image output method according to the first aspect of the present technology includes the steps of imaging; generating a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information; generating a packet that includes, in a payload, pixel data for one line configuring an image obtained by imaging, and into which the header is added; and outputting the generated packet to an image processing device;
wherein during said step of generating a header, the header is generated so as to include a plurality of sets of the header information and the error detection code.

A program according to the first aspect of the present technology causes a computer to execute processing including the steps of: imaging; generating a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information; generating a packet that includes, in a payload, pixel data for one line configuring an image obtained by imaging, and into which the header is added; and outputting the generated packet to an image processing device;
wherein during said step of generating a header, the header is generated so as to include a plurality of sets of the header information and the error detection code.

A data structure according of one embodiment of the present technology is a data structure of transmission data used for transmission of data including pixel data for one line configuring an image obtained by imaging, the data structure including: a start code added to a head of a packet, and indicating a start position of the packet; the packet having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information added to a payload including pixel data for one line configuring an image obtained by imaging; an end code added to a tail end of the packet, and indicating an end position of the packet; and a skew code added following the end code, and used in an image processing device that has received data of the packet in order to secure synchronization of the data of the packet.

An image processing device according to a second aspect of the present technology includes: a reception unit configured to receive a packet generated in an image output device provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit of the image output device and the header including a plurality of sets of the header information and the error detection code; and an image processing unit configured to process the image configured from a line made of the pixel data included in the payload of the packet received by the reception unit.

A plurality of sets of the header information and the error detection code may be included in the header, and the image processing device may further include: an error detection unit configured to detect, with respect to each of the sets, an error of the header information based on the error detection code that configures the same set as the header information; and a generation unit configured to generate the image of one frame made of the pixel data included in the payload based on the header information from which an error has not been detected by the error detection unit. In this case, the image processing unit may process the image generated by the generation unit.

A start code indicating a start position of the packet may be added to a head of the packet, and an end code indicating an end position of the packet may be added to a tail end of the packet, and the reception unit may receive data from when the start code is received to when the end code is received as data of the packet.

The image processing device may further include a removal unit configured to remove the start code and the end code, and to remove a padding code added to the payload of the packet in the image output device when a transmission rate of a transmission line between the image output device and the image processing device is larger than a transmission rate of pixel data of the image output by the imaging unit of the image output device.

In the image output device, a skew code may be added following the end code, and data of the packet to which at least the start code, the end code, and the skew code are added may be simultaneously output using a plurality of the transmission lines, and a correction unit configured to correct a gap of receiving timing of data received by the reception unit based on the skew code may be further included. In this case, corresponding to a plurality of the transmission lines, the same number of the reception units, the correction units, and the removal units as the number of the transmission lines may be provided.

In the image output device, among a plurality of symbols that is known information configured from arrangement of a predetermined number of bits, the start code and the end code may be generated by combining four of three kinds of the symbols, and added to the packet, the padding code may be generated by combining four of four kinds of the symbols, and added to the payload of the packet, and the skew code may be generated by combining two of the predetermined symbols, and added to the packet.

In the image output device, the start code, the end code, and the skew code may be generated so as to include at least one of the same kind of the symbols.

The reception unit may receive the packet to which the header including identification information of pixel data included in a payload is added; and the image processing unit may generate the image by synthesizing the pixel data included in a payload to which the header including the same identification information is added.

The reception unit may receive the header including identification information of an area in the imaging unit where pixel data included in a payload is obtained, and the image processing unit may generate the image by synthesizing the pixel data included in a payload to which the header including the same identification information is added.

An image processing method according to an embodiment of the present technology includes the steps of: receiving a packet generated in an image output device provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit of the image output device and the header including a plurality of sets of the header information and the error detection code; and processing the image configured from a line made of the pixel data included in the payload of the received packet.

A program according to an embodiment of the present technology causes a computer to execute processing including the steps of: receiving a packet generated in an image output device provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit of the image output device and the header including a plurality of sets of the header information and the error detection code; and processing the image configured from a line made of the pixel data included in the payload of the received packet.

An imaging device according to an embodiment of the present technology includes an image output device and an image processing device, the image output device including: an imaging unit; a header generation unit configured to generate a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information; a packet generation unit configured to generate a packet that includes, in a payload, pixel data for one line configuring an image obtained by imaging by the imaging unit, and into which the header is added; and an output unit configured to output the packet generated by the packet generation unit to the image processing device, and the image processing device including: a reception unit configured to receive the packet; and an image processing unit configured to process the image configured from a line made of the pixel data included in the payload of the packet received by the reception unit.

According to the first aspect of the present technology, a header is generated, the header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information. Further, a packet that includes, in a payload, pixel data for one line configuring an image obtained by imaging by the imaging unit, and into which the header is added is generated, and the generated packet is output to an image processing device.

According to the second aspect of the present technology, a packet is received, the packet being generated in an image output device provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit of the image output device, and the image configured from a line made of the pixel data included in the payload of the received packet is processed.

According to an embodiment of the present technology, an image output device generates a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information. Also, a packet that includes, in a payload, pixel data for one line configuring an image obtained by imaging, and into which the header is added is generated, and the generated packet is output to an image processing device. Further, the packet is received and the image configured from a line made of the pixel data included in the payload of the received packet is processed by the image processing device.

EFFECTS OF THE INVENTION

According to the present technology, image data can be efficiently transmitted.

BRIEF DESCRIPTION OF DRAWINGS

Fig. 1 is a diagram illustrating a first configuration example of a transmission system.
Fig. 2 is a diagram illustrating a second configuration example of the transmission system.
Fig. 3 is a diagram illustrating a third configuration example of the transmission system.
Fig. 4 is a diagram illustrating an example of a frame format.
Fig. 5 is a diagram illustrating a configuration example of a transmission unit and a reception unit.
Fig. 6 is a diagram illustrating a header structure.
Fig. 7 is a diagram illustrating a content and an amount of information of header information.
Fig. 8 is a diagram illustrating an example of a bit array.
Fig. 9 is a diagram illustrating an example of Pixel to Byte conversion when a pixel value of each pixel is expressed in 8 bits.
Fig. 10 is a diagram illustrating an example of the Pixel to Byte conversion when a pixel value of each pixel is expressed in 10 bits.
Fig. 11 is a diagram illustrating an example of the Pixel to Byte conversion when a pixel value of each pixel is expressed in 12 bits.
Fig. 12 is a diagram illustrating an example of the Pixel to Byte conversion when a pixel value of each pixel is expressed in 14 bits.
Fig. 13 is a diagram illustrating an example of the Pixel to Byte conversion when a pixel value of each pixel is expressed in 16 bits.
Fig. 14 is a diagram illustrating an example of payload data.
Fig. 15 is a diagram illustrating another example of the payload data.
Fig. 16 is a diagram illustrating an example of payload data into which a parity is inserted.
Fig. 17 is a diagram illustrating a status in which a header is added to payload data.
Fig. 18 is a diagram illustrating a status in which a header and a footer are added to payload data.
Fig. 19 is a diagram illustrating a status in which a header is added to payload data into which a parity is inserted.
Fig. 20 is a diagram illustrating an example of allocation of packet data.
Fig. 21 is a diagram illustrating an example of a control code.
Fig. 22 is a diagram illustrating a value of K Character.
Fig. 23 is a diagram illustrating an example of insertion of Pad Code.
Fig. 24 is a diagram illustrating an example of packet data after insertion of a control code.
Fig. 25 is a diagram illustrating an example of correction of Data Skew.
Fig. 26 is a flowchart describing processing of an imaging device.
Fig. 27 is a flowchart describing data transmission processing performed in step S2 of Fig. 26.
Fig. 28 is a flowchart describing data reception processing performed in step S3 of Fig. 26.
Fig. 29 is a diagram illustrating a control sequence when the number of lanes is switched.
Fig. 30 is a diagram illustrating another example of a frame format.
Fig. 31 is a diagram enlarging and illustrating one packet of the frame format of Fig. 30.
Fig. 32 is a diagram illustrating a content of header information.
Fig. 33 is a diagram illustrating a configuration example of an imaging unit.
Fig. 34 is a diagram illustrating an example of a meaning of a value of Data ID.
Fig. 35 is a flowchart describing processing of the imaging device.
Fig. 36 is a diagram illustrating another configuration example of the imaging unit.
Fig. 37 is a diagram illustrating an example of a meaning of a value of Data ID.
Fig. 38 is a diagram illustrating another configuration example of the imaging unit.

Fig. 39 is a diagram illustrating an example of an output timing of each photo sensor.
Fig. 40 is a diagram illustrating an example of a meaning of a value of Data ID.
Fig. 41 is a diagram illustrating an example of pixels that configure a pixel array portion.
Fig. 42 is a diagram illustrating an example of DATA1 and DATA2 when an exposure time is changed.
Fig. 43 is a diagram illustrating a configuration example of an image sensor.
Fig. 44 is a diagram illustrating an example of a meaning of a value of Region Number.
Fig. 45 is a diagram illustrating an example of a packet.
Fig. 46 is a diagram illustrating an example of use of Line Number.
Fig. 47 is a diagram illustrating a first configuration example of a transmission system using a general-purpose I/F.
Fig. 48 is a diagram illustrating a second configuration example of the transmission system using a general-purpose I/F.
Fig. 49 is a diagram illustrating a third configuration example of the transmission system using a general-purpose I/F.
Fig. 50 is a diagram illustrating an example of a data structure of a packet.
Fig. 51 is a diagram illustrating a configuration example of a transmission-side LSI and a reception-side LSI.
Fig. 52 is a diagram illustrating an example of Byte Packing.
Fig. 53 is a diagram illustrating another example of the Byte Packing.
Fig. 54 is a diagram illustrating a sequence of Byte Packing processing.
Fig. 55 is a diagram illustrating an example of insertion of a parity.
Fig. 56 is a flowchart describing an operation of a transmission system.
Fig. 57 is a flowchart describing data transmission processing performed in step S102 of Fig. 56.
Fig. 58 is a flowchart describing data reception processing performed in step S103 of Fig. 56.
Fig. 59 is a diagram illustrating a configuration example of a transmission unit.
Fig. 60 is a diagram illustrating a configuration example of a reception unit.
Fig. 61 is a block diagram illustrating a configuration example of hardware of a computer.

## MODE FOR CARRYING OUT THE INVENTION

Hereinafter, an embodiment for implementing the present technology will be described. Description will be given in the following order.

1. First Embodiment (an example of transmitting pixel data)
2. Second Embodiment (an example of transmitting not only pixel data but also predetermined data)

### <1. First Embodiment (an example of transmitting pixel data) >

[A configuration example of a transmission system]

Fig. 1 is a diagram illustrating a first configuration example of a transmission system according to an embodiment of the present technology.

A transmission system 1 of Fig. 1 is configured from an image sensor 11 and a DSP 12. The image sensor 11 and the DSP 12 are respectively configured from different large scale integrated circuits (LSI), and are provided in the same imaging device having an imaging function such as a digital camera and a mobile phone. The image sensor 11 is provided with an imaging unit 21 and a transmission unit 22, and the DSP 12 is provided with a reception unit 31 and an image processing unit 32.

The imaging unit 21 of the image sensor 11 is made of an imaging device such as a complementary metal oxide semiconductor (CMOS), and performs photoelectric conversion of light received via a lens. Further, the imaging unit 21 performs A/D conversion of a signal obtained by the photoelectric conversion and the like, and outputs pixel data that configures an image of one frame to the transmission unit 22 one pixel data at a time in sequence.

The transmission unit 22 allocates the data of each pixel supplied from the imaging unit 21 to a plurality of transmission lines, for example, in the order supplied from the imaging unit 21, and transmits the data to the DSP 12 via the plurality of transmission lines in parallel. In the example of Fig. 1, transmission of the pixel data is performed using eight transmission lines. The transmission line between the image sensor 11 and the DSP 12 may be a wired transmission line or may be a wireless transmission line. Hereinafter, the transmission line between the image sensor 11 and the DSP 12 will be referred to as a lane (Lane), if appropriate.

The reception unit 31 of the DSP 12 receives the pixel data transmitted from the transmission unit 22 via the eight lanes, and outputs the data of each pixel to the image processing unit 32 in sequence.

The image processing unit 32 generates an image of one frame based on the pixel data supplied from the reception unit 31, and performs various types of image processing using the generated image. The image data transmitted from the image sensor 11 to the DSP 12 is raw data, and in the image processing unit 32, various types of processing such as compression of image data, display of an image, recording of image data to a recording medium are performed.

Fig. 2 is a diagram illustrating a second configuration example of the transmission system 1. Among configurations illustrated in Fig. 2, configurations equivalent to the configurations illustrated in Fig. 1 will be denoted with the same reference signs. Overlapped description is omitted where appropriate.

The image sensor 11 of the transmission system 1 of Fig. 2 is provided with the imaging unit 21 and transmission units 22-1 and 22-2 that are two transmission units, and the DSP 12 is provided with reception units 31-1 and 31-2 that are two reception units and the image processing unit 32.

The imaging unit 21 outputs, to the transmission units 22-1 and 22-2, pixel data that configures an image of one frame obtained by imaging in parallel one pixel data at a time. For example, the imaging unit 21 outputs odd-line pixel data to the transmission unit 22-1, and outputs even-line pixel data to the transmission unit 22-2.

The transmission unit 22-1 allocates the data of each pixel supplied from the imaging unit 21 to the plurality of lanes, for example, in the order supplied from the imaging unit 21, and transmits the data to the DSP 12 in parallel via the plurality of lanes. Similarly, the transmission unit 22-2 allocates the data of each pixel supplied from the imaging unit 21 to the plurality of lanes, for example, in the order supplied from the imaging unit 21, and transmits the data to the DSP 12 in parallel via the plurality of lanes.

In the example of Fig. 2, the image sensor 11 and the DSP 12 are also coupled via eight lanes. The transmission units 22-1 and 22-2 respectively use four lanes to transmit the pixel data.

The reception unit 31-1 of the DSP 12 receives the pixel data transmitted from the transmission unit 22-1 via the four lanes, and outputs the data of each pixel to the image processing unit 32 in sequence. Similarly, the reception unit 31-2 receives the pixel data transmitted from the transmission unit 22-2 via the four lanes, and outputs the data of each pixel to the image processing unit 32 in sequence.

The image processing unit 32 generates an image of one frame based on the pixel data supplied from the reception unit 31-1 and from the reception unit 31-2, and performs various types of image processing using the generated image.

As illustrated in Fig. 2, the image sensor 11 is provided with two transmission units and the DSP 12 is provided with two reception units corresponding to the transmission units, so that, even if a transmission rate of the pixel data output from the imaging unit 21 is high, the pixel data can be transmitted to the DSP 12.

Fig. 3 is a diagram illustrating a third configuration example of the transmission system 1. Among configurations illustrated in Fig. 3, configurations equivalent to the configurations illustrated in Fig. 1 will be denoted with the same reference signs. Overlapped description is omitted where appropriate.

The transmission system 1 of Fig. 3 is provided with two image sensors: an image sensor 11-1 and an image sensor 11-2. The image sensor 11-1 is provide with an imaging unit 21-1 and the transmission unit 22-1 that is one transmission unit, and the image sensor 11-2 is provided with an imaging unit 21-2 and the transmission unit 22-2 that is one transmission unit. The DSP 12 is, similar to Fig. 2, provided with the reception units 31-1 and 31-2 that are two reception units, and the image processing unit 32.

The imaging unit 21-1 of the image sensor 11-1 outputs, to the transmission unit 22-1, pixel data that configures an image of one frame obtained by imaging one pixel data at a time in sequence.

The transmission unit 22-1 allocates the data of each pixel supplied from the imaging unit 21-1 to the plurality of lanes in sequence in the order supplied from the imaging unit 21-1 for example, and transmits the data to the DSP 12 in parallel via the plurality of lanes.

The imaging unit 21-2 of the image sensor 11-2 outputs, to the transmission unit 22-2, pixel data that configures an image of one frame obtained by imaging one pixel data at a time in sequence.

The transmission unit 22-2 allocates the data of each pixel supplied from the imaging unit 21-2 to the plurality of lanes in sequence in the order supplied from the imaging unit 21-2, for example, and transmits the data to the DSP 12 in parallel via the plurality of lanes.

In the example of Fig. 3, the image sensor and the DSP 12 are also coupled via eight lanes. Four lanes are respectively allocated to the image sensors 11-1 and 11-2, and the transmission units 22-1 and 22-2 respectively use the four lanes to transmit the pixel data.

The reception unit 31-1 of the DSP 12 receives the pixel data transmitted from the transmission unit 22-1 of the image sensor 11-1 via the four lanes, and outputs the data of each pixel to the image processing unit 32 in sequence. Similarly, the reception unit 31-2 receives the pixel data transmitted from the transmission unit 22-2 of the image sensor 11-2 via the four lanes, and outputs the data of each pixel to the image processing unit 32 in sequence.

The image processing unit 32 generates an image of one frame based on the pixel data supplied from the reception unit 31-1, and generates an image of one frame based on the pixel data supplied from the reception unit 31-2. The image processing unit 32 performs various types of image processing using the generated images.

As illustrated in Fig. 3, by providing the two image sensors, a 3D image made of an image for a left eye imaged by the image sensor 11-1 and an image for a right eye imaged by the image sensor 11-2 can be processed by one DSP 12, for example. There is a parallax between the images for a left eye and for a right eye.

As described above, the image sensor of the transmission system 1 is provided with one or a plurality of transmission units that transmits an imaged image of one frame data. Meanwhile, the DSP is provided with one or a plurality of reception units that receives the data transmitted from the image sensor, corresponding to the transmission units of the image sensor.

Hereinafter, data transmission in the transmission system 1 of Fig. 1 in which the image sensor 11 is provided with one transmission unit and the DSP 12 is provided with one reception unit will be described. Data transmission is performed in a similar manner between the transmission unit 22-1 and the reception unit 31-1, and between the transmission unit 22-2 and the reception unit 31-2 of Figs. 2 and 3.

[Frame format]

Fig. 4 is a diagram illustrating an example of a format used for transmitting image data of one frame between the image sensor 11 and the DSP 12.

An effective pixel area A1 is an area of effective pixels of an image of one frame imaged by the imaging unit 21. At a left side of the effective pixel area A1, a margin area A2 is set, which has the same pixel number in the vertical direction as the effective pixel area A1 in the vertical direction.

At an upper side of the effective pixel area A1, a front dummy area A3 is set, which has the same pixel number in the horizontal direction as the effective pixel area A1 and the margin area A2 as a whole in the horizontal direction. In the example of Fig. 4, Embedded Data is inserted into the front dummy area A3. Embedded Data includes information of set values related to imaging by the imaging unit 21 such as a shutter speed, an iris value, and a gain. Embedded Data may be inserted into a rear dummy area A4.

At a lower side of the effective pixel area A1, the rear dummy area A4 is set, which has the same pixel number in the horizontal direction as the effective pixel area A1 and the margin area A2 as a whole in the horizontal direction.

The effective pixel area A1, the margin area A2, the front dummy area A3, and the rear dummy area A4 configure an image data area A11.

A header is added before each line that configures the image data area A11, and Start Code is added to a front of the header. Further, a footer is optionally added after each line that configures the image data area A11, and a control code such as End Code described below is added after the footer. In a case where a footer is not added, a control code such as End Code is added after each line that configures the image data area A11.

Data of the format illustrated in Fig. 4 as a whole is transmitted as transmission data every time an image of one frame imaged by the imaging unit 21 is transmitted from the image sensor 11 to the DSP 12.

A band at an upper side in Fig. 4 illustrates a packet structure used for transmission of the transmission data illustrated at the lower side. Where a sequence of pixels in the horizontal direction is represented as a line, data of pixels that configures one line of the image data area A11 is stored in a payload of the packet. The transmission of image data of one frame as a whole is performed using packets of the number larger than the pixel number of the image data area A11 in the vertical direction.

One packet is configured by a header and a footer being added to a payload in which pixel data for one line is stored. As described below in detail, the header includes additional information of the pixel data stored in the payload such as Frame Start, Frame End, Line Valid, Line Number, and ECC. Start Code and End Code that are control codes are at least added to each packet.

As described above, by employing a format with which pixel data that configures an image of one frame is transmitted for each line, additional information such as a header, and a control code such as Start Code and End Code can be transmitted for each line during a blanking period.

[A configuration of a transmission unit 22 and a reception unit 31]

Fig. 5 is a diagram illustrating a configuration example of the transmission unit 22 and the reception unit 31.

The configuration marked with a dashed line at a left side in Fig. 5 illustrates a configuration of the transmission unit 22, and the configuration marked with a dashed line at a right side illustrates a configuration of the reception unit 31. The transmission unit 22 and the reception unit 31 are respectively made of a link layer configuration and a physical layer configuration. The configuration illustrated upper than the solid line L2 is the link layer configuration, and the configuration lower than the solid line L2 is the physical layer configuration.

Note that the configuration illustrated above the solid line L1 is a configuration of an application layer. A system control unit 51, a frame data input unit 52, and a register 53 are realized in the imaging unit 21. The system control unit 51 communicates with a LINK-TX protocol management unit 61 of the transmission unit 22, and controls transmission of image data by providing information related to a frame format, and the like. The frame data input unit 52 performs imaging in response to an instruction by a user and the like, and supplies, to a Pixel to Byte conversion unit 62 of the transmission unit 22, data of each pixel that configures an image obtained by the imaging. The register 53 stores information of the bit number of the Pixel to Byte conversion, the number of Lanes, and the like. Transmission processing is performed according to the information stored in the register 53.

Further, a frame data output unit 141, a register 142, and a system control unit 143 from among the application layer configuration are realized in the image processing unit 32. The frame data output unit 141 generates and outputs an image of one frame based on pixel data of each line supplied from the reception unit 31. Various types of processing are performed using the image output from the frame data output unit 141. The register 142 stores various types of set values related to reception of image data such as the bit number of the Byte to Pixel conversion and the number of Lanes. Reception processing of image data is performed according to the information stored in the register 142. The system control unit 143 communicates with a LINK-RX protocol management unit 121, and controls a sequence such as a mode change.

[A configuration of a link layer of a transmission unit 22]

First, a link layer configuration of the transmission unit 22 will be described.

The transmission unit 22 is provided with, as the link layer configuration, the LINK-TX protocol management unit 61, the Pixel to Byte conversion unit 62, a payload ECC insertion unit 63, a packet generation unit 64, and a lane distribution unit 65. The LINK-TX protocol management unit 61 is configured from a state control unit 71, a header generation unit 72, a data insertion unit 73, and a footer generation unit 74.

The state control unit 71 of the LINK-TX protocol management unit 61 controls a state of the link layer of the transmission unit 22.

The header generation unit 72 generates a header to be added to a payload in which pixel data for one line is stored, and outputs the header to the packet generation unit 64.

Fig. 6 is a diagram illustrating a configuration of the header generated by the header generation unit 72.

As described above, one packet as a whole is configured from a header and payload data that is pixel data for one line. A footer may be added to the packet. The header is configured from header information and Header ECC.

The header information includes Frame Start, Frame End, Line Valid, Line Number, and Reserved. A content of the information and an amount of the information are illustrated in Fig. 7.

Frame Start is one-bit information indicating a head of a frame. A value of "1" is set to Frame Start of a header of a packet used for transmission of first-line pixel data of the image data area A11 of Fig. 4, and a value of "0" is set to Frame Start of a header of a packet used for transmission of other-line pixel data.

Frame End is one-bit information indicating a terminal end of a frame. A value of "1" is set to Frame End of a header of a packet that includes pixel data of a terminal end line of the effective pixel area A1 in a payload, and a value of "0" is set to Frame End of a header of a packet used for transmission of other line pixel data.

Frame Start and Frame End serve as frame information related to a frame.

Line Valid is one-bit information that indicates whether a line of pixel data stored in a payload is a line of effective pixels. A value of "1" is set to Line Valid of a header of a packet used for transmission of pixel data of a line in the effective pixel area A1, and a value of "0" is set to Line Valid of a header of a packet used for transmission of other line.

Line Number is 13-bit information that indicates a line number configured from pixel data stored in a payload.

Line Valid and Line Number serve as line information related to a line.

Reserved is a 32-bit area for extensibility. An amount of data of the header information as a whole is 6 bytes.

As illustrated in Fig. 6, a cyclic redundancy check (CRC) code, which is a 2-byte error detection code calculated based on the 6-byte header information, is included in Header ECC arranged following the header information. Further, two pieces of information, which are the same as 8-byte information that is a set of the header information and the CRC code, are included in Header ECC following the CRC code.

That is, three sets of the same header information and CRC code are included in a header of one packet. An amount of data of the header as whole is 24 bytes as a total of the first 8-byte set of the header information and the CRC code, the second 8-byte set of the header information and the CRC code, and the third 8-byte set of the header information and the CRC code.

Fig. 8 is a diagram illustrating an example of an 8-byte bit array that configures a set of the header information and the CRC code.

A byte H7, which is the first one byte among the 8 bytes that configure a header, includes, in order from the first bit, each one bit of Frame Start, Frame End, Line Valid, and the first to fifth bits from among 13 bits of Line Number. Further, a byte H6, which is the second one byte, includes the sixth to thirteenth bits from among the 13 bits of Line Number.

Bytes from a byte H5 that is the third one byte to a byte H2 that is the sixth one byte serve as Reserved. A byte H1 that is the seventh one bit and a byte H0 that is the eighth one byte include each bit of a CRC code.

Referring back to the description of Fig. 5, the header generation unit 72 generates the header information according to control by the system control unit 51. For example, the system control unit 51 supplies formation that indicates a line number of pixel data output from the frame data input unit 52 and information that indicates the head and the terminal end of a frame.

Further, the header generation unit 72 calculates a CRC code by applying the header information to a generator polynominal. The generator polynominal of a CRC code to be added to the header information is, for example, expressed in the following formula (1):

[Formula 1]

$$CRC16 = X^{16} + X^{15} + X^{2} + 1 \quad \cdots (1)$$

The header generation unit 72 generates a set of the header information and the CRC code by adding a CRC code to the header information, and generates a header by repeatedly arranging three sets of the same header information and CRC code. The header generation unit 72 outputs the generated header to the packet generation unit 64.

The data insertion unit 73 generates data used for stuffing, and outputs the data to the Pixel to Byte conversion unit 62 and the lane distribution unit 65. Payload stuffing data that is stuffing data supplied to the Pixel to Byte conversion unit 62 is added to pixel data after Pixel to Byte conversion, and is used for adjustment of the data amount of the pixel data to be stored in a payload. Meanwhile, lane stuffing data that is the stuffing data supplied to the lane distribution unit 65 is added to data after lane allocation, and used for adjustment of the data amount among the lanes.

The footer generation unit 74 appropriately applies payload data to a generator polynominal in accordance with the control by the system control unit 51 to calculate a CRC code of 32 bits, and outputs the CRC code obtained by calculation to the packet generation unit 64 as a footer. The generator polynominal of a CRC code to be added to the footer is, for example, expressed in the following formula (2):

[Formula 2]

$$CRC32 = X^{32} + X^{31} + X^{4} + X^{3} + X + 1 \quad \cdots (2)$$

The Pixel to Byte conversion unit 62 acquires pixel data supplied from the frame data input unit 52, and carries out Pixel to Byte conversion wherein data of each pixel is converted into data of a unit of one byte. For example, a pixel value (RGB) of each pixel of an image imaged by the imaging unit 21 is represented by any one of the bit numbers: 8 bits, 10 bits, 12 bits, 14 bits and 16 bits.

Fig. 9 is a diagram illustrating an example of Pixel to Byte conversion in a case where a pixel value of each pixel is represented by 8 bits.

Data[0] represents LSB , and Data[7] having the largest figure represents MSB. As indicated by a solid-white arrow mark, the eight bits of Data[0] to Data[7] that represents a pixel value of a pixel N is converted into Byte N made of Data[0] to Data[7]. In the case where the pixel value of each pixel is represented by 8 bits, the number of data in bytes after the Pixel to Byte conversion is equal to the number of pixels.

Fig. 10 is a diagram illustrating an example of the Pixel to Byte conversion in a case where the pixel value of each pixel is represented by 10 bits.

In this case, 10 bits of Data[0] to Data[9] that represent a pixel value of a pixel N are converted into Byte 1.25*N including Data[2] to Data[9].

Similarly, with respect to pixels N+1 to N+3, 10 bits of Data[0] to Data[9] that represent pixel values of the same are converted into Byte 1.25*N+1 to Byte 1.25*N+3 including Data[2] to Data[9], respectively. Further, Data[0] and Data[1] which are lower order bits of the pixels N to N+3 are collected and converted into Byte 1.25*N+4. In a case where the pixel value of each pixel is represented by 10 bits, the number of data in bytes after the Pixel to Byte conversion is 1.25 times the number of pixels.

Fig. 11 is a diagram illustrating an example of the Pixel to Byte conversion in a case where the pixel value of each pixel is represented by 12 bits.

In this case, 12 bits of Data[0] to Data[11] that represent the pixel value of the pixel N are converted into Byte 1.5*N made of Data[4] to Data[11].

Similarly, with respect to the pixel N+1, 12 bits of Data[0] to Data[11] that represents a pixel value of the pixel N+1 are converted into Byte 1.5*N+1 made of Data[4] to Data[11]. Further, Data[0] to Data[3] which are the lower order bits of the pixel N and the pixel N+1 are collected, and converted into Byte 1.5*N+2. In a case where the pixel value of each pixel is represented by 12 bits, the number of data of in bytes after the Pixel to Byte conversion is 1.5 times the number of pixels.

Fig. 12 is a diagram illustrating an example of the Pixel to Byte conversion in a case where the pixel value of each pixel is represented by 14 bits.

In this case, 14 bits of Data[0] to Data[13] that represent a pixel value of the pixel N are converted into Byte 1.75*N including Data[6] to Data[13].

Similarly, with respect to pixels N+1 to N+3, 14 bits of Data[0] to Data[13] that represent pixel values of the same are converted into Byte 1.75*N+1 to Byte 1.75*N+3 including Data[6] to Data[13], respectively. Further, the remaining bits from among the pixels N to N+3 are collected from the lower order bits, and, for example, Data[0] to Data[5] that are bits of the pixel N, and Data[0] and Data[1] that are bits of the pixel N+1 are converted into Byte 1.75*N+4.

Similarly, Data[2] to Data[5] that are bits of the pixel N+1, and Data[0] to Data[3] that are bits of the pixel N+2 are converted into Byte 1.75*N+5, and Data[4] and Data[5] that are bits of the pixel N+2, and Data[0] to Data[5] that are bits of the pixel N+3 are converted into Byte 1.75*N+6. In a case where the pixel value of each pixel is represented by 14 bits, the number of data in bytes after the Pixel to Byte conversion is 1.75 times the number of pixels.

Fig. 13 is a diagram illustrating an example of the Pixel to Byte conversion in a case where the pixel value of each pixel is represented by 16 bits.

In this case, 16 bits of Data[0] to Data[15] that represent the pixel value of the pixel N are converted into Byte 2*N made of Data [0] to Data [7] and into Byte 2*N+1 made of Data[8] to Data[15]. In the case where the pixel value of each pixel is represented by 16 bits, the number of data in bytes after the Pixel to Byte conversion is two times the number of pixels.

The Pixel to Byte conversion unit 62 in Fig. 5 carries out the Pixel to Byte conversion as described above for each pixel in order from the pixel at the left end of a line. Further, the Pixel to Byte conversion unit 62 adds payload stuffing data supplied from the data insertion unit 73 to the pixel data in bytes obtained by the Pixel to Byte conversion to generate payload data, and outputs the payload data to the payload ECC insertion unit 63.

Fig. 14 is a diagram illustrating an example of payload data.

Fig. 14 illustrates payload data including pixel data obtained by the Pixel to Byte conversion in the case where the pixel value of each pixel is represented by 10 bits. One block to which no color is applied represents pixel data in bytes after the Pixel to Byte conversion. Meanwhile, one block to which a color is applied represents payload stuffing data generated by the data insertion unit 73.

The pixel data after the Pixel to Byte conversion are grouped into a predetermined number of groups in order obtained by the conversion. In the example of Fig. 14, the pixel data are grouped into 16 groups of group 0 to group 15, and pixel data including MSB of a pixel P0 is allocated to the group 0, and pixel data including MSB of a pixel P1 is allocated to the group 1. Further, pixel data including MSB of a pixel P2 is allocated to the group 2, pixel data including MSB of a pixel P3 is allocated to the group 3, and pixel data including LSB of the pixels P0 to P3 is allocated to the group 4.

Also, pixel data including MSB of a pixel P4 and subsequent pixel data are allocated to the group 5 and subsequent groups in turn. When a certain pixel data is allocated to the group 15, the subsequent pixel data are allocated to the group 0 and subsequent groups in turn. Note that, from among blocks that represent pixel data, the blocks having three dashed lines therein represent pixel data in bytes generated so as to include LSB of the pixels N to N+3 at the time of the Pixel to Byte Conversion.

In the link layer of the transmission unit 22, after grouping is carried out in such manner, processing is carried out for pixel data positioned at the same position in each group in parallel for each period defined by a clock signal. That is, in the case where pixel data are allocated to 16 groups as illustrated in Fig. 14, the processing of pixel data is carried out such that 16 pixel data arranged in each line are processed within the same period.

As described above, a payload of one packet includes pixel data of one line. The pixel data as a whole illustrated in Fig. 14 is pixel data that configures one line. While description of the processing of pixel data in the effective pixel area A1 of Fig. 4 has been given, pixel data in the other areas such as the margin area A2 are processed together with the pixel data of the effective pixel area A1.

After pixel data for one line are grouped, payload stuffing data is added such that the groups have an equal data length. The payload stuffing data is one-byte data.

In the example of Fig. 14, the payload stuffing data is not added to the pixel data of the group 0, but is added one by one to a terminal end of the pixel data of the groups 1 to 15 as marked with a dashed line. The data length (Byte) of payload data made of pixel data and stuffing data is expressed in the following formula (3):

[Formula 3]

$$PayloadLength = LineLength \times \frac{BitPix}{8} + PayloadStuffing \quad \cdots (3)$$

LineLength of the formula (3) represents the pixel number of a line, and BitPix represents a bit number that represents a pixel value of one pixel. PayloadStuffing represents the number of payload stuffing data.

In the case where pixel data are to be allocated to 16 groups as illustrated in Fig. 14, the number of payload stuffing data is expressed in the following formula (4):
[Formula 4]

$$PayloadStuffing = 16 - \left( \left( LineLength \times \frac{BitPix}{8} \right) \% 16 \right) \quad \cdots (4)$$

where % represents the remainder.
Fig. 15 is a diagram illustrating another example of payload data.
Fig. 15 illustrates payload data obtained by Pixel to Byte conversion in the case where the pixel value of each pixel is represented by 12 bits.
In the example of Fig. 15, pixel data including MSB of the pixel P0 are allocated to the group 0, pixel data including MSB of the pixel P1 are allocated to the group 1, and pixel data including LSB of the pixel P0 and the pixel P1 are allocated to the group 2. Also, pixel data including MSB of the pixel P2 and subsequent pixel data are allocated to the group 3 and subsequent groups in turn. From among the blocks that represent pixel data, the blocks having one dashed line therein represent pixel data in bytes generated so as to include LSB of the pixel N and the pixel N+1 at the time of the Pixel to Byte conversion.
In the example of Fig. 15, the payload stuffing data is not added to the pixel data of the group 0 and the group 1, and the payload stuffing data is applied one by one to the terminal end of the pixel data of the groups 2 to 15.
Payload data having such a configuration is supplied from the Pixel to Byte conversion unit 62 to the payload ECC insertion unit 63.
The payload ECC insertion unit 63 calculates an error correction code to be used for error correction of payload data based on the payload data supplied from the Pixel to Byte conversion unit 62, and inserts a parity that is the error correction code obtained by the calculation into the payload data. As the error correction code, a Reed-Solomon code is used, for example. Note that the insertion of an error correction code is optional, and for example, only one of insertion of a parity by the payload ECC insertion unit 63 and addition of a footer by the footer generation unit 74 is permitted.
Fig. 16 is a diagram illustrates an example of payload data into which a parity is inserted.
The payload data illustrated in Fig. 16 are payload data including pixel data obtained by the Pixel to Byte conversion in the case where the pixel value of each pixel is represented by 12 bits as described with reference to Fig. 15. A block indicated with slant lines represents a parity.
In the example of Fig. 16, 14 pixel data are selected in order from a head pixel data of each of the groups 0 to 15, and a parity of 2 bytes is obtained based on selected 224 pixel data (224 bytes). The parity of 2 bytes is inserted as the fifteenth data of the groups 0 and 1 following the 224 pixel data used for the calculation, so that first Basic Block is formed from the 224 pixel data and the parity of 2 bytes.
In this manner, the payload ECC insertion unit 63 basically generates a parity of 2 bytes based on 224 pixel data, and inserts the parity of 2 bytes following the 224 pixel data.
Further, in the example of Fig. 16, 224 pixel data following the first Basic Block are selected in order from the groups, and a parity of 2 bytes is obtained based on the selected 224 pixel data. The parity of 2 bytes is inserted as the 29th data of the groups 2 and 3 following the 224 pixel data used for the calculation, and a second Basic Block is formed from the 224 pixel data and the parity of 2 bytes.
In a case where 16 x M that is the number of pixel data and payload stuffing data following a certain Basic Block is less than 224, a parity of 2 bytes is obtained based on the remaining 16 x M blocks (pixel data and payload stuffing data). Further, the obtained parity of 2 bytes is inserted following the payload stuffing data, and Extra Block is formed from the 16 M blocks and the parity of 2 bytes.
The payload ECC insertion unit 63 outputs the payload data, into which the parities are inserted, to the packet generation unit 64. If insertion of a parity is not carried out, payload data supplied from the Pixel to Byte conversion unit 62 to the payload ECC insertion unit 63 is output to the packet generation unit 64 as it is.
The packet generation unit 64 generates a packet by adding a header generated by the header generation unit 72 to the payload data supplied from the payload ECC insertion unit 63. In a case where a footer is generated by the footer generation unit 74, the packet generation unit 64 also adds the footer to the payload data.
Fig. 17 is a diagram illustrating a state in which a header is added to payload data.
24 blocks illustrated with characters H0 to H23 indicate header information or header data in bytes that is a CRC code of the header information. As described with reference to Fig. 6, a header of one packet includes three sets of the header information and the CRC code.

For example, header data H0 to H5 are header information (6 bytes) of the first set, and header data H6 and H7 are a CRC code of 2 bytes of the first set. Header data H8 to H13 are header information of the second set, and header data H14 and H15 are a CRC code of the second set. Header data H16 to H21 are header information of the third set, and header data H22 and H23 are a CRC code of the third set.
In the example of Fig. 17, the header data H0 to H7 are added to respective payload data of the groups 8 to 15. Further, the header data H8 to H23 are added to respective payload data of the groups 0 to 15.
Fig. 18 is a diagram illustrating a state in which a header and a footer are added to payload data.
Four blocks illustrated with characters F0 to F3 represent foot data that is a CRC code of 4 bytes generated as a footer. In the example of Fig. 18, the footer data F0 to F3 are added to respective payload data of the groups 0 to 3.
Fig. 19 is a diagram illustrating a state in which a header is added to payload data in which a parity is inserted.
In the example of Fig. 19, the header data H0 to H23 are added to the payload data of Fig. 16, in which a parity is inserted, similar to the cases of Figs. 17 and 18
The packet generation unit 64 outputs packet data, which is data configuring one packet generated in this manner, to the lane distribution unit 65. To the lane distribution unit 65, packet data configured from header data and payload data, packet data configured from header data, payload data and footer data, or packet data configured from header data and payload data in which a parity is inserted, are supplied. A packet structure of Fig. 6 is a theoretical structure, and in the link layer and the physical layer, data of a packet having the structure of Fig. 6 is processed in bytes.
The lane distribution unit 65 allocates, in order from the head data, packet data supplied from the packet generation unit 64 to lanes which are to be used for data transmission from among the Lane0 to Lane7.
Fig. 20 is a diagram illustrating an example of allocation of packet data.
Here, allocation of the packet data configured from header data, payload data and footer data (Fig. 18) will be described. An example of allocation of packet data in a case where data transmission is carried out using the eight lanes of Lane0 to Lane7 is illustrated at the end of a solid-white arrow mark #1.
In this case, the header data H0 to H23 are allocated to the Lane0 to Lane7 in order from the head header data. If certain header data is allocated to Lane7, subsequent header data are allocated to Lane0 and subsequent lanes in turn. Three header data are allocated to each of Lane0 to Lane7.
Meanwhile, payload data are allocated to Lane0 to Lane7 in order from the head payload data. If certain payload data are allocated to Lane7, subsequent payload data are allocated to Lane0 and subsequent lanes in turn.
Footer data F0 to F3 are allocated to the lanes Lane0 to Lane7 in order from the head payload data. In the example of Fig. 20, the last payload stuffing data that configures the payload data is allocated to Lane7, and the footer data F0 to F3 are allocated to Lane0 to Lane3 one by one.
A block illustrated in black represents lane stuffing data generated by the data insertion unit 73. The lane stuffing data is allocated to lanes having a smaller number of data so that the data lengths allocated to the lanes may be equal to each other. The lane stuffing data is data of one byte. In the example of Fig. 20, one lane stuffing data is allocated to each of Lane4 to Lane7 having a smaller allocation number of data.
The number of lane stuffing data in the case where packet data is configured from header data, payload data and footer data is expressed in the following formula (5) :
[Formula 5]

$$\mathrm{LaneStuffing} = \mathrm{LaneNum} - ((\mathrm{PayloadLength} + \mathrm{FooterLength}) \% \mathrm{LaneNum}) \quad \cdots (5)$$

LaneNum in the formula (5) represents the number of lanes, PayloadLength represents the payload data length (bytes), and FooterLength represents the footer length (bytes).
In the case where packet data is made of header data and payload data in which a parity is inserted, the number of lane stuffing data is expressed in the following formula (6):
[Formula 6]

$$\mathrm{LaneStuffing} = \mathrm{LaneNum} - ((\mathrm{PayloadLength} + \mathrm{ParityLength}) \% \mathrm{LaneNum}) \quad \cdots (6)$$

where ParityLength represents the total byte number of parity included in a payload.
An example of allocation of packet data in a case where the six lanes Lane0 to Lane5 are used to carry out data transmission is illustrated at the end of a solid-white arrow mark #2.

In this case, the header data H0 to H23 are allocated to the lanes Lane0 to Lane5 in order from the head header data. If certain header data is allocated to Lane5, subsequent header data are allocated to Lane0 and subsequent lanes in turn. Four header data are allocated to each of Lane0 to Lane5.

Further, the payload data are allocated to the lanes Lane0 to Lane5 in order from the head payload data in turn. If certain payload data are allocated to Lane5, subsequent payload data are allocated to Lane0 and subsequent lanes in turn.

The footer data F0 to F3 are allocated to the lanes in order from the head footer data. In the example of Fig. 20, the last payload stuffing data that configures payload data is allocated to Lane1, and the footer data F0 to F3 are allocated to Lane2 to Lane5 one by one. Since the numbers of packet data of Lane0 to Lane5 are equal to each other, no lane stuffing data is used in this case.

An example of allocation of packet data in the case where data transmission is carried out using the four lanes of Lane0 to Lane3 is illustrated at the end of a solid-white arrow mark #3.

In this case, the header data H0 to H23 are allocated to the lanes Lane0 to Lane3 in order from the head header data. If certain header data is allocated to Lane3, subsequent header data are allocated to Lane0 and subsequent lanes in turn. Six header data are allocated to each of Lane0 to Lane3.

Further, the payload data are allocated to Lane0 to Lane3 in order from the head payload data. If certain payload data are allocated to Lane3, subsequent payload data are allocated to Lane0 and subsequent lanes.

The footer data F0 to F3 are allocated to lanes in order from the head footer data. In the example of Fig. 20, the last payload stuffing data that configures payload data is allocated to Lane3, and the footer data F0 to F3 are allocated to Lane0 to Lane3 one by one. Since the numbers of packet data of Lane0 to Lane3 are equal to each other, no lane stuffing data is used in this case.

The lane distribution unit 65 outputs packet data allocated to the lanes in this manner to the physical layer. In the following, description will be mainly given, where data is transmitted using the eight lanes Lane0 to Lane7. However, similar processing is carried out in a case where other number of lanes is used for data transmission.

[A configuration of a physical layer of a transmission unit 22]

Now, a configuration of the physical layer of the transmission unit 22 will be described.

The transmission unit 22 is provided with, as a configuration of the physical layer, a PHY-TX state control unit 81, a clock generation unit 82, and signal processing units 83-0 to 83-N. The signal processing unit 83-0 is configured from a control code insertion unit 91, an 8B10B symbol encoder 92, a synchronization unit 93, and a transmission unit 94. Packet data output from the lane distribution unit 65 and allocated to Lane0 is input to the signal processing unit 83-0, and packet data allocated to Lane1 is input to the signal processing unit 83-1. Also, packet data allocated to LaneN is input to the signal processing unit 83-N.

In this manner, the physical layer of the transmission unit 22 is provided with the same number of the signal processing units 83-0 to 83-N as the number of lanes, and processing of packet data to be transmitted using the lanes is carried out in parallel by the signal processing units 83-0 to 83-N. Although the configuration of the signal processing unit 83-0 will be described, the signal processing units 83-1 to 83-N have a similar configuration.

The PHY-TX state control unit 81 controls each part of the signal processing units 83-0 to 83-N. For example, the PHY-TX state control unit 81 controls timings of processing carried out by the signal processing units 83-0 to 83-N.

The clock generation unit 82 generates a clock signal, and outputs the clock signal to the respective synchronization units 93 of the signal processing units 83-0 to 83-N.

The control code insertion unit 91 of the signal processing unit 83-0 adds a control code to packet data supplied from the lane distribution unit 65. The control code is a code represented by a single symbol selected from a plurality of different symbols prepared in advance or by a combination of a plurality of different symbols. Each symbol inserted by the control code insertion unit 91 is data of 8 bits. One symbol inserted by the control code insertion unit 91 is subjected to 8B10B conversion in a circuit at a later state, so that the symbol is converted into data of 10 bits. Meanwhile, the reception unit 31 carries out 10B8B conversion for reception data as described below. Each symbol before the 10B8B conversion included in the reception data is 10-bit data, and each symbol after the 10B8B conversion becomes 8-bit data.

Fig. 21 is a diagram illustrating an example of control codes to be added by the control code insertion unit 91.

The control codes include Idle Code, Start Code, End Code, Pad Code, Sync Code, Deskew Code and Standby Code.

Idle Code is a symbol group repeatedly transmitted within a period other than a period of transmission of packet data. Idle Code is represented by D00.0 (00000000) of D Character that is 8B10B Code.

Start Code is a symbol group that represents a start of a packet. As described above, Start Code is added before a packet. Start Code is represented by four symbols of K28.5, K27.7, K28.2 and K27.7 that are combinations of three kinds of K Character. Values of K Character are indicated in Fig. 22.

End Code is a symbol group that represents an end of a packet. As described above, End Code is added after a packet. End Code is represented by four symbols of K28.5, K29.7, K30.7 and K29.7 that are combinations of three kinds of K Character.

Pad Code is a symbol group that is inserted into payload data in order to fill up the difference between a pixel data band and a PHY transmission band. The pixel data band is a transmission rate of pixel data output from the imaging unit 21 and input to the transmission unit 22, and the PHY transmission band is a transmission rate of pixel data transmitted from the transmission unit 22 and input to the reception unit 31. Pad Code is represented by four symbols of K23.7, K28.4, K28.6 and K28.7 that are combinations of four kinds of K Character.

Fig. 23 is a diagram illustrating an example of insertion of Pad Code.

The upper part of Fig. 23 illustrates payload data allocated to each lane before insertion of Pad Code, and the lower part illustrates the payload data after the insertion of Pad Code. In the example of Fig. 23, Pad Code is inserted between the third pixel data and the fourth pixel data from the head pixel data, between the sixth pixel data and the seventh pixel data, and between the twelfth pixel data and the thirteenth pixel data. In this manner, Pad Code is inserted to the same position of payloads of Lane0 to Lane7.

Insertion of Pad Code to the payload data allocated to Lane0 is carried out by the control code insertion unit 91 of the signal processing unit 83-0. Similarly, insertion of Pad Code into the payload data allocated to other lanes is respectively carried out at the same timing by the signal processing units 83-1 to 83-N. The number of Pad Codes is determined based on the difference between the pixel data band and the PHY transmission band, the frequency of the clock signal generated by the clock generation unit 82, and the like.

In this manner, Pad Code is inserted to adjust the difference between the bands in a case where the pixel data band is narrow and the PHY transmission band is wide. For example, the difference between the pixel data band and the PHY transmission band is adjusted to fall within a given range by the insertion of Pad Code.

Referring back to Fig. 21, Sync Code is used to secure bit synchronization and symbol synchronization between the transmission unit 22 and the reception unit 31. Sync Code is represented by two symbols of K28.5 and Any**. Any** means any kind of symbol may be used. Sync Code is transmitted repeatedly, for example, in a training mode before transmission of packet data is started between the transmission unit 22 and the reception unit 31.

Deskew Code is a symbol group used for correction of Data Skew between lanes, that is, for correction of gap in reception timing of data received by the lanes of the reception unit 31. Deskew Code is represented by two symbols of K28.5 and Any**. Correction of Data Skew between lanes using Deskew Code is described below.

Standby Code is a symbol group used for notifying the reception unit 31 that an output of the transmission unit 22 enters a state such as a High-Z (high impedance) and data transmission is disabled. That is, Standby Code is transmitted to the reception unit 31 when transmission of packet data is terminated and enters a standby state. Standby Code is represented by 2 symbols of K28.5 and Any**.

The control code insertion unit 91 outputs packet data to which such control codes are added to the 8B10B symbol encoder 92.

Fig. 24 is a diagram illustrating an example of packet data after insertion of control codes.

As illustrated in Fig. 24, in the signal processing units 83-0 to 83-N, Start Code is added before packet data, and Pad Code is inserted to the payload data. End Code is added after the packet data, and Deskew Code is added after End Code. In the example of Fig. 24, Idle Code is added after Deskew Code.

The 8B10B symbol encoder 92 carries out 8B10B conversion for the packet data supplied from the control code insertion unit 91 (to which the control codes are added), and outputs packet data, which has been converted into data of a unit of 10 bits, to the synchronization unit 93.

The synchronization unit 93 outputs bits of the packet data supplied from the 8B10B symbol encoder 92 to the transmission unit 94 in accordance with a clock signal generated by the clock generation unit 82.

The transmission unit 94 transmits the packet data supplied from the synchronization unit 93 to the reception unit 31 through the transmission line that configures Lane0. In the case where data transmission is carried out using eight lanes, the transmission lines that configure Lane1 to Lane7 are used to transmit the packet data to the reception unit 31.

[A configuration of a physical layer of a reception unit 31]

Next, a configuration of the physical layer of the reception unit 31 will be described.

The reception unit 31 is provided with, as a configuration of the physical layer, a PHY-RX state control unit 101, and signal processing units 102-0 to 102-N. The signal processing unit 102-0 is configured from a reception unit 111, a clock generation unit 112, a synchronization unit 113, a symbol synchronization unit 114, a 10B8B symbol decoder 115, a skew correction unit 116, and a control code removal unit 117. The packet data transmitted through the transmission line that configures Lane0 is input to the signal processing unit 102-0, and the packet data transmitted through the transmission line that configures Lane1 is input to the signal processing unit 102-1. Also, the packet data transmitted through the transmission line that configures LaneN is input to the signal processing unit 102-N.

In this manner, the physical layer of the reception unit 31 is provided with the same number of the signal processing units 102-0 to 102-N as the number of lanes, and processing of packet data transmitted using the lanes is carried out in parallel by the signal processing units 102-0 to 102-N. Although description of the configuration of the signal processing unit 102-0 will be given, the signal processing units 102-1 to 102-N have a similar configuration.

The reception unit 111 receives a signal that indicates the packet data transmitted from the transmission unit 22 through the transmission line that configures Lane0, and outputs the signal to the clock generation unit 112.

The clock generation unit 112 detects an edge of the signal supplied from the reception unit 111 to establish bit synchronization, and generates a clock signal based on a detection period of the edge. The clock generation unit 112 outputs the signal supplied from the reception unit 111 to the synchronization unit 113 along with the clock signal.

The synchronization unit 113 carries out sampling of the signal received by the reception unit 111 in accordance with the clock signal generated by the clock generation unit 112, and outputs packet data obtained by the sampling to the symbol synchronization unit 114. The clock generation unit 112 and the synchronization unit 113 realize a function of clock data recovery (CDR).

The symbol synchronization unit 114 detects a control code included in the packet data or detects some symbol included in the control code to establish symbol synchronization. For example, the symbol synchronization unit 114 detects a symbol of K28.5 included in Start Code, End Code or Deskew Code to establish bit synchronization. The symbol synchronization unit 114 outputs packet data in a unit of 10 bits that indicates each symbol to the 10B8B symbol decoder 115.

Further, the symbol synchronization unit 114 detects, in a training mode before transmission of packet data is started, a boundary between symbols included in Sync Code repeatedly transmitted from the transmission unit 22 to establish symbol synchronization.

The 10B8B symbol decoder 115 carries out 10B8B conversion for the packet data in a unit of 10 bits supplied from the symbol synchronization unit 114, and outputs packet data converted into data of a unit of 8 bits to the skew correction unit 116.

The skew correction unit 116 detects Deskew Code from the packet data supplied from the 10B8B symbol decoder 115. Information of a detection timing of Deskew Code by the skew correction unit 116 is supplied to the PHY-RX state control unit 101.

Further, the skew correction unit 116 corrects Data Skew between the lanes such that the timing of Deskew Code is adjusted to a timing indicated by the information supplied from the PHY-RX state control unit 101. From the PHY-RX state control unit 101, information that indicates the latest timing from among timings of Deskew Code detected by the signal processing units 102-0 to 102-N is supplied.

Fig. 25 is a diagram illustrating an example of correction of Data Skew between lanes using Deskew Code.

In the example of Fig. 25, transmission of Sync Code, Sync Code, ..., Idle Code, Deskew Code, Idle Code, ..., Idle Code, and Deskew Code is carried out through each of Lane0 to Lane7, and the control codes are received by the reception unit 31. The reception timings of the same control code are different among the lanes, and Data Skew is caused between the lanes.

In this case, the skew correction unit 116 detects Deskew Code C1 that is the first Deskew Code, and corrects the timing of the head of Deskew Code C1 to be adjusted to time t1 indicated by the information supplied from the PHY-RX state control unit 101. From the PHY-RX state control unit 101, information of the time t1 is supplied, at which Deskew Code C1 is detected in Lane7 that is the latest timing among the timings at which Deskew Code C1 is detected in Lane0 to Lane7.

Further, the skew correction unit 116 detects Deskew Code C2 that is the second Deskew Code, and corrects the timing of the head of Deskew Code C2 to be adjusted to time t2 indicated by the information supplied from the PHY-RX state control unit 101. From the PHY-RX state control unit 101, information of the time t2 is supplied, at which Deskew Code C2 is detected in Lane7 that is the latest timing among timings at which Deskew Code C2 is detected in Lane0 to Lane7.

The signal processing units 102-1 to 102-N respectively carry out similar processing to correct Data Skew between the lanes, so that Data Skew between the lanes is corrected as illustrated in the end of the arrow mark #1 in Fig. 25.

The skew correction unit 116 outputs packet data, Data Skew of which has been corrected, to the control code removal unit 117.

The control code removal unit 117 removes the control codes added to the packet data, and outputs data from Start Code to End Code to the link layer as packet data.

The PHY-RX state control unit 101 controls each part of the signal processing units 102-0 to 102-N to carry out correction of Data Skew between lanes and the like. Further, if a transmission error occurs in a predetermined lane and a control code is lost, the PHY-RX state control unit 101 adds a control code transmitted through other lane in place of the lost control code to carry out error correction of the control code.

[A configuration of a link layer of a reception unit 31]

Next, a configuration of the link layer of the reception unit 31 will be described.

The reception unit 31 is provide with, as a configuration of the link layer, a LINK-RX protocol management unit 121, a lane integration unit 122, a packet separation unit 123, a payload error correction unit 124, and a Byte to Pixel conversion unit 125. The LINK-RX protocol management unit 121 is configured from a state control unit 131, a header error correction unit 132, a data removal unit 133, and a footer error detection unit 134.

The lane integration unit 122 integrates the packet data by re-arranging the packet data supplied from the signal processing units 102-0 to 102-N of the physical layer in a reverse order from the distribution order of the packet data to the lanes by the lane distribution unit 65 of the transmission unit 22.

For example, if distribution of packet data by the lane distribution unit 65 is carried out in such a manner as illustrated at the end of the arrow mark #1 of Fig. 20, the packet data at the left side in Fig. 20 is acquired by the integration of the packet data of the lanes. At the time of the integration of the packet data of the lanes, lane stuffing data is removed by the lane integration unit 122 according to control by the data removal unit 133. The lane integration unit 122 outputs the integrated packet data to the packet separation unit 123.

The packet separation unit 123 separates the packet data for one packet integrated by the lane integration unit 122 into packet data that configures header data and packet data that configures payload data. The packet separation unit 123 outputs the header data to the header error correction unit 132, and outputs the payload data to the payload error correction unit 124.

Further, if the packet includes a footer, the packet separation unit 123 separates the data for one packet into packet data that configures the header data, packet data that configures the payload data, and packet data that configures footer data. The packet separation unit 123 outputs the header data to the header error correction unit 132, and outputs the payload data to the payload error correction unit 124. Also, the packet separation unit 123 outputs the footer data to the footer error detection unit 134.

If the payload data supplied from the packet separation unit 123 include a parity inserted therein, the payload error correction unit 124 detects an error of the payload data by carrying out error correction arithmetic operation based on the parity, and carries out correction of the detected error. For example, if a parity is inserted in such a manner as illustrated in Fig. 16, the payload error correction unit 124 carries out, by using two parities inserted at the end of the first Basic Block, error correction of 224 pixel data before the parities.

The payload error correction unit 124 outputs, to the Byte to Pixel conversion unit 125, pixel data after error correction obtained by carrying out error correction of Basic Block and Extra Block. If no parity is inserted in the payload data supplied from the packet separation unit 123, the payload data supplied from the packet separation unit 123 are output to the Byte to Pixel conversion unit 125 as it is.

The Byte to Pixel conversion unit 125 removes payload stuffing data included in the payload data supplied from the payload error correction unit 124 according to control by the data removal unit 133.

Further, the Byte to Pixel conversion unit 125 carries out Byte to Pixel conversion of data of pixels in bytes obtained by the removal of payload stuffing data into pixel data of a unit of 8 bits, 10 bit, 12 bits, 14 bits and 16 bits. The Byte to Pixel conversion unit 125 carries out reverse conversion to the Pixel to Byte conversion by the Pixel to Byte conversion unit 62 of the transmission unit 22 described with reference to Figs. 9 to 13.

The Byte to Pixel conversion unit 125 outputs, to the frame data output unit 141, the pixel data of a unit of 8 bits, 10 bits, 12 bits, 14 bits and 16 bits obtained by the Byte to Pixel conversion. The frame data output unit 141 generates, based on the pixel data obtained by the Byte to Pixel conversion unit 125, lines of effective pixels identified by Line Valid of the header information, for example, and generates an image of one frame by arranging the lines according to Line Number of the header information.

The state control unit 131 of the LINK-RX protocol management unit 121 manages the state of the link layer of the reception unit 31.

The header error correction unit 132 acquires three sets of header information and a CRC code based on header data supplied from the packet separation unit 123. The header error correction unit 132 carries out, with respect to each of the sets of header information of a CRC code, error detection arithmetic operation for detecting an error of the header information using the CRC code in the same set as the header information.

Further, the header error correction unit 132 estimates correct header information based on at least one of an error correction result of header information of each set and a comparison result of data obtained by the error detection arithmetic operation, and outputs the header information that has been estimated to be correct and a decoding result. The data obtained by the error detection arithmetic operation is a value obtained by applying a generator polynominal of a CRC to the header information. Also, the decoding result is information indicating a success or a failure in decoding.

The three sets of header information and a CRC code are referred to as set 1, set 2 and set 3. In this case, the header error correction unit 132 acquires, by the error detection arithmetic operation for the set 1, information regarding whether the header information of the set 1 includes an error (an error detection result), and data 1 that is data obtained by the error detection arithmetic operation. Further, the header error correction unit 132 acquires, by the error detection arithmetic operation for the set 2, information regarding whether the header information of the set 2 includes an error, and data 2 that is data obtained by the error detection arithmetic operation. Furthermore, the header error correction unit 132 acquires, by the error detection arithmetic operation for the set 3, information regarding whether the header information of the set 3 includes an error, and data 3 that is data obtained by the error detection arithmetic operation.

Further, the header error correction unit 132 determines whether the data 1 and the data 2 accord with each other, whether the data 2 and the data 3 accord with each other, and whether the data 3 and the data 1 accord with each other.

For example, in a case where no error is detected by any of the error detection arithmetic operations for the set 1, set 2 and set 3, and all comparison results of the data obtained by the error detection arithmetic operations accord with each other, the header error correction unit 132 selects information that indicates a success in decoding as the decoding result. Further, the header error correction unit 132 estimates that all of the header information are correct, and selects one of the header information of the set 1, the set 2, and the set 3 as output information.

Meanwhile, if an error is not detected only by the error detection arithmetic operation for the set 1, the header error correction unit 132 selects information that indicates a success in decoding as the decoding result, estimate that the header information of the set 1 is correct, and selects the header information of the set 1 as the output information.

Also, if an error is not detected only by the error detection arithmetic operation for the set 2, the header error correction unit 132 selects information that indicates a success in decoding as the decoding result, estimates that the header information of the set 2 is correct, and selects the header information of the set 2 as the output information.

If an error is not detected only by the error detection arithmetic operation for the set 3, the header error correction unit 132 selects information that indicates a success in decoding as a decoding result, estimates that the header information of the set 3 is correct, and selects the header information of the set 3 as the output information.

The header error correction unit 132 outputs the decoding result and the output information selected as described above to the register 142, and allows the register 142 to store them. In this manner, the error correction of header information by the header error correction unit 132 is carried out by detecting error-free header information using a CRC code and outputting the detected header information.

The data removal unit 133 controls the lane integration unit 122 to remove lane stuffing data, and controls the Byte to Pixel conversion unit 125 to remove payload stuffing data.

The footer error detection unit 134 acquires a CRC code stored in the footer based on the footer data supplied from the packet separation unit 123. The footer error detection unit 134 carries out error detection arithmetic operation using the acquired CRC code to detect an error of the payload data. The footer error detection unit 134 outputs an error detection result, and allows the register 142 to store the result.

[An operation of an image sensor 11 and a DSP 12]

Next, a series of processing of the transmission unit 22 and the reception unit 31 having a configuration like the above will be described.

First, operation of an imaging device including the transmission system 1 will be described with reference to a flow chart of Fig. 26. The processing of Fig. 26 is started when a start of imaging is instructed by a shutter button provided on the imaging device being pressed and the like.

In step S1, the imaging unit 21 of the image sensor 11 carries out imaging. The frame data input unit 52 of the imaging unit 21 (Fig. 5) outputs pixel data that configure an image of one frame obtained by the imaging by data of one pixel at a time.

In step S2, data transmission processing by the transmission unit 22 is carried out. By the data transmission processing, a packet having pixel data for one line stored in the payload is generated, and packet data that configures the packet is transmitted to the reception unit 31. The data transmission processing will be described below with reference to a flowchart of Fig. 27.

In step S3, data reception processing is carried out by the reception unit 31. By the data reception processing, the packet data transmitted from the transmission unit 22 is received, and the pixel data stored in the payload is output to the image processing unit 32. The data reception processing will be described below with reference to a flow chart of Fig. 28.

The data transmission processing carried out by the transmission unit 22 in step S2 and the data reception processing carried out by the reception unit 31 in step S3 are alternately carried out for pixel data for one line. That is, when certain pixel data of one line is transmitted by the data transmission processing, the data reception processing is carried out, and when the pixel data of one line is received by the data reception processing, the data transmission processing is carried out for pixel data of a next one line. The data transmission processing by the transmission unit 22 and the data reception processing by the reception unit 31 are appropriately carried out in parallel in terms of time. In step S4, the frame data output unit 141 of the image processing unit 32 determines whether transmission/reception of pixel data of all lines that configure an image of one frame has been completed. If it is determined that the transmission/reception has not been completed, step S2 and subsequent processing are repeatedly performed.

When it is determined that the transmission/reception of pixel data of all lines that configure an image of one frame has been completed in step S4, the frame data output unit 141 of the image processing unit 32 generates an image of one frame based on the pixel data supplied from the reception unit 31 in step S5.

In step S6, the image processing unit 32 carries out image processing using the image of one frame, and terminates the processing.

Next, the data transmission processing carried out in step S2 of Fig. 26 will be described with reference to a flow chart of Fig. 27.

In step S11, the header generation unit 72 generates header information including Frame Start, Frame End, Line Valid, Line Number, and Reserved.

In step S12, the header generation unit 72 calculates a CRC code by applying the header information to a generator polynominal.

In step S13, the header generation unit 72 generates a set of the header information and the CRC code by adding the CRC code to the header information, and generates a header by repeatedly arranging three sets of the header information and the CRC code.

In step S14, the Pixel to Byte conversion unit 62 acquires the pixel data supplied from the frame data input unit 52, and carries out Pixel to Byte conversion of the image data. The Pixel to Byte conversion unit 62 outputs payload data generated by carrying out grouping of the image data in bytes obtained by the Pixel to Byte conversion, addition of payload stuffing data, and the like. A parity is inserted to the payload data, if appropriate, by the payload ECC insertion unit 63.

In step S15, the packet generation unit 64 generates a packet based on the payload data including pixel data for one line and the header generated by the header generation unit 72, and outputs packet data that configure the one packet.

In step S16, the lane distribution unit 65 allocates the packet data supplied from the packet generation unit 64 to a plurality of lanes used for data transmission.

In step S17, the control code insertion unit 91 adds control codes to the packet data supplied from the lane distribution unit 65.

In step S18, the 8B10B symbol encoder 92 carries out 8B10B conversion of the packet data to which the control codes are added, and outputs packet data, which has been converted into data of a unit of 10 bits.

In step S19, the synchronization unit 93 outputs the packet data supplied from the 8B10B symbol encoder 92 in accordance with the clock signal generated by the clock generation unit 82, and allows the transmission unit 94 to transmit the packet data. The processing from steps S17 to S19 are carried out in parallel by the signal processing units 83-0 to 83-N. When the transmission of image data for one line is completed, the processing returns to step S2 of Fig. 26, and subsequent processing is carried out.

Next, the data reception processing carried out in step S3 of Fig. 26 will be described with reference to a flow chart of Fig. 28.

In step S31, the reception unit 111 receives a signal that indicates the packet data transmitted from the transmission unit 22. The processing from steps S31 to S36 is carried out in parallel by the signal processing units 102-0 to 102-N.

In step S32, the clock generation unit 112 establishes bit synchronization by detecting an edge of the signal supplied from the reception unit 111. The synchronization unit 113 carries out sampling of the signal received by the reception unit 111, and outputs packet data to the symbol synchronization unit 114.

In step S33, the symbol synchronization unit 114 establishes symbol synchronization by detecting control codes included in the packet data and the like.

In step S34, the 10B8B symbol decoder 115 carries out 10B8B conversion for the packet data after the symbol synchronization, and outputs packet data that has been converted into data of a unit of 8 bits.

In step S35, the skew correction unit 116 detects Deskew Code, and corrects Data Skew between the lanes such that the timing of Deskew Code is adjusted to the timing represented by the information supplied from the PHY-RX state control unit 101.

In step S36, the control code removal unit 117 removes the control codes added to the packet data.

In step S37, the lane integration unit 122 integrates the packet data supplied from the signal processing units 102-0 to 102-N.

In step S38, the packet separation unit 123 separates the packet data integrated by the lane integration unit 122 into packet data that configure the header data and packet data that configure the payload data.

In step S39, the header error correction unit 132 carries out error detection arithmetic operation using the CRC code for each set of header information and a CRC code included in the header data separated by the packet separation unit 123. Further, the header error correction unit 132 selects and outputs header information free from an error based on an error detection result of the sets and a comparison result of the data obtained by the error detection arithmetic operation.

In step S40, the Byte to Pixel conversion unit 125 carries out Byte to Pixel conversion of the payload data, and outputs pixel data of a unit of 8 bits, 10 bits, 12 bits, 14 bits and 16 bits. For the payload data that are to be subjected to the Byte to Pixel conversion, error correction using a parity is carried out by the payload error correction unit 124, if appropriate.

When the processing of pixel data for one line is completed, the processing returns to step S3 of Fig. 26 and subsequent processing is carried out.

As described above, the data transmission between the image sensor 11 and the DSP 12 is carried out using a packet format where one line of one frame corresponds to one packet.

The packet format used for the data transmission between the image sensor 11 and the DSP 12 can be regarded as a format that minimizes transmission of header information and control codes such as Start Code and End code that indicate a packet boundary, and can prevent a decrease in transmission efficiency. If a packet format is employed, in which pixel data to be stored in a payload of one packet is smaller than one line, it is necessary to transmit a greater number of packets in order to transmit full pixel data of one frame as a whole. As the number of header information and control codes to be transmitted increase, the transmission efficiency is deteriorated.

Further, it becomes possible to suppress transmission latency by preventing the decrease in the transmission efficiency, whereby an interface having high resolution/high frame rate capable of transmitting a large amount of image data at a high speed can be realized.

By employing the packet format that is designed on the assumption that the reliability/redundancy of transmission is raised and error correction is carried out at the reception unit 31 side, it becomes possible to secure a countermeasure against a transmission error of header information. Since transmission of synchronism information of Frame/Line (V/H) and the like is carried out using header information, if the header information is lost due to a transmission error, the system may suffer a significant fault. However, such a situation can be prevented.

Further, an increase of the cost for implementation and the power consumption for securing a countermeasure against a transmission error of header information can be suppressed. That is, the packet format used for data transmission between the image sensor 11 and the DSP 12 is capable of detecting whether the header information includes a transmission error by the DSP 12 because a CRC code is added. Further, the DSP 12 can correct the header information to correct information by transmitting three sets of the header information and the CRC code when a transmission error of the header information occurs.

Assume that an error correction code is used as a countermeasure against a transmission error of header information. In this case, it is necessary to prepare a circuit, which carries out calculation of an error correction code, in the transmission unit 22, and to prepare a circuit, which carries out error correction arithmetic operation, in the reception unit 31. Since it is a CRC code as an error detection code that is added to the header information, the circuit scale and the power consumption can be reduced compared with a case where a circuit for carrying out arithmetic operation related to error correction is prepared. Further, when an error of header information is detected, the reception unit 31 does not request the transmission unit 22 to re-send the header information. Therefore, it is not necessary to prepare a transmission line in the reverse direction for the re-sending request.

By raising the redundancy and combining a plurality of K Characters of 8B10B codes to configure a control code, the error probability of the control code can be reduced. Consequently, it becomes possible to secure a countermeasure against a transmission error of a control code with a relatively simple circuit.

To be specific, four symbols of three kinds of K Character are combined and used for Start Code. However, the reception unit 31 can identify Start Code as long as the symbols other than K28.5 can be at least detected. Therefore, it can be considered that the resisting property to a transmission error is high. The same applies to End Code.

Further, four kinds of K Character are combined and used for Pad Code. However, the error resisting property can be increased compared with other control codes by allocating a greater number of kinds of K Character than other control codes. That is, if one kind of the symbols can be detected from among the four kinds, the reception unit 31 can identify Pad Code. Since Pad Code has higher transmission frequency than Start Code and End Code, Pad Code is provided with a structure capable of increasing the error resisting propriety.

Further, even in a case where the same control code is transmitted at the same timing through the lanes, and a transmission error occurs in one of the lanes and the control code is lost, the control code to which the error occurred can be reproduced using the control code of other lanes.

Further, since the number of K Characters is limited, a minimum number of Characters is combined to configure each control code. For example, as for Sync Code, Deskew Code, and Standby Code that can relatively permit a transmission error by repetitive transmission, a data structure is used in which additional allocation of K Character is not necessary.

Since a control code necessary for re-synchronization is allocated to each one packet (one line), re-synchronization can be rapidly established when bit synchronization is lost due to disturbance such as static electricity or noise.

Further, the influence of a transmission error due to the loss of synchronization can be minimized.

To be specific, in the CDR realized by the clock generation unit 112 and the synchronization unit 113, bit synchronization can be established by detecting a transition/edge of bit data after 8B10B conversion.

If the transmission unit 22 continues to send data, the bit synchronization can be established within a period estimated as a CDR lock time.

Further, even in a case where the symbol synchronization is lost, re-synchronization can be rapidly carried out by detecting particular K Character (K28.5) in the symbol synchronization unit 114. Since K28.5 is used in Start Code, End Code and Deskew Code, the symbol synchronization can be established at three points during a transmission period of packet data for one packet.

Further, the synchronization between the lanes can be established by allowing Data Skew between the lanes to be corrected using Deskew Code.

The circuit scale and the memory amount can be suppressed by allowing packet data to be processed in the link layer in parallel in a unit of groups such as 16 groups (in the case of the example of Fig. 14, in a unit of 16 bytes), compared with a case where the packet data is processed one by one in a period of one clock. In terms of implementation, between a case where packet data is processed one by one and a case where the packet data is collective processed in a predetermined number of units, the latter can suppress the circuit scale and the like. Since the circuit scale can be suppressed, the power consumption can be suppressed.

Further, the error resisting property can be enhanced by allocating successive packet data to different lanes in carrying out lane allocation. Even if an error occurs in a certain lane across the number of successive packet data beyond the error correction capacity of a parity, lane coupling is carried out by the reception unit 31, so that positions of packet data to which the error occurs disperse. The error correction using a parity may become possible, accordingly. The error correction capacity by a parity depends upon the parity length.

Further, the circuit scale of the transmission unit 22 and the reception unit 31 can be reduced by carrying out ECC processing at a higher stage than the lane distribution/lane integration where a stage closer to the physical layer is a lower stage. For example, in a case where the transmission unit 22 inserts a parity of an ECC to the payload after allocation of packet data to lanes is carried out, it is necessary to prepare a payload ECC insertion unit for each lane, resulting in an increase in the circuit scale. However, such situation can be prevented.

Although, in the physical layer, parallel processing of packet data is carried out by a plurality of circuits, simplification of the circuit can be achieved by sharing the PHY-TX state control unit 81 and the clock generation unit 82, compared with a case where the circuits of the units 81 and 82 are prepared for each lane. Further, simplification of the circuit that processes packet data of the lanes can be achieved by using a protocol that does not transmit a different control code for each lane.

[Switching of the number of lanes]

Transmitting the same control code at the same timing through the lanes is carried out not only at the time of ordinary data transmission but also at a case where the number of lanes is switched. In the case where the number of lanes is switched, all of active lanes (lanes used for data transmission) are in the same condition.

Fig. 29 is a diagram illustrating a control sequence in the case where the number of lanes is switched.

At the right side in Fig. 29, timings of a vertical synchronizing signal (XVS) and a horizontal synchronizing signal (XHS) are illustrated. A case will be described in which pixel data of lines that configure an image of one frame is transmitted according to the horizontal synchronizing signal during a period until time t1 at which the vertical synchronizing signal is detected, and the number of the active lanes is changed from four lanes to two lanes at the timing of the time t1. Data transmission is carried out using the four lanes until the time t1.

A state of the lanes is illustrated in a lengthwise direction roughly in the center of Fig. 29. "PIX DATA" represents that transmission of pixel data is carried out through a lane to which the characters are applied. "E", "BLK", and "S" following "PIX DATA" represent Frame End, a blanking period, and Frame Start, respectively.

When the transmission of pixel data of a frame during a frame period until the time t1 is completed, the image processing unit 32 instructs the reception unit 31 to switch the number of lanes from 4 to 2 in step S81. The instruction from the image processing unit 32 is received by the reception unit 31 in step S71.

When the time t1 comes, the image processing unit 32 requests a mode change to the imaging unit 21 of the image sensor 11 in step S82. The mode change request transmitted to the imaging unit 21 includes information that indicates the number of lanes is switched from 4 to 2. Although not illustrated in Fig. 1 and the like, a transmission line for transmitting information of a preset value relating to imaging such as a shutter speed and a gain from the image processing unit 32 to the imaging unit 21 is provided between the image processing unit 32 and the imaging unit 21. The mode change request is also transmitted to the imaging unit 21 through this transmission line.

The imaging unit 21 receives the mode change request from the image processing unit 32 in step S51, and instructs the transmission unit 22 to switch the number of lanes from 4 to 2 in step S52. The instruction from the imaging unit 21 is received by the transmission unit 22 in step S61.

Processing of Standby Sequence is carried out between the transmission unit 22 and the reception unit 31, and Standby Code is repeatedly transmitted from the transmission unit 22 to the reception unit 31 using Lane0 to Lane3. When the processing of Standby Sequence is completed, a detection result of a state is output from the reception unit 31 in step S72, and the detection result is received by the image processing unit 32 in step S83. Also, Lane0 and Lane1 that maintain the active state enter a Low state while the lanes Lane2 and Lane3 that terminate the data transmission enter a High-Z state.

Between the transmission unit 22 and the reception unit 31, processing of Training Sequence is carried out, and Sync Code is repeatedly transmitted from the transmission unit 22 to the reception unit 31 using Lane0 and Lane1. In the reception unit 31, bit synchronization is secured, and symbol synchronization is secured by detection of Sync Code.

When the processing of Training Sequence is completed, the reception unit 31 notifies the image processing unit 32 of the completion of preparation in step S73. The notification from the reception unit 31 is received by the image processing unit 32 in step S84, and the series of control sequence in the case of switching the number of lanes is completed.

In this manner, in the control sequence for switching the number of lanes, Standby Code is transmitted in the processing of Standby Sequence in Lane2 and Lane3, which terminate the data transmission, so that Lane2 and Lane3 can be in the same state as Lane0 and Lane1 which are subsequently used for data transmission. For example, there may be an idea in which Lane2 and Lane3 is caused to be in the High-Z state without transmitting Standby Code. However, Lane2 and Lane3 may be in a different state from the lanes that are subsequently used for data transmission, and control becomes complicated.

[Modification of a frame format]

Fig. 30 is a diagram illustrating another example of the frame format used for data transmission between the image sensor 11 and the DSP 12. Description overlapped with the above is omitted where appropriate.

A frame format illustrated in Fig. 30 is different from the format in Fig. 4 in that three data of Embedded Line, Data ID, and Region Number marked with a thick line L11 are added to image data of each line. Information thereof is generated by the header generation unit 72 of Fig. 5, and is added to a header.

Fig. 31 is a diagram enlarging and illustrating one packet of the frame format of Fig. 30. The one packet is configured from a header and payload data that is pixel data for one line. A footer may be added to the packet. Start Code is added to a head of each packet, and End Code is added after each packet.

The header information includes Embedded Line as line information, Data ID as data identification, and Region Number as region information in addition to the above described Frame Start, Frame End, Line Valid, and Line Number. Details of the information are illustrated in Fig. 32.

Embedded Line is one-bit information that indicates whether the packet is a packet used for transmission of a line into which Embedded Data is inserted. For example, a value of "1" is set to Embedded Line of a header of a packet used for transmission of a line that includes Embedded Data, and a value of "0" is set to Embedded Line of a header of a packet used for transmission of other line. As described above, information of the set values related to imaging is inserted to a predetermined line of the front dummy area A3 or the rear dummy area A4 as Embedded Data.

Data ID is P-bit information that indicates a number of pixel data stored in a payload. P bit represents a predetermined number of bits of one bit or more.

Region Number is one-bit information that indicates to which region in the imaging unit 21 pixel data stored in a payload belongs. Usage of Data ID and Region Number will be described below. By addition of these three data, Reserved becomes 30-P bits.

[A configuration example of an imaging unit 21]

Fig. 33 is a diagram illustrating a configuration example of the imaging unit 21. The imaging unit 21 is configured from a control unit 201, a pixel array portion 211, a selection unit 212, an analog digital converter (ADC) 213, and a constant current circuit unit 214.

The control unit 201 controls each unit in the imaging unit 21, and causes the units to execute processing related to reading out of pixel data (a pixel signal) and the like.

The pixel array portion 211 is configured such that pixels having a photoelectric converter such as a photodiode are arrayed in a matrix manner. The pixel array portion 211 performs photoelectric conversion of light from an object in each pixel, and outputs a pixel signal obtained from the photoelectric conversion.

A pixel 221 and a pixel 222 are two pixels adjacent up and down, and configure the pixel array portion 211. The pixel 221 and the pixel 222 are pixels in the same column (line) and in successive rows. The pixel 221 and the pixel 222 are respectively configured from one photoelectric converter and four transistors.

In a typical pixel array, an output line of a pixel signal is provided for each column, while in the pixel array portion 211, two (two sets of) output lines are provided in one column. Pixels of one column are connected to a different output line every other row. For example, pixels that configure odd-numbered rows from top are connected to one output line, and pixels that configure even-numbered rows are connected to the other output line.

In the example of Fig. 33, a circuit that configures the pixel 221 is connected to an output line VSL1 that is a first output line, and a circuit that configures the pixel 222 is connected to an output line VSL2 that is a second output line. Note that, in Fig. 33, an output line only for one column is illustrated. However, in practice, two output lines of the output lines VSL1 and VSL2 are provided to each column.

The selection unit 212 includes a switch for connecting an output line of the pixel array portion 211 to an input of an ADC 213, and controls the connection between the pixel array portion 211 and the ADC 213. A pixel signal read out from the pixel array portion 211 is supplied to the ADC 213 via the selection unit 212.

The selection unit 212 includes a switch 231, a switch 232, and a switch 233. The switch 231 controls connection between two output lines corresponding to the same column. When the switch 231 turns ON state, the output lines VSL1 and VSL2 are connected, and when the switch 231 turns OFF state, the lines are cut off.

Details will be described below, but the imaging unit 21 is provided with ADCs to respective output lines (column ADC). When both the switch 232 and the switch 233 turns the ON state, if the switch 231 turns the ON state, the two output lines in the same column are connected, and one pixel is connected to the two ADCs. On the other hand, when the switch 231 turns the OFF state, the two output lines in the same column are cut off, and a circuit of one pixel is connected to one ADC. That is, the switch 231 selects the number of ADCs that is to be an output destination of a signal of one pixel.

The switch 232 controls the connection between the output line VSL1 corresponding to the pixel 221 and the ADC corresponding to the output line. When the switch 232 turns the ON state, the output line VSL1 is connected to one input of a comparator 241 that is a comparator of the corresponding ADC. Meanwhile, when the switch 232 turns the OFF state, the output line VSL1 and the one input of the comparator 241 are cut off.

The switch 233 controls the connection between the output line VSL2 corresponding to the pixel 222 and the ADC corresponding to the output line. When the switch 233 turns the ON state, the output line VSL2 is connected to one input of a comparator 251 that is a comparator of the corresponding ADC. Meanwhile, when the switch 233 turns the OFF state, the output line VSL2 and the one input of the comparator 251 are cut off.

Note that, in Fig. 33, only a configuration corresponding to the two output lines for one column is illustrated. However, in practice, the selection unit 212 includes, for each column, a configuration (switches 231 to 233) substantially equivalent to the configuration illustrated in Fig. 33. That is, the selection unit 212 performs, for each column, control similar to the above-described connection control according to the control by the control unit 201.

The ADC 213 performs A/D conversion of pixel signals supplied from the pixel array portion 211 via the output lines, respectively, and outputs converted signals to the transmission unit 22 as digital data. The ADC 213 includes a column ADC for each output line from the pixel array portion 211. That is, in the example of Fig. 33, the number of output lines of each column is two, and therefore, the ADC 213 is configured from the number of columns of the entire pixel array portion 211 x two column ADCs. One column ADC is a single-slope type ADC including one comparator, one D/A converter (DAC), and one counter.

The comparator 241 compares an output of a DAC 242 and a signal value of a pixel signal supplied through the output line VSL1. The comparator 241 stops counting by a counter 243 when the output of the DAC 242 reaches the signal value of the pixel signal.

The counter 243 increments a count value (digital value) until the pixel signal and the DAC output becomes equal. The counter 243 outputs a signal obtained by digitization as DATA1. The counter 243 returns the count value to an initial value (for example, 0) for the next A/D conversion after the data output.

The comparator 251 compares an output of a DAC 252 and a signal value of a pixel signal supplied through the output line VSL2. The comparator 251 stops counting by a counter 253 when the output of the DAC 252 reaches the signal value of the pixel signal.

The counter 253 increments a count value (digital value) until the pixel signal and the DAC output becomes equal. The counter 253 outputs a signal obtained by digitization as DATA2. The counter 253 returns the count value to an initial value for the next A/D conversion after the data output.

In this manner, the ADC 213 includes two sets of column ADCs for each column. In the example of Fig. 33, the output line VSL1 is provided with the comparator 241 (COMP1), the DAC 242 (DAC1), and the counter 243 (counter 1), and the output line VSL2 is provided with the comparator 251 (COMP2), the DAC 252 (DAC2), and the counter 253 (counter 2). Although drawing is omitted, the ADC 213 has a similar configuration for output lines of other columns.

Among these configurations, the DACs can be shared. Commonalization of the DACs is conducted in each set. That is, the DACs in the same set of each column are commonalized. In the example of Fig. 33, the DAC corresponding to the output line VSL1 of each column is commonalized as the DAC 242, and the DAC corresponding to the output line VSL2 of each column is commonalized as the DAC 252.

Hereinafter, a column ADC including the comparator 241, the DAC 242, and the counter 243 is referred to as a "column ADC1", and a column ADC including the comparator 251, the DAC 252, and the counter 253 is referred to as a "column ADC2" where appropriate.

The constant current circuit unit 214 is a constant current circuit connected to each output line. The constant current circuit unit 214 is configured from a MOS transistor 261 (LOAD1) for the output line VSL1 and a MOS transistor 262 (LOAD2) for the output line VSL2.

[Reading out of pixel data]

Here, reading out of pixel data by the imaging unit 21 will be described. Reading out of pixel data is performed in a unit of pixels arranged in a row direction (a unit of a line). Description will be given where a line including the pixel 222 is an Nth-row line, and a line including the pixel 221 is an (N+1) th-row line.

First, a case where all the switches 231, 232, and 233 are ON will be described.

In this case, at a timing of reading out the Nth-row line, a pixel signal of the pixel 222 is supplied to the column ADC2 through the switch 233 and the output line VSL2, and is supplied to the column ADC1 through the switch 231, the switch 232, and the output line VSL1. Since the same processing is performed in each pixel that configures the Nth-row line, two data of DATA1 and DATA2 are output from the imaging unit 21 as data of the pixels of the Nth-row line.

In the transmission unit 22 that has received an output from the imaging unit 21, a packet that stores, in a payload, DATA1 that is data of the pixels of the Nth-row line, and a packet that stores, in a payload, DATA2 that is data of the pixels of the same Nth-row line are generated. Further, the packet that stores DATA1 in the payload and the packet that stores DATA2 in the payload are transmitted to the DSP 12 at a predetermined timing.

Also, at a timing of reading out the (N+1) th-row line, a pixel signal of the pixel 221 is supplied to the column ADC1 through the switch 232 and the output line VSL1, and is supplied to the column ADC2 through the switch 231, the switch 233, and the output line VSL2. Since the same processing is performed in each pixel that configures the (N+1) th-row line, two data of DATA1 and DATA2 are output from the imaging unit 21 as data of the pixels of the (N+1) th-row line.

In the transmission unit 22 that has received an output from the imaging unit 21, a packet that stores, in a payload, DATA1 that is data of the pixels of the (N+1) th-row line, and a packet that stores, in a payload, DATA2 that is data of the pixels of the (N+1) th-row line, are generated. Further, the packet that stores DATA1 in the payload and the packet that stores DATA2 in the payload are transmitted to the DSP 12 at a predetermined timing.

A case where the switch 231 is OFF and the switches 232 and 233 are ON will be described. In this case, at a timing of reading out the Nth-row line, a pixel signal of the pixel 222 is supplied to the column ADC2 through the switch 233 and the output line VSL2. Since the same processing is performed in each pixel that configures the Nth-row line, DATA2 as the data of the pixels in the Nth-row line is output from the imaging unit 21.

In the transmission unit 22 that has received an output from the imaging unit 21, a packet that stores, in a payload, DATA2 that is the data of the pixels of the Nth-row line, is generated, and is transmitted to the DSP 12 at a predetermined timing.

Also, at a timing of reading out the (N+1) th-row line, a pixel signal of the pixel 221 is supplied to the column ADC1 via the switch 232 and the output line VSL1. Since the same processing is performed in each pixel that configures the (N+1) th-row line, DATA1 is output from the imaging unit 21 as the data of the pixels of the (N+1) th-row line.

In the transmission unit 22 that has received an output from the imaging unit 21, a packet that stores, in a payload, DATA1 that is the data of the pixels of the (N+1) th-row line, is generated, and is transmitted to the DSP 12 at a predetermined timing. The timing of reading out the Nth-row line and the timing of the (N+1) th-row line may be the same, or may be different.

As described above, in the case where a plurality of ADCs is provided in each column, it is necessary to notify the DSP 12 that pixel data to be stored in a payload of a packet is which one of DATA1 and DATA2. Data ID of Fig, 31 stored in a header is used for notifying the DSP 12 that pixel data stored in a payload is which one of DATA1 and DATA2.

Fig. 34 is a diagram illustrating an example of a meaning of a value of Data ID. For example, when two pixel data of DATA1 and DATA2 can be output from each pixel in the above manner, one bit is allocated to Data ID.

A value of Data ID being "0" means that pixel data of DATA1 of a predetermined one line is included in a payload of a packet that includes Data ID, to which the value 0 is set, in a header. Also, a value of Data ID being "1" means that pixel data of DATA2 of a predetermined one line is included in a payload of a packet that includes Data ID, to which the value 1 is set, in a header.

Here, processing of the imaging device 1 will be described with reference to a flowchart of Fig. 35. The processing of Fig. 35 is basically similar to the processing of Fig. 26 except that the two pixel data of DATA1 and DATA2 are output from the imaging unit 21.

In step S101, the imaging unit 21 of the image sensor 11 performs imaging such that the two pixel data of DATA1 and DATA2 are output as Nth-row data. Pixel data of DATA1 and DATA2 of each line are output from the imaging unit 21 in order from the first row that configures one frame.

In step S102, the transmission unit 22 performs the data transmission processing that has been described with reference to the flowchart of Fig. 27. By the data transmission processing, a packet that stores pixel data for one line in a payload is generated, and packet data that configures the packet is transmitted to the reception unit 31.

In step S103, the reception unit 31 performs the data reception processing that has been described with reference to the flowchart of Fig. 28. By the data reception processing, the packet data transmitted from the transmission unit 22 is received, and the pixel data stored in the payload is output to the image processing unit 32.

In step S104, the frame data output unit 141 of the image processing unit 32 determines whether transmission/reception of pixel data of DATA1 and DATA2 of all lines that configure an image of one frame has been completed. When determining that the transmission/reception of pixel data of DATA1 and DATA2 of all lines has not been completed, the frame data output unit 141 repeatedly performs step S102 and subsequent processing.

When determining that the transmission/reception of pixel data of DATA1 and DATA2 of all lines has been completed in step S104, the frame data output unit 141 of the image processing unit 32 generates an image of one frame based on the pixel data of DATA1 and DATA2 in step S105. The generation of an image of one frame is performed by synthesizing pixel data of DATA1 of each line, or by synthesizing pixel data of DATA2 of each line. Also, either the pixel data of DATA1 or the pixel data of DATA2 is selected for each line, and the selected pixel data are synthesized, so that the image of one frame is generated.

In step S106, the image processing unit 32 performs image processing using the image of one frame, and terminates the processing.

[Example of use of Data ID]

Various types of functions can be realized by acquiring a plurality of data as data of pixels at the same position, and by transmitting identification information of the type of pixel data to the DSP 12 side along with the pixel data.

[Pseudo wide dynamic range function]

Fig. 36 is a diagram illustrating another configuration example of the imaging unit 21. Low-gain pixel data is output from the imaging unit 21 of Fig. 36 as the pixel data of DATA1 of lines, and high-gain pixel data is output as the pixel data of DATA2. That is, different gains are respectively set to the DAC 242 and the DAC 252, and A/D conversion of a pixel signal output from each pixel is performed using the different gains.

For example, in the DSP 12, an image of one frame is generated by selecting DATA1 that is the low-gain pixel data with respect to a pixel in a high-illuminance area, and by selecting DATA2 that is the high-gain pixel data with respect to a pixel in a low-illuminance area. In this manner, even in a case where there is an object having high brightness at the time of low illuminance, blown out highlights can be prevented, and a dynamic range can be extended in a pseudo manner. Information related to illuminance of each area in one frame is detected by an illuminance sensor, for example, and is supplied to the DSP 12.

In a case where the information related to the illuminance of each area in one frame is supplied to the imaging unit 21, data output from the imaging unit 21 may be switched according to the illuminance. For example, the imaging unit 21 outputs DATA1 that is the low-gain pixel data with respect to a pixel in the high-illuminance area, and outputs DATA2 that is the high-gain pixel data with respect to a pixel in the low-illuminance area. In this manner, the time required for the A/D conversion can be shortened compared with a case where DATA1 and DATA2 are generated using two types of gains and output.

Note that, in Fig. 36, drawing of the pixel 222, the selection unit 212 that switches an output destination of a pixel signal, and the like are omitted. However, at the reading out timing of Nth row, a pixel signal of an Nth-row pixel is supplied to two ADCs having different gains.

Fig. 37 is a diagram illustrating an example of a meaning of a value of Data ID when low-gain pixel data and high-gain pixel data are output from the imaging unit 21. One bit is allocated to Data ID.

A value of Data ID being "1" means that pixel data of DATA1, which is low-gain pixel data of a predetermined one line, is included in a payload of a packet that includes Data ID, to which the value 1 is set, in a header. Further, a value of Data ID being "0" means that pixel data of DATA2, which is high-gain pixel data of a predetermined one line, is included in a payload of a packet that includes Data ID, to which the value 0 is set, in a header.

The DSP 12 that has received the pixel data stored in the packet can identify the pixel data of DATA1 and the pixel data of DATA2 from the values of Data ID even if the pixel data are of the same Nth row.

[Multi-slope function]

The resolution of the A/D conversion of the DAC 242 and the DAC 252 may be made different from each other, and the pixel signal output from each pixel may be converted into data having a different bit number. From the imaging unit 21, pixel data having a smaller bit number such as 12 bits is output as the pixel data of DATA1 of the lines, and pixel data having a larger bit number such as 14 bits is output as the pixel data of DATA2.

For example, in the DSP 12, an image of one frame is generated by selecting DATA1 that is pixel data having a smaller bit number with respect to a pixel in a high-illuminance area, and by selecting DATA2 that is pixel data having a large bit number with respect to a pixel in the low-illuminance area. From this, gradation of the low-illuminance area can be enhanced and a shot noise produced on the high-illuminance area can be prevented. When the A/D conversion is performed with respect to a pixel signal in the high-illuminance area, a shot noise may be produced on an obtained image.

In a case where the information related to the illuminance of each area in one frame is supplied to the imaging unit 21, data output from the imaging unit 21 may be switched according to the illuminance. For example, the imaging unit 21 outputs DATA1, which is pixel data having a smaller bit number, with respect to a pixel of a line in the high-illuminance area, and outputs DATA2, which is pixel data having a larger bit number, with respect to a pixel of a line in the low-illuminance area. From this, the time required for the A/D conversion can be shortened compares with a case where DATA1 and DATA2 are generated using two kinds of resolutions and output.

The one-bit Data ID included in a header is used to identify the type of data output from the imaging unit 21 when the resolutions of the DAC 242 and the DAC 252 are different.

For example, a value of Data ID being "1" means that pixel data of DATA1, which is pixel data having a smaller bit number of a predetermined one line, is included in a payload of a packet that includes Data ID, to which a value "1" is set, in the header. Also, a value of Data ID being "0" means that pixel data of DATA2, which is pixel data having a larger bit number of a predetermined one line, is included in a payload of a packet that includes Data ID, to which a value "0" is set, in the header

From this, the DSP 12 that has received the pixel data stored in the packed can identify the pixel data of DATA1 and the pixel data of DATA2 from the values of Data ID even if the pixel data are of the same Nth row.

[Transmission function of pixel data from a vertical spectroscopic imaging device]

Fig. 38 is a diagram illustrating another configuration example of the imaging unit 21. The imaging unit 21 of Fig. 38 is so-called a vertical spectroscopic image sensor. Each pixel that configures the pixel array portion 211 is configured such that each sensor of RGB is layered and arranged in a thickness direction of the pixel (direction into which light enters).

The pixel 221 illustrated in Fig. 38 is provided with a photo sensor B (B pixel), a photo sensor R (R pixel), and a photo sensor G (G pixel). A timing of supplying an output of each photo sensor to the ADC 213 is controlled by the control unit 201.

Fig. 39 is a diagram illustrating an example of the timing of supplying an output of each photo sensor to the ADC 213. In the example of Fig. 39, during a period from time t1 to time t2 of reading out the Nth-row line, an output of the photo sensor G is supplied to the ADC 213, and during a period from time t3 to time t4, an output of the photo sensor R is supplied to the ADC 213. Also, during a period from time t5 to time t6, an output of the photo sensor B is supplied to the ADC 213. Any order may be employed for supplying the outputs of the photo sensors to the ADC 213.

A pixel signal output from the photo sensor G is subjected to A/D conversion by the column ADC1 configured from the comparator 241, the DAC 242, and the counter 243, and data of the G pixel obtained by the A/D conversion is output as DATA1. Also, a pixel signal output from the photo sensor R is subjected to A/D conversion by the column ADC2 configured from the comparator 251, the DAC 252, and the counter 253, and data of the R pixel obtained by the A/D conversion is output as DATA2. A pixel signal output from the photo sensor B is subjected to A/D conversion by a column AD32 configured from a comparator 261, a DAC 262, and a counter 263, and data of the B pixel obtained by the A/D conversion is output as DATA3.

In the transmission unit 22 that has received an output from the imaging unit 21, with respect to the pixels of the Nth-row line, a packet that stores, in a payload, DATA1 that is data of the G pixel, a packet that stores, in a payload, DATA2 that is data of the R pixel, a packet that stores, in a payload, DATA3 that is data of the B pixel are respectively generated. Further, the generated packets are transmitted to the DSP 12 at a predetermined timing.

Data ID included in a header is used to identify that pixel data stored in a payload of each packet is which one of pixels of RGB. In this case, two bits (P = 2) is allocated to Data ID, for example.

Fig. 40 is a diagram illustrating an example of a meaning of a value of Data ID when the imaging unit 21 is a vertical spectroscopic image sensor.

A value of Data ID being "00" means that pixel data of DATA1, which is data of the G pixel of a predetermined one line, is included in a payload of a packet that includes Data ID, to which the value 00 is set, in a header. Also, a value of Data ID being "01" means that pixel data of DATA2, which is data of the R pixel of a predetermined one line, is included in a payload of a packet that includes Data ID, to which the value 01 is set, in a header. A value of Data ID being "10" means that pixel data of DATA3, which is data of the B pixel of a predetermined one line, is included in a payload of a packet that includes Data ID, to which the value 10 is set, in a header.

From this, the DSP 12 that has received the pixel data stored in the packet can identify the respective pixel data of RGB from the values of Data ID even if the pixel data are of the same Nth row.

[Another example of use]

Fig. 41 is a diagram illustrating an example of pixels that configure the pixel array portion 211. Each pixel illustrated in Fig. 41 has a honeycomb structure, and each pixel is configured from the R pixel and the S pixel having different sensitivities and dynamic ranges.

At a timing of reading out of the Nth row, a packet that includes data of the R pixel in a payload, and a packet that includes data of the S pixel in a payload are respectively generated by the transmission unit 22. In Data ID of a header of the packet that includes the data of the R pixel in the payload, a value that indicates that the data included in the payload is data of the R pixel is set. Also, in Data ID of a header of the packet that includes the data of the S pixel in the payload, a value that indicates that the data included in the payload is data of the S pixel is set.

The DSP 12 that has received the pixel data stored in the packet can identify the data of the R pixel and the data of the S pixel from the values of Data ID even if the pixel data are of the same Nth row, and can generates pixel data of each pixel in the honeycomb structure.

Fig. 42 is a diagram illustrating an example of a case where pixel data respectively obtained by different exposure times (shutter speeds) are output as DATA1 and DATA2. The imaging unit 21 is configured such that two data of DATA1 and DATA2 illustrated in Fig. 33 can be output from each pixel.

For example, DATA1 is pixel data obtained where the shutter speed is 30 fps, and DATA2 is pixel data obtained where the shutter speed is 240 fps. DATA1 is used as data of an image for preview, which is displayed on a display before shooting of a still image, and DATA2 is used as data of an image for contrast analysis when a contrast auto focus (AF) is performed in an imaging device such as a digital camera.

Figs. 42A and 42B illustrate an example of reading out timings. The control unit 201 controls a pixel array portion 111, reads out a pixel signal of each pixel of the Nth row by 30 fps (Read 1/2), and output obtained pixel data as DATA1. Further, the control unit 201 reads out a pixel signal of another pixel in the same Nth row by 240 fps (Read 3/4), and outputs obtained pixel data as DATA2.

Assume that a period of one cycle of a horizontal synchronizing signal XHS and a period of reading out by 30 fps are equal, an output of DATA1 is performed once and an output of DATA2 is performed eight times during a period of eight cycles. An operation of the column ADC that reads out DATA1 can be stopped during the period of seven cycles, and the power consumption of the imaging unit 21 can be suppressed compared with a case where reading out of DATA1 is continued.

One-bit Data ID included in a header of a packet is used to identify whether data included in a payload is DATA1 obtained with the shutter of 30 fps, or DATA2 obtained with the shutter speed of 240 fps.

For example, a value of Data ID being "1" means that pixel data of DATA1 of a predetermined one line obtained with the shutter speed of 30 fps is included in a payload of a packet that includes Data ID, to which the value 1 is set, in a header. Also, a value of Data ID being "0" means that pixel data of DATA2 of a predetermined one line obtained with the shutter speed of 240 fps is included in a payload of a packet that includes Data ID, to which the value 0 is set, in a header.

From this, the DSP 12 that has received the pixel data stored in the packet can identify the pixel data of DATA1 and the pixel data of DATA2 from the values of Data ID even of the pixel data are of the same Nth row. Further, the DSP 12 can display a preview image and can perform contrast analysis for autofocus.

There is an image sensor provided with a pixel for phase difference detection and a pixel for shooting as pixels that configure the pixel array portion 211. Pixel data detected by the pixel for phase difference detection is used to perform phase difference AF at the DSP 12 side. In this case, Data ID is used to identify whether pixel data stored in a payload is pixel data of the pixel for phase difference, or pixel data of the pixel for shooting.

[Example of use of Region Number]

Fig. 43 is a diagram illustrating a configuration example of the image sensor 11.

In the example of Fig. 43, the pixel array portion 211 of the image sensor 11 is divided into four areas: an upper right area A1, a lower right area A2, an upper left area A3, and a lower left area A4. Where the pixel array portion 211 is configured from 4000 x 2000 (breath x length) pixels, the upper right area A1 covers an area that includes pixels at a right side of the 2001th line among the pixels within a range from the 1st to 1000th rows based on the 1st row. Also, the lower right area A2 covers an area including pixels at a right side of the 2001th line among the pixels within a range from the 2000th to 1001th rows based on the final row (2000th row). Reading out of a pixel signal of the pixels that configure the upper right area A1 and the upper left area A3 is sequentially performed for each area from the 1st row, and reading out of a pixel signal of the pixels that configure the lower right area A2 and the lower left area A4 is sequentially performed for each area from the final row.

The pixel signals of pixels that configure the upper right area A1 through the lower left area A4 are supplied to the ADCs 213-1 to 213-4, respectively.

The ADCs 213-1 to 213-4 includes the column ADC similar to the ADC 213 of Fig. 33. The ADC 213-1 performs A/D conversion of a pixel signal supplied from the upper right area A1 of the pixel array portion 211, and outputs pixel data as DATA1. As described above, two different data may be output from the ADC 213-1. DATA1 output from the ADC 213-1 is supplied to the transmission unit 22-1 via a transferring unit 271-1.

Similarly, the ADCs 213-2 to 213-4 perform the A/D conversion of pixel signals supplied from the lower right area A2 to the lower left area A4, respectively, and output pixel data. DATA2 output from the ADC 213-2 is supplied to the transmission unit 22-2 via a transferring unit 271-2, and DATA3 output from the ADC 213-3 is supplied to the transmission unit 22-3 via a transferring unit 271-3. Further, DATA4 output from the ADC 213-4 is supplied to a transmission unit 22-4 via a transferring unit 271-4.

The transmission units 22-1 to 22-4 have a similar configuration to the transmission unit 22 illustrated in Fig. 5. The transmission unit 22-1 generates and outputs a packet that stores, in a payload, DATA1 that is the pixel data of the upper right area A1. A value that indicates the pixel data stored in the payload is the pixel data (DATA1) of the upper right area A1 is set in Region Number and Line Number included in a header of the packet generated by the transmission unit 22-1.

Similarly, the transmission units 22-2 to 22-4 generate and output packets that store DATA2 to DATA4 in payloads. A value that indicates the pixel data stored in the payload is the pixel data (DATA2) of the lower right area A2 is set in Region Number and Line Number included in a header of the packet generated by the transmission unit 22-2. Also, a value that indicates the pixel data stored in the payload is the pixel data (DATA3) of the upper left area A3 is set in Region Number and Line Number included in a header of the packet generated by the transmission unit 22-3. A value that indicates the pixel data stored in the payload is the pixel data (DATA4) of the lower left area A4 is set in Region Number and Line Number included in a header of the packet generated by the transmission unit 22-4.

Fig. 44 is a diagram illustrating an example of a meaning of a value of Region Number. For example, in a case where the pixel array portion 211 is configured from four areas, one bit is allocated to Region Number.

A value of Region Number being "0" means that pixel data of a predetermined one line of an area at a left side (1st to 2000th lines) is included in a payload of a packet that includes Region Number, into which the value of 0 is set, in a header. Also, a value of Region Number being "1" means that pixel data of a predetermined one line of an area at a right side (2001th to 4000th lines) is included in a payload of a packet that includes Region Number, into which the value of 1 is set, in a header.

Fig. 45 is a diagram illustrating an example of a packet generated by the transmission units 22-1 to 22-4.

As illustrated in the uppermost row of Fig. 45, a value that indicates the first row is set in Line Number of a header of a packet, which stores, in a payload, the pixel data of the first row of the upper right area A1, and a value of "1" that indicates the right side area is set in Region Number. Also, a value that indicates the final row is set in Line Number of a header of a packet, which stores, in a payload, the pixel data of the final row of the lower right area A2, and a value of "1" that indicates the right side area is set in Region Number.

A value that indicates the first row is set in Line Number of a header of a packet, which stores, in a payload, the pixel data of the first row of the upper left area A3, and a value of "0" that indicates the left side area is set in Region Number. Also, a value that indicates the final row is set in Line Number of a header of a packet, which stores, in a payload, the pixel data of the final row of the lower left area A4, and a value of "0" that indicates the left side area is set in Region Number.

Since a value that indicates 1st to 1000th rows is set as the value of Line Number, and a value of "1" that indicates the right side is set as the value of Region Number, the DSP 12 that has received a packet of the uppermost row can identify that the pixel data stored in the payload is DATA1.

Also, since a value that indicates 1001th to 2000th rows is set as the value of Line Number, and a value of "0" that indicates the left side is set as the value of Region Number, the DSP 12 that has received a packet of the lowermost row can identify that the pixel data stored in the payload is DATA4.

The DSP 12 can obtain an image of one frame configured from 4000 x 2000 pixels by synthesizing pixel data of the identified areas and lines. In the example of Fig. 45, the positions of the pixel data stored in the payload are identified by combination of Line Number and Region Number. However, the position of the pixel data may be identified by combination of values of Region Number by allocating a plurality of bits to Region Number.

In this way, even if the pixel data of each area is output from the image sensor 11, the DSP 12 can identify the type of the transmitted data with Region Number, whereby reception of data can be realized by the one reception unit 31.

[Others]

Fig. 46 is a diagram illustrating an example of use of Line Number. As illustrated in Fig. 46, a value is set to Line Number of a packet, indicating that Nth-row pixel data is stored in a payload of the packet, and a value is set to Line Number of a packet, indicating that (N+1)th-row pixel data is stored in a payload of the packet. A value is set to Line Number of a packet, indicating that (N+2)th-row pixel data is stored in a payload of the packet, and a value is set to Line Number of a packet, indicating that (N+3)th-row pixel data is stored in a payload of the packet.

<2. Second Embodiment (an example of transmitting not only pixel data but also predetermined data) >

The above-described data transmission between chips using a plurality of lanes may be used not only for the image data but also for various types of data.

Hereinafter, if appropriate, the above-described I/F used for the transmission of pixel data output from an image sensor such as a CMOS is referred to as a CMOS image sensor (CIS) I/F, and an IF used for the transmission of various types of data is referred to as a general-purpose IF. Not only image data but also various types of data such as audio data and text data are transmitted from a transmission-side chip to a reception-side chip using the general-purpose I/F.

[A configuration example of a transmission system]

Fig. 47 is a diagram illustrating a first configuration example of a transmission system using the general-purpose I/F.

A transmission system 301 of Fig. 47 is configured from a transmission-side LSI 311 and a reception-side LSI 312. The transmission-side LSI 311 and the reception-side LSI 312 are provided within a same device, for example. The transmission-side LSI 311 is provided with an information processing unit 321 and one transmission unit 322, and the reception-side LSI 312 is provided with one reception unit 331 and an information processing unit 332.

The information processing unit 321 of the transmission-side LSI 311 processes the various types of data, and outputs data to be transmitted to the transmission unit 322. From the information processing unit 321, data having various types of bit widths such as 8, 10, 12, 14, 16, 20, 24, 28, 32, 40, 48, 56, 64, 80, 96, 112, 128, and 144 bits are output.

The transmission unit 322 allocates the data supplied from the information processing unit 321 to a plurality of lanes in order supplied from the information processing unit 321, for example, and transmits the data to the reception-side LSI 312 in parallel. In the example of Fig. 47, data transmission is carried out using eight lanes. A transmission line between the transmission-side LSI 311 and the reception-side LSI 312 may be a wired transmission line, or a wireless transmission line.

The reception unit 331 of the reception-side LSI 312 receives the data transmitted from the transmission unit 322 via the eight lanes, and outputs the data to the information processing unit 332.

The information processing unit 332 generates data selected as data to be transmitted at the transmission-side LSI 311 based on the data supplied from the reception unit 331, and performs various types of processing using the generated data. When the data to be transmitted is audio data, for example, processing such as reproduction and compression of the audio data is performed.

Fig. 48 is a diagram illustrating a second configuration example of the transmission system 301. Among configurations illustrated in Fig. 48, configurations substantially equivalent to the configurations illustrated in Fig. 47 are denoted with the same reference signs. Overlapped description is omitted where appropriate.

The transmission-side LSI 311 of the transmission system 301 of Fig. 48 is provided with the information processing unit 321 and transmission units 322-1 and 322-2 that are two transmission units, and the reception-side LSI 312 is provided with reception units 331-1 and 331-2 that are two reception units and the information processing unit 332.

The information processing unit 321 divides the data to be transmitted, and outputs divided data to the transmission units 322-1 and 322-2.

The transmission unit 322-1 allocates the data supplied from the information processing unit 321 to a plurality of lanes in order supplied from the information processing unit 321, for example, and transmits the data to the reception-side LSI 312. Similarly, the transmission unit 322-2 allocates the data supplied from the information processing unit 321 to a plurality of lanes in order supplied from the information processing unit 321, for example, and transmits the data to the reception-side LSI 312.

In the example of Fig. 48, the transmission-side LSI 311 and the reception-side LSI 312 are connected via eight lanes. The transmission unit 322-1 and the transmission unit 322-2 transmit data using four lanes, respectively.

The reception unit 331-1 of the reception-side LSI 312 receives the data transmitted from the transmission unit 322-1 via the four lanes, and outputs the data to the information processing unit 332. Similarly, the reception unit 331-2 receives the data transmitted from the transmission unit 322-2 via the four lanes, and outputs the data to the information processing unit 332.

The information processing unit 332 generates data to be transmitted based on the data supplied from the reception unit 331-1 and from the reception unit 331-2, and performs various types of processing for the generated data.
As illustrated in Fig. 48, the transmission-side LSI 311 is provided with the two transmission units, and the reception-side LSI 312 is provided with the two reception units respectively corresponding to the transmission units, so that data can be transmitted to the reception-side LSI 312 even in a case where a transmission rate of the data output from the information processing unit 321 is high.
Fig. 49 is a diagram illustrating a third configuration example of the transmission system 301. Among configurations illustrated in Fig. 49, configurations substantially equivalent to the configurations illustrated in Fig. 47 are denoted with the same reference signs. Overlapped description is omitted where appropriate.
In the transmission system 301 of Fig. 49, as an LSI of the transmission-side LSI, two LSIs of a transmission-side LSI 311-1 and a transmission-side LSI 311-2 are provided. The transmission-side LSI 311-1 is provided with an information processing unit 321-1 and the transmission unit 322-1 that is one transmission unit, and the transmission-side LSI 311-2 is provided with an information processing unit 321-2 and the transmission unit 322-2 that is one transmission unit. The reception-side LSI 312 is provided with the reception units 331-1 and 331-2 that are two reception units and the information processing unit 332, similar to the case of Fig. 48.
The information processing unit 321-1 of the transmission-side LSI 311-1 outputs data to be transmitted to the transmission unit 322-1.
The transmission unit 322-1 allocates the data supplied from the information processing unit 321-1 to a plurality of lanes, and transmits the data to the reception-side LSI 312.
The information processing unit 321-2 of the transmission-side LSI 311-2 outputs the data to be transmitted to the transmission unit 322-2.
The transmission unit 322-2 allocates the data supplied from the information processing unit 321-2 to a plurality of lanes, and transmits the data to the reception-side LSI 312.
In the example of Fig. 49, the transmission-side LSI 311 that is a transmission-side LSI and the reception-side LSI 312 that is a reception-side LSI are also connected via eight lanes. Four lanes are allocated to the transmission-side LSI 311-1 and the transmission-side LSI 311-2, respectively, and the transmission unit 322-1 and the transmission unit 322-2 transmit data using the four lanes, respectively.
The reception unit 331-1 of the reception-side LSI 312 receives the data transmitted from the transmission unit 322-1 of the transmission-side LSI 311-1 via the four lanes, and outputs the data to the information processing unit 332. Similarly, the reception unit 331-2 receives the data transmitted from the transmission unit 322-2 of the transmission-side LSI 311-2 via the four lanes, and outputs the data to the information processing unit 332.
The information processing unit 332 generates data selected as data to be transmitted in the transmission-side LSI 311-1 based on the data supplied from the reception unit 331-1. Also, the transmission unit 322 generates data selected as data to be transmitted in the transmission-side LSI 311-2 based on the data supplied from the reception unit 331-2. The image processing unit 332 performs various types of processing using the generated data.
As described above, the transmission-side LSI of the transmission system 301 is provided with one or a plurality of transmission units for transmitting data. Meanwhile, the reception-side LSI is provided with one or a plurality of reception units corresponding to the transmission units of the transmission-side LSI.
Hereinafter, data transmission in the transmission system 301 of Fig. 47 will be described, wherein the transmission-side LSI 311 is provided with one transmission unit, and the reception-side LSI 312 is provided with one reception unit. Data transmission is similarly performed between the transmission unit 322-1 and the reception unit 331-1, and between the transmission unit 322-2 and the reception unit 331-2 of Figs. 48 and 49.

[Example of a data structure of a packet]

Figs. 50A to 50D are diagrams illustrating examples of packets used for data transmission.
Fig. 50A is a diagram illustrating an example of a packet used for transmission of pixel data in a CIS IF. One packet of the CIS IF is configured from a header, a payload including pixel data for one line, and a footer that is appropriately added. Start Code is added to a head of one packet of the CIS IF, and End Code is added after the footer.
Figs. 50B to 50D are diagram illustrating examples of packets used for transmission of various types of data in a general-purpose IF. One packet of the general-purpose IF is configured from only a payload. As described below, in the transmission unit 322, payload data is generated by dividing the data to be transmitted in a unit of 8 to 144 bits supplied from the information processing unit 321 into a predetermined size. The packet size has a bit number that is a common multiple of 8 to 144 bits, which is a bit width of input data, and 128 bits, and is designated with a value set in Configuration Register.
When a packet having the same size as the packet size designated with the value set in Configuration Register is generated and data is transmitted, a regular packet illustrated in Fig. 50B is used.
Also, when a packet shorter than the packet size designated with the value set in Configuration Register is generated, and data is transmitted, a short packet illustrated in Figs. 50C or 50D is used. For example, when the payload length is a multiple of 128 bits, a short packet (1) of Fig. 50C is used, and when the payload length is not a multiple of 128 bits, a short packet (2) of Fig. 50D is used. The short packets of Figs. 50C and 50D are identified with End Code added behind.

[A configuration of a transmission-side LSI 311 and a reception-side LSI 312]

Fig. 51 is a diagram illustrating a configuration example of the transmission-side LSI 311 and the reception-side LSI 312.

The left side in Fig. 51 illustrates a configuration of the transmission-side LSI 311, and the right side illustrates a configuration of the reception-side LSI 312. Data transmission of the general-purpose IF is realized by configurations of layers: an application layer, an adaptation layer, a link layer, and a physical layer.

The portion above the solid line L1 illustrates a configuration of the application layer. In the information processing unit 321, a system control unit 341, a data input unit 342, and a register 343 are realized.

The system control unit 341 controls data transmission by the general-purpose IF. For example, the system control unit 341 outputs a control signal, which indicates input data is effective, to the payload data generation unit 351 of the transmission unit 322 during the data input unit 342 outputs data to be transmitted. The data input unit 342 outputs the data to be transmitted to the payload data generation unit 351 in predetermined bits of 8 to 144 bits. The register 343 is the above-described Configuration Register and stores various types of information such as a packet size and the number of lanes.

Meanwhile, in the information processing unit 332, a system control unit 441, a data output unit 442, and a register 443 are realized.

The system control unit 441 controls data reception by the general-purpose IF. For example, the system control unit 441 outputs information of a packet size designated by a value set in the register 443 to a payload data acquisition unit 431. The data output unit 442 acquires data supplied from the payload data acquisition unit 431, and outputs the data to a data processing unit (not illustrated). The register 443 stores various types of information such as a packet size and the number of lanes.

[A configuration of an adaptation layer of a transmission unit 322]

A configuration of the adaptation layer of the transmission-side LSI 311 will be described. The transmission unit 322 includes the payload data generation unit 351 as a configuration of the adaptation layer.

The payload data generation unit 351 divides the data to be transmitted supplied from the data input unit 342 in predetermined bits into data having the same size as the packet size, and outputs the data to a Byte Packing unit 362. Data having the predetermined bits that configures the data to be transmitted is output from the payload data generation unit 351 to the Byte Packing unit 362 in the same size as the packet size. The payload data generation unit 351 outputs data less than the packet size, for example, last data of the data to be transmitted, to the Byte Packing unit 362 as it is.

Also, when detecting that the control signal becomes OFF, and no data has been input for a predetermined time or more, the payload data generation unit 351 outputs a Packet End signal to the Byte Packing unit 362. The Packet End signal is a timing signal indicating an input timing of the last data that configures the packet. Note that the payload data generation unit 351 outputs, when transmitting the header information described with reference to Figs. 7 and 32, and the like, to the reception-side LSI 312, the header information to a packet generation unit 364. In the general-purpose IF, the header information is also transmitted as payload data.

[A configuration of a link layer of a transmission unit 322]

The transmission unit 322 includes the Byte Packing unit 362, a payload ECC insertion unit 363, the packet generation unit 364, and a lane distribution unit 365 as a configuration of the link layer.

The Byte Packing unit 362 converts the data supplied from the payload data generation unit 351 into packing data of a predetermined unit such as 16 bytes, which is a processing unit in the Byte Packing unit 362 and subsequent units. The Byte Packing unit 362 outputs the packing data obtained by the conversion to the payload ECC insertion unit 363.

Fig. 52 is a diagram illustrating an example of Byte Packing that is the data conversion by the Byte Packing unit 362.

In the example of Fig. 52, Data1 through Data8, which are divided by the payload data generation unit 351 as data that configures one packet according to a control signal, are input to the Byte Packing unit 362. Data is input in a unit of 80 bits from the data input unit 342 to the payload data generation unit 351.

In this case, the Byte Packing unit 362 generates five packing data by allocating bits of Data1 through Data8 to bits of packing data in a unit of 16 bytes (128 bits) in order of input. For example, the first packing data includes 1 to 80 bits of Data1 and 1 to 48 bits of Data2.

Fig. 53 is a diagram illustrating another example of Byte Packing by the Byte Packing unit 362.

In the example of Fig. 53, Data1 through Data5 divided by the payload data generation unit 351 as data that configures one packet according to a control signal are input to the Byte Packing unit 362. A Packet End signal is input from the payload data generation unit 351 to the Byte Packing unit 362 in accordance with an input timing of Data5. In response to the supply of the Packet End signal, the Byte Packing unit 362 can recognize that Data5 is the last data that configures the one packet.

In this case, the Byte Packing unit 362 generates the first packing data including Data1 as a whole and a head to a middle portion of Data2 by allocating bits of Data1 through Data5 to bits of packing data in order of input. Also, the Byte Packing unit 362 generates the second packing data including the middle portion to the end of Data2, Data3 as a whole, and a head to a middle portion of Data4. The Byte Packing unit 362 generates the third packing data including the middle portion to the end of Data4 and a head to a middle portion of Data5.

When allocating 80th bit that is the last bit of Data5 to the fourth packing data, the Byte Packing unit 362 generates the fourth packing data of 16 bytes by inserting dummy data after the last bit. That is, the packing data is generated by adding the dummy data (dummy bits) for data less than 16 bytes. All the dummy data have a value of 0 bits, for example.

Further, as the fifth packing data following the fourth packing data to which the dummy data is added, the Byte Packing unit 362 generates packing data including 8 bits at the LSB side, which indicates the bit number of the dummy data included in the fourth packing data. The dummy data is included in the 1st to 120th bits of the fifth packing data.

The reception unit 331 that has received such data can identify that the dummy data is included in the fourth packing data that is one before the fifth packing data based on the fact that the dummy data of 120 bits is included in the fifth packing data. Further, the reception unit 331 can identify the bit number of the dummy data added to the fourth packing data based on the bit number represented by the 8 bits following the dummy data of 120 bits, thereby extracting only effective data.

Fig. 54 is a diagram illustrating a sequence of the Byte Packing processing.

In the example of Fig. 54, the control signal supplied from the system control unit 341 of the information processing unit 321 is ON during a period from time t11 to t14, and at time t15 and subsequent time. Also, Data1 through Data4, which are the data to be transmitted in predetermined bits, are supplied from the data input unit 342 in accordance with the control signal turning ON. Looking at Data1 through Data3, Data1 is supplied during a period from time t11 to t12, Data2 is supplied during a period from time t12 to t13, and Data3 is supplied during a period from time t13 to t14. A Packet End signal that indicates the last data that configures the packet is input at a timing of completion of the input of Data3. Data1 through Data4 are data respectively having 16 bytes or more in size.

In this case, the Byte Packing unit 362 generates packing data PD1 including data of an area a from the head to a middle portion of Data1. Also, the Byte Packing unit 362 generates packing data PD2 including data of an area b from the middle portion to the end of Data1, and data of an area c from the head to a middle portion of Data2.

The Byte Packing unit 362 generates packing data PD3 including data of an area d from the middle portion to the end of Data2 and data of an area e from the head to a middle portion of Data3. The Byte Packing unit 362 generates packing data PD4 of 16 bytes by adding dummy data to data of an area f from the middle portion to the end of Data3. The data marked with slant lines in Fig. 54 is the dummy data.

Further, the Byte Packing unit 362 generates packing data of 16 bytes including bits that indicates the bit number of the dummy data added to the packing data PD4 at the end, following the packing data PD4.

For example, a packet made of the packing data PD1 to PD4 including the packing data PD4 to which the dummy data is added is transmitted as a short packet of Fig. 50C or Fig. 50D. In the short packet, the packing data to which the bits that indicates the bit number of the dummy data is added at the end is also included.

Consider a case where only effective data input during the period where the control signal is ON is included in packing data without including the dummy data, and the packing data is transmitted as a regular packet. In this case, when the packing data cannot be filled with the effective data at the timing when a Packet End signal is supplied, the data of the area f of Data3 that cannot be included in the packing data cannot be output until Data4 is input. When the packing data cannot be filled with the effective data at the timing when the Packet End signal is supplied, a delay of an output of data can be prevented by adding the dummy data and outputting the data.

Data configured from the packing data generated in this way is supplied from the Byte Packing unit 362 to the payload ECC insertion unit 363 of Fig. 51 as payload data.

The payload ECC insertion unit 363 calculates an error correction code used for error correction of the payload data based on the payload data supplied from the Byte Packing unit 362, and inserts a parity obtained by the calculation to the payload data. A Reed-Solomon code is used as the error correction code. Note that the insertion of the error correction code is optional.

Fig. 55 is a diagram illustrating an example of insertion of a parity to payload data.

The payload ECC insertion unit 363 generates Basic Block of 224 bytes by collecting 14 packing data in order supplied from the Byte Packing unit 362 Also, the payload ECC insertion unit 363 generates a parity of two to four bytes based on the payload data of 224 bytes, and generates Basic Block of 226 to 228 bytes to which the parity is inserted by inserting the parity in the payload data.

In the example of Fig. 55, Parity1 is generated and added to the payload data made of 1st to 14th packing data. The data marked with slant lines in Fig. 55 is a parity.

When the size of the payload data following a certain Basic Block is less than 224 bytes, the payload ECC insertion unit 363 generates Extra Block based on remaining payload data. By the above-described insertion of dummy data, the length of information of Extra Block is always a multiple of 16 bytes. Also, the payload ECC insertion unit 363 generates a parity of two to four bytes based on the payload data that configures Extra Block, and generates Extra Block to which the parity is inserted by inserting the parity to the payload data.

In the example of Fig. 55, ParityM is generated and added to the Nth to (N+M)th payload data.

The payload ECC insertion unit 363 outputs the payload data to which the parity is inserted to the packet generation unit 364. When the insertion of the parity is not performed, the payload data supplied from the Byte Packing unit 362 to the payload ECC insertion unit 363 is output to the packet generation unit 364 as it is.

The packet generation unit 364 generates a packet having the data supplied from the payload ECC insertion unit 363 as payload data. The packet generation unit 364 outputs the data of the generated packet to the lane distribution unit 365.

The lane distribution unit 365 allocates the packet data supplied from the packet generation unit 364 to the lanes used for data transmission in bytes in order from one byte of the head like Lane 0, Lane 1, ... , Lane (Lane Num-1), and Lane 1, .... There may be a case where the data cannot be equally distributed to the lanes depending on the packet length and the number of lanes. In this case, the lane distribution unit 365 inserts 00h as Lane Stuffing so that the data can be equally distributed to the lanes.

The lane distribution unit 365 outputs the packed data allocated to the lanes to the physical layer. Hereinafter, a case will be mainly described in which the data is transmitted using eight lanes of Lanes 0 to 7. However, similar processing is performed in a case where other number of lanes is used for the data transmission.

[A configuration of a physical layer of a transmission unit 322]

The transmission unit 322 includes a PHY-TX state control unit 381, a clock generation unit 382, and signal processing units 383-0 to 383-N as a configuration of the physical layer. The configuration of the physical layer of the transmission unit 322 is similar to that of the physical layer of the transmission unit 22 in the CIS-IF described with reference to Fig. 5. Overlapped description is omitted where appropriate.

The signal processing unit 383-0 is configured from a control code insertion unit 391, an 8B10B symbol encoder 392, a synchronization unit 393, and a transmission unit 394. The packet data output from the lane distribution unit 365 and allocated to Lane 0 is input to the signal processing unit 383-0, and the packet data allocated to Lane 1 is input to the signal processing unit 383-1. Also, the packet data allocated to Lane N is input to the signal processing unit 383-N.

The PHY-TX state control unit 381 controls each part of the signal processing units 383-0 to 383-N.

The clock generation unit 382 generates a clock signal, and outputs the signal to the respective synchronization units 393 of the signal processing units 383-0 to 383-N.

The control code insertion unit 391 of the signal processing unit 383-0 adds control codes such as Start Code and End Code to the packet data supplied from the lane distribution unit 365. The control code insertion unit 391 outputs the packet data to which the control codes are added to the 8B10B symbol encoder 392.

The 8B10B symbol encoder 392 performs the 8B10B conversion for the packet data (the packet data to which the control codes are added) supplied from the control code insertion unit 391, and outputs packet data, which has been converted into data of a unit of 10 bits, to the synchronization unit 393.

The synchronization unit 393 outputs bits of the packet data supplied from the 8B10B symbol encoder 392 to the transmission unit 394 according to the clock signal generated by the clock generation unit 382.

The transmission unit 394 transmits the packet data supplied from the synchronization unit 393 to the reception unit 331 via the transmission line that configures Lane 0. When the data transmission is performed using eight lanes, the packet data is transmitted to the reception unit 331 using the transmission lines that configure Lanes 1 to 7.

[A configuration of a physical layer of a reception unit 331]

Next, a configuration of the physical layer of the reception unit 331 of the reception-side LSI 312 will be described. The reception unit 331 includes a PHY-RX state control unit 401 and signal processing units 402-0 to 402-N as a configuration of the physical layer. The configuration of the physical layer of the reception unit 331 is similar to that of the physical layer of the reception unit 31 in the CIS-IF described with reference to Fig. 5. Overlapped description is omitted where appropriate.

The signal processing unit 402-0 configured from a reception unit 411, a clock generation unit 412, a synchronization unit 413, a symbol synchronization unit 414, a 10B8B symbol encoder 415, a skew correction unit 416, and a control code removal unit 417. The packet data transmitted via the transmission line that configures Lane 0 is input to the signal processing unit 402-0, and the packet data transmitted via the transmission line that configures Lane 1 is input to the signal processing unit 402-1. Also, the packet data transmitted via the transmission line that configures Lane N is input to the signal processing unit 402-N.

The reception unit 411 receives a signal that indicates the packet data transmitted from the transmission unit 322 via the transmission line that configures Lane 0, and outputs the signal to the clock generation unit 412.

The clock generation unit 412 establishes bit synchronization by detecting an edge of the signal supplied from the reception unit 411, and generates a clock signal based on a detection cycle of the edge. The clock generation unit 412 outputs the signal supplied from the reception unit 411 to the synchronization unit 413 along with the clock signal.

The synchronization unit 413 performs sampling of the signal received in the reception unit 411 according to the clock signal generated by the clock generation unit 412, and outputs packet data obtained by the sampling to the symbol synchronization unit 414.

The symbol synchronization unit 414 detects a symbol of K28.5 included in Start Code, End Code, and Deskew Code, for example, and establishes symbol synchronization. The symbol synchronization unit 414 outputs the packet data of a unit of 10 bits that indicates each symbol to the 10B8B symbol encoder 415.

The 10B8B symbol encoder 415 performs 10B8B conversion for the packet data of a unit of 10 bits supplied from the symbol synchronization unit 414, and outputs packet data, which has been converted into data of a unit of 8 bits, to the skew correction unit 416.

The skew correction unit 416 detects Deskew Code from the packet data supplied from the 10B8B symbol encoder 415. Information of a detection timing of Deskew Code by the skew correction unit 416 is supplied to the PHY-RX state control unit 401. Also, the skew correction unit 416 corrects Data Skew between the lanes so as to adjust the timing of Deskew Code to a timing indicated by the information supplied from the PHY-RX state control unit 401.

Data Skew between the lanes is corrected in the way described with reference to Fig. 25 by similar processing performed in the signal processing units 402-1 to 402-N, respectively.

The skew correction unit 416 outputs the packet data, Data Skew of which has been corrected, to the control code removal unit 417.

The control code removal unit 417 removes the control codes added to the packet data, and outputs data from Start Code to End Code as the packet data.

The PHY-RX state control unit 401 controls each part of the signal processing units 402-0 to 402-N, and performs correction of Data Skew between the lanes.

[A configuration of a link layer of a reception unit 331]

The reception unit 331 includes a lane integration unit 422, a packet separation unit 423, a payload error correction unit 424, and a Byte Unpacking unit 425 as a configuration of the link layer.

The lane integration unit 422 integrates the data supplied from the signal processing units 402-0 to 402-N of the physical layer by re-arranging the data in a reverse order of the distribution order of data by the lane distribution unit 365 of the transmission unit 322. The lane integration unit 422 outputs the packet data obtained by the integration to the packet separation unit 423.

The packet separation unit 423 outputs the packet data integrated by the lane integration unit 422 to the payload error correction unit 424 as payload data. When header information is included as the payload data, the packet separation unit 423 outputs the header information extracted from the payload to the payload data acquisition unit 431.

When a parity is inserted to the payload data supplied from the packet separation unit 423, the payload error correction unit 424 detects an error of the payload data by performing error correction arithmetic operation based on the parity, and performs error correction. For example, when a parity is inserted as illustrated in Fig. 55, the payload error correction unit 424 performs error correction of data of 224 bytes existing before the parity using a parity inserted at the end of the first Basic Block.

The payload error correction unit 424 outputs data after error correction obtained by performing the error correction for Basic Block and Extra Block to the Byte Unpacking unit 425. When a parity is not inserted to the payload data supplied from the packet separation unit 423, the payload data supplied from the packet separation unit 423 is output to the Byte Unpacking unit 425 as it is.

The Byte Unpacking unit 425 performs Byte Unpacking that is reverse processing to the processing by the Byte Packing unit 362 of the transmission unit 322 for the packing data of 16 bytes supplied from the payload error correction unit 424. The Byte Unpacking unit 425 outputs the data obtained by performing the Byte Unpacking to the payload data acquisition unit 431. A packet of data in predetermined bits is output altogether from the Byte Unpacking unit 425 to the payload data acquisition unit 431, similar to the output of the payload data generation unit 351 of the transmission unit 322.

Also, when dummy data is included in the packing data that configures the payload data, the Byte Unpacking unit 425 removes the dummy data, and performs Byte Unpacking for the data other than the dummy data. The fact that the dummy data is included in the packing data is identified based on detection of successive dummy data of 120 bits as described above. Also, the bit number of the dummy data included in the packing data is identified with 8 bits following the dummy data of 120 bits.

[A configuration of an adaptation layer of a reception unit 331]

The reception unit 331 includes the payload data acquisition unit 431 as a configuration of the adaptation layer. The payload data acquisition unit 431 acquires the data supplied from the Byte Unpacking unit 425, and outputs, to the information processing unit 332, the data in a bit width equal to the data input from the data input unit 342 to the payload data generation unit 351 in the transmission-side LSI 311.

[An operation of a transmission-side LSI 311 and a reception-side LSI 312]

Next, a series of processing of the transmission-side LSI 311 and the reception-side LSI 312 having the above-described configuration will be described.

First, an operation of the transmission system 301 will be described with reference to a flowchart of Fig. 56. The processing of each step of Fig. 56 is appropriately performed in parallel with, or before or after, other processing.

In step S101, the information processing unit 321 of the transmission-side LSI 311 processes various types of data, and outputs data to be transmitted to the transmission unit 322 in a predetermined bit width of 8 to 144 bits.

In step S102, the transmission unit 322 performs data transmission processing. By the data transmission processing, a packet that includes the data to be transmitted in a payload is generated, and packet data is transmitted to the reception unit 331. The data transmission processing will be described with reference to a flowchart of Fig. 57.

In step S103, the reception unit 331 of the reception-side LSI 312 performs data reception processing. By the data reception processing, the data transmitted from the transmission unit 322 is received, and data selected in the transmission-side LSI 311 as the data to be transmitted is output to the information processing unit 332. The data reception processing will be described with reference to a flowchart of Fig. 58.

In step S104, the information processing unit 332 acquires the data supplied from the reception unit 331.

In step S105, the information processing unit 332 performs various types of processing based on the acquired data, and terminates the processing.

Next, the data transmission processing performed in step S102 of Fig. 56 will be described with reference to a flowchart of Fig. 57.

In step S111, the payload data generation unit 351 generates payload data by dividing the data to be transmitted supplied from the data input unit 342 into a predetermined size.

In step S112, the Byte Packing unit 362 converts the payload data supplied from the payload data generation unit 351 into packing data in a predetermined unit such as 16 bytes.

In step S113, the payload ECC insertion unit 363 calculates an error correction code based on Basic Block or Extra Block configured from the payload data, and inserts a parity obtained by the calculation to the payload data.

In step S114, the packet generation unit 364 outputs the packet data supplied from the payload ECC insertion unit 363 to the lane distribution unit 365 as packet data.

In step S115, the lane distribution unit 365 allocates the packet data supplied from the packet generation unit 364 to a plurality of lanes used for data transmission.

In step S116, the control code insertion unit 391 adds a control code to the packet data supplied from the lane distribution unit 365.

In step S117, the 8B10B symbol encoder 392 performs 8B10B conversion of the packed data to which the control code is added, and outputs packet data that has been converted into data of a unit of 10 bits.

In step S118, the synchronization unit 393 outputs the packet data supplied from the 8B10B symbol encoder 392 according to a clock signal generated by the clock generation unit 382, and allows the transmission unit 394 to transmit the data. The processing from step S116 to S118 is performed in parallel by the signal processing units 383-0 to 383-N. After the packet data is transmitted, the processing returns to step S102 of Fig. 56, and subsequent processing is performed.

Next, the data reception processing performed in step S103 of Fig. 56 will be described with reference to a flowchart of Fig. 58.

In step S131, the reception unit 411 receives a signal that indicates the packet data transmitted from the transmission unit 322. The processing from step S131 to S136 is performed by the signal processing units 402-0 to 402-N in parallel.

In step S132, the clock generation unit 412 establishes bit synchronization by detecting an edge of the signal supplied from the reception unit 411. The synchronization unit 413 performs sampling of the signal received by the reception unit 411, and outputs the packet data to the symbol synchronization unit 414.

In step S133, the symbol synchronization unit 414 establishes symbol synchronization by detecting a control code included in the packet data and the like.

In step S134, the 10B8B symbol encoder 415 performs 10B8B conversion for the packet data after the symbol synchronization, an outputs the packet data that has been converted into data in a unit of 8 bits.

In step S135, the skew correction unit 416 detects Deskew Code, and corrects Data Skew between the lanes so as to adjust a timing of Deskew Code to a timing indicated by information supplied from the PHY-RX state control unit 401.

In step S136, the control code removal unit 417 removes the control code added to the packet data.

In step S137, the lane integration unit 422 integrates the packet data supplied from the signal processing units 402-0 to 402-N.

In step S138, the packet separation unit 423 outputs the packet data integrated by the lane integration unit 422 to the payload error correction unit 424 as payload data.

In step S139, the payload error correction unit 424 performs error correction of the payload data based on the parity inserted into the payload data supplied from the packet separation unit 423.

In step S140, the Byte Unpacking unit 425 performs reverse conversion processing to Byte Packing for the payload data supplied from the payload error correction unit 424. The Byte Unpacking unit 425 outputs obtained data to the payload data acquisition unit 431.

In step S141, the payload data acquisition unit 431 outputs the data supplied from the Byte Unpacking unit 425 to the information processing unit 332 in a predetermined bit width. Following that, the processing returns to step S103 of Fig. 56, and subsequent processing is performed.

The data transmission between the transmission-side LSI 311 and the reception-side LSI 312 using the general-purpose IF is performed as described above. It becomes possible to transmit various types of data by the general-purpose IF.

[Modifications]

A transmission unit that corresponds to the data transmission both by the CIS IF and by the general-purpose IF may be provided in the LSI at the transmission side, and a reception unit may be provided in the LSI at the reception side.

Fig. 59 is a diagram illustrating a configuration example of a transmission unit 501 that corresponds to the data transmission both by the CIS IF and by the general-purpose IF. A CIS/general-purpose switching signal that indicates which of the CIS IF and the general-purpose IF performs data transmission is input from a control unit (not illustrated).

A data input unit 511 receives pixel data that is data to be transmitted for the CIS IF in a unit of a line, and outputs the data to a selection unit 513.

A data input unit 512 receives the data to be transmitted of the general-purpose IF. The data input unit 512 generates payload data by dividing the data to be transmitted into a predetermined size, and outputs the payload data to the selection unit 513. The data input unit 512 corresponds to the payload data generation unit 351 of Fig. 51.

The selection unit 513 selects one of data supplied from the data input unit 511 and data supplied from the data input unit 512 in response to the CIS/general-purpose switching signal, and outputs the data to a Byte Packing unit 514.

The Byte Packing unit 514 converts the data supplied from the selection unit 513 into data in predetermined bytes, and outputs the data to a payload ECC insertion unit 515. The Byte Packing unit 514 corresponds to the Pixel to Byte conversion unit 62 of Fig. 5 and the Byte Packing unit 362 of Fig. 51.

The payload ECC insertion unit 515 calculates an error correction code based on the payload data, and outputs the payload data into which the error correction code is inserted. The data output from the payload ECC insertion unit 515 is supplied to a header generation unit 516 and a selection unit 517. The payload ECC insertion unit 515 corresponds to the payload ECC insertion unit 63 of Fig. 5 and the payload ECC insertion unit 363 of Fig. 51.

The header generation unit 516 generates a header to be added to the payload, and outputs the header to the selection unit 517. The header generation unit 516 corresponds to the header generation unit 72 of Fig. 5.

The selection unit 517 outputs the payload data to which the header is added by the header generation unit 516 to a footer generation unit 518 when transmitting data by the CIS IF. Also, the selection unit 517 outputs the payload data supplied from the payload ECC insertion unit 515 to a selection unit 519 when transmitting data by the general-purpose IF.

The footer generation unit 518 generates a footer to be added to the payload, adds the footer to the payload data supplied from the selection unit 517, and outputs the payload data to the selection unit 519. The footer generation unit 518 corresponds to the footer generation unit 74 of Fig. 5.

The selection unit 519 outputs the payload data into which the header and the footer is added and supplied from the footer generation unit 518 to a lane distribution unit 520 when transmitting data by the CIS IF. Also, the selection unit 519 outputs the payload data supplied from the selection unit 517 to the lane distribution unit 520 when transmitting data by the general-purpose IF.

The lane distribution unit 520 allocates the data supplied from the selection unit 519 to a lane used for data transmission. Although, in Fig. 59, four lanes are illustrated as lanes used for the data transmission, the lanes may have any number. The lane distribution unit 520 outputs the data allocated to each lane to a frame configuration unit 521. The lane distribution unit 520 corresponds to the lane distribution unit 65 of Fig. 5 and the lane distribution unit 365 of Fig. 51.

The frame configuration unit 521 adds a control code to the data of each lane, and outputs the data to 8B10B symbol encoders 522-0 to 522-3. The frame configuration unit 521 corresponds to the control code insertion units 91 of the signal processing units 83-0 to 83-3 of Fig. 5 and the control code insertion units 391 of the signal processing units 383-0 to 383-3 of Fig. 51.

The 8B10B symbol encoders 522-0 to 522-3 respectively perform 8B10B conversion of the packet data to which the control code is added, and output data of a unit of 10 bits to P/S conversion units 523-0 to 523-3. The 8B10B symbol encoders 522-0 to 522-3 correspond to the 8B10B symbol encoders 92 of the signal processing units 83-0 to 83-3 of Fig. 5 and the 8B10B symbol encoders 392 of the signal processing units 383-0 to 383-3 of Fig. 51.

The P/S conversion units 523-0 to 523-3 respectively perform parallel/serial (P/S) conversion of the data supplied from the 8B10B symbol encoders 522-0 to 522-3, and transmits the data using respective lanes. The P/S conversion units 523-0 to 523-3 correspond to the transmission units 94 of the signal processing units 83-0 to 83-3 of Fig. 5 and the transmission units 394 of the signal processing units 383-0 to 383-3 of Fig. 51.

Note that, in Fig. 59, a configuration necessary for description of the flow of the processing, and drawing of the detailed configuration described with reference to Figs. 5 and 51 are omitted where appropriate. The same applies to Fig. 60.

Fig. 60 is a diagram illustrating a configuration example of a reception unit 502 corresponding to the data transmission both by the CIS IF and by the general-purpose IF. A CIS/general-purpose switching signal that indicates which of the CIS IF and the general-purpose IF performs the data transmission is input from a control unit (not illustrated).

S/P conversion units 531-0 to 531-3 receive the data transmitted from the P/S conversion units 523-0 to 523-3 of the transmission unit 501, perform P/S conversion of the data, respectively, and output the data to 10B8B symbol encoder 532-0 to 532-3. The S/P conversion units 531-0 to 531-3 correspond to the reception units 111 of the signal processing units 102-0 to 102-3 of Fig. 5 and the reception units 411 of the signal processing units 402-0 to 402-3 of Fig. 51.

The 10B8B symbol encoders 532-0 through 532-3 perform 10B8B conversion of the data respectively supplied from the S/P conversion units 531-0 to 531-3, and output data in a unit of 8 bits in respective lanes to a skew correction unit 533. The 10B8B symbol encoders 532-0 through 532-3 correspond to the 10B8B symbol decoders 115 of the signal processing units 102-0 to 102-3 of Fig. 5 and the 10B8B symbol encoders 415 of the signal processing units 402-0 to 402-3 of Fig. 51.

The skew correction unit 533 detects Deskew Code of each lane, and corrects Data Skew between the lanes. The skew correction unit 533 outputs data of each lane after the Data Skew correction to a lane integration unit 534. The skew correction unit 533 corresponds to the skew correction units 116 of the signal processing units 102-0 to 102-3 of Fig. 5 and the skew correction units 416 of the signal processing units 402-0 to 402-3 of Fig. 51.

The lane integration unit 534 integrates the data of the lanes supplied from the skew correction unit 533, and outputs packet data to a footer processing unit 535 and a selection unit 536. The lane integration unit 534 corresponds to the lane integration unit 122 of Fig. 5 and the lane integration unit 422 of Fig. 51.

The footer processing unit 535 performs, when a footer is included in the data supplied from the lane integration unit 534, error detection using a CRC code included in the footer added to the payload, and outputs data without an error to the selection unit 536. The footer processing unit 535 corresponds to the footer error detection unit 134 of Fig. 5.

The selection unit 536 outputs the payload data to which the header is added and supplied from the footer processing unit 535 to a header processing unit 537 when transmitting data by the CIS IF. Also, the selection unit 536 outputs the payload data supplied from the lane integration unit 534 to a selection unit 538 when transmitting data by the general-purpose IF.

The header processing unit 537 performs error correction using a CRC code included in the header added to the payload data supplied from the selection unit 536, and outputs payload data without an error to the selection unit 538. The header processing unit 537 corresponds to the header error correction unit 132 of Fig. 5

The selection unit 538 outputs the payload data supplied from the header processing unit 537 to a payload error correction unit 539 when transmitting data by the CIS IF. Also, the selection unit 538 outputs the payload data supplied from the selection unit 536 to the payload error correction unit 539 when transmitting data by the general-purpose IF.

When a parity is inserted to the payload data supplied from the selection unit 538, the payload error correction unit 539 detects an error of the payload data by performing error correction arithmetic operation based on the parity, and performs error correction. The payload error correction unit 539 corresponds to the payload error correction unit 124 of Fig. 5 and the payload error correction unit 424 of Fig. 51.

A Byte Unpacking unit 540 performs reverse processing to Byte Packing by the Byte Packing unit 514 of the transmission unit 501 in Fig. 59 for the data in a unit of 16 bytes supplied from the payload error correction unit 539. The Byte Unpacking unit 540 outputs the pixel data transmitted by the CIS IF to a data output unit 541, and outputs the data transmitted by the general-purpose IF to a data output unit 542. The Byte Unpacking unit 540 corresponds to the Byte to Pixel conversion unit 125 of Fig. 5 and the Byte Unpacking unit 425 of Fig. 51.

The data output unit 541 outputs the pixel data supplied from the Byte Unpacking unit 540 to an image processing unit in a following step.

The data output unit 542 outputs the data supplied from the Byte Unpacking unit 540 to an information processing unit in a following step.

As described above, it is possible to provide the transmission unit and the reception unit in the LSI corresponding to the data transmission both by the CIS IF and by the general-purpose IF.

[A configuration example of a computer]

The above-described series of processing can be executed by hardware, or it may otherwise be executed by software. In a case where the series of processing is executed by software, a program that configures the software is installed from a program recording medium into a computer incorporated in dedicate hardware, a general-purpose personal computer, and the like.

Fig. 61 is an example of a hardware configuration of a computer that executes the above-described series of processing in accordance with a program.

A central processing unit (CPU) 601, a read only memory (ROM) 602, and a random access memory (RAM) 603 are connected to each other by a bus 604.

Further, an input/output interface 605 is connected to the bus 604. An input unit 606 including a keyboard, a mouse and the like, and an output unit 607 including a display unit, a speaker and the like are connected to the input/output interface 605. Also, a storage unit 608 formed from a hard disk, an nonvolatile memory, or the like, a communication unit 609 formed from a network interface or the like, and a drive 610 for driving a removable medium 611 are connected to the input/output interface 605.

In the computer configured as described above, the CPU 601 loads a program stored, for example, in the storage unit 608 into the RAM 603 through the input/output interface 605 and the bus 604, and executes the program to carry out the above-described series of processing.

The program executed by the CPU 601 can be recorded on and provided as, for example, a removable medium 611, or can be provided through a wired or wireless transmission medium such as a local area network, the Internet, and a digital broadcast, and installed into the storage unit 608.

Note that the program executed by the computer may be of a type by which the processing is carried out in a time series in the order described in the present specification or of a type by which the processing is executed in parallel or executed individually at necessary timings such as when the processing is called.

[Examples of configuration combination]

The present technology may be configured as follows.

(1) An image output device including:

an imaging unit;
a header generation unit configured to generate a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information; a packet generation unit configured to generate a packet that includes, in a payload, pixel data for one line configuring an image obtained by imaging by the imaging unit, and into which the header is added; and

an output unit configured to output the packet generated by the packet generation unit to an image processing device.

(2) The image output device according to (1), wherein each of the first frame information, the second frame information, and the first line information is one-bit information, and
the second line information is 13-bit information.
(3) The image output device according to (1) or (2), wherein the header generation unit generates the header including a plurality of sets of the header information and the error detection code.
(4) The image output device according to any one of (1) to (3), further including an addition unit configured to add a start code indicating a start position of a packet to a head of the packet generated by the packet generation unit, and to add an end code indicating an end position of a packet to a tail end of the packet.
(5) The image output device according to (4), wherein the addition unit adds a padding code to the payload of the packet when a transmission rate of data of a transmission line between the image output device and the image processing device is larger than a transmission rate of the pixel data output by the imaging unit.
(6) The image output device according to (4) or (5), wherein the addition unit adds a skew code following the end code, the skew code being used in the image processing device in order to secure synchronization of data of the packet transmitted through a plurality of the transmission lines, and
the output unit outputs, to the image processing device, data of the packet to which at least the start code, the end code, and the skew code are added using a plurality of the transmission lines simultaneously.
(7) The image output device according to (6), wherein, among a plurality of symbols that is known information configured from arrangement of a predetermined number of bits,
the addition unit generates the start code and the end code by combining four of three kinds of the symbols, and adds the start code and the end code to the packet,
generates the padding code by combining four of four kinds of the symbols, and adds the padding code to the payload of the packet, and
generates the skew code by combining two of the predetermined symbols, and adds the skew code to the packet.
(8) The image output device according to (7), wherein the addition unit generates the start code, the end code, and the skew code so as to include at least one of the same kind of the symbols.
(9) The image output device according to (6), further including a distribution unit configured to allocate data of the packet generated by the packet generation unit to a plurality of the transmission lines,
wherein, corresponding to a plurality of the transmission lines, the same number of the addition units and the output units as the number of the transmission lines are provided.
(10) The image output device according to any one of (1) to (9), wherein the imaging unit outputs a plurality of pixel data as data of pixels at the same position, and
the header generation unit generates the header further including identification information of pixel data included in a payload.
(11) The image output device according to (10), wherein the imaging unit outputs a plurality of pixel data obtained by performing A/D conversion using different gains, a plurality of pixel data obtained by performing A/D conversion with different resolutions, a plurality of pixel data obtained by performing exposures in different shutter speeds, a plurality of pixel data obtained by a pixel having a vertical spectroscopic arrangement, or when pixels at a same position are made of a plurality of pixels having different sensitivities, a plurality of pixel data obtained from the respective pixels.
(12) The image output device according to any one of (1) to (11), wherein the header generation unit generates the header further including identification information of an area in the imaging unit where pixel data included in a payload is obtained.
(13) An image output method, including the steps of:

imaging;
generating a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

generating a packet that includes, in a payload, pixel data for one line configuring an image obtained by imaging, and into which the header is added; and
outputting the generated packet to an image processing device.

(14) A program for causing a computer to execute processing including the steps of:

imaging;
generating a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

generating a packet that includes, in a payload, pixel data for one line configuring an image obtained by imaging, and into which the header is added; and
outputting the generated packet to an image processing device.

(15) A data structure of transmission data used for transmission of data including pixel data for one line configuring an image obtained by imaging, the data structure including:

a start code added to a head of a packet, and indicating a start position of the packet;
the packet having a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information added to a payload including pixel data for one line configuring an image obtained by imaging;

an end code added to a tail end of the packet, and indicating an end position of the packet; and
a skew code added following the end code, and used in an image processing device that has received data of the packet in order to secure synchronization of the data of the packet.

(16) An image processing device including:

a reception unit configured to receive a packet generated in an image output device provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit of the image output device; and
an image processing unit configured to process the image configured from a line made of the pixel data included in the payload of the packet received by the reception unit.

(17) The image processing device according to (16), wherein a plurality of sets of the header information and the error detection code is included in the header, the image processing device further including:

an error detection unit configured to detect, with respect to each of the sets, an error of the header information based on the error detection code that configures the same set as the header information; and
a generation unit configured to generate the image of one frame made of the pixel data included in the payload based on the header information from which an error has not been detected by the error detection unit, and

the image processing unit processes the image generated by the generation unit.

(18) The image processing device according to (16) or (17), wherein a start code indicating a start position of the packet is added to a head of the packet, and an end code indicating an end position of the packet is added to a tail end of the packet, and
the reception unit receives data from when the start code is received to when the end code is received as data of the packet.
(19) The image processing device according to (18), further including a removal unit configured to remove the start code and the end code, and to remove a padding code added to the payload of the packet in the image output device when a transmission rate of a transmission line between the image output device and the image processing device is larger than a transmission rate of pixel data of the image output by the imaging unit of the image output device.
(20) The image processing device according to (18) or (19), wherein, in the image output device, a skew code is added following the end code, and data of the packet to which at least the start code, the end code, and the skew code are added is simultaneously output using a plurality of the transmission lines,
a correction unit configured to correct a gap of receiving timing of data received by the reception unit based on the skew code is further included, and
corresponding to a plurality of the transmission lines, the same number of the reception units, the correction units, and the removal units as the number of the transmission lines are provided.
(21) The image processing device according to (20), wherein, in the image output device, among a plurality of symbols that is known information configured from arrangement of a predetermined number of bits,
the start code and the end code are generated by combining four of three kinds of the symbols, and are added to the packet,
the padding code is generated by combining four of four kinds of the symbols, and is added to the payload of the packet, and
the skew code is generated by combining two of the predetermined symbols, and is added to the packet.
(22) The image processing device according to (20) or (21), wherein, in the image output device, the start code, the end code, and the skew code are generated so as to include at least one of the same kind of the symbols.
(23) The image processing device according to any one of (16) to (22), wherein the reception unit receives the packet to which the header including identification information of pixel data included in a payload is added; and
the image processing unit generates the image by synthesizing the pixel data included in a payload to which the header including the same identification information is added.
(24) The image processing device according to any one of (16) to (23), wherein the reception unit receives the header including identification information of an area in the imaging unit where pixel data included in a payload is obtained, and
the image processing unit generates the image by synthesizing the pixel data included in a payload to which the header including the same identification information is added.
(25) An image processing method including the steps of:

receiving a packet generated in an image output device provided in the same apparatus and output from the image output device, and having a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information, the header being added to a payload including pixel data for one line configuring an image obtained by imaging by an imaging unit of the image output device; and

processing the image configured from a line made of the pixel data included in the payload of the received packet.

(26) A program for causing a computer to execute processing including the steps of:

receiving a packet generated in an image output device provided in the same apparatus and output from the image output device, and having a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and

an error detection code to be used for error detection of the header information, the header being added to a payload including pixel data for one line configuring an image obtained by imaging by an imaging unit of the image output device; and

processing the image configured from a line made of the pixel data included in the payload of the received packet.

(27) An imaging device including an image output device and an image processing device,
the image output device including:

an imaging unit;
a header generation unit configured to generate a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

a packet generation unit configured to generate a packet that includes, in a payload, pixel data for one line configuring an image obtained by imaging by the imaging unit, and into which the header is added; and
an output unit configured to output the packet generated by the packet generation unit to the image processing device, and

the image processing device including:

a reception unit configured to receive the packet; and
an image processing unit configured to process the image configured from a line made of the pixel data included in the payload of the packet received by the reception unit.

REFERENCE SIGNS LIST

| | |
|---|---|
| 1 | Transmission system |
| 11 | Image sensor |
| 12 | DSP |
| 21 | Imaging unit |
| 22 | Transmission unit |
| 31 | Reception unit |
| 32 | Image processing unit |
| 62 | Pixel to Byte conversion unit |
| 63 | Payload ECC insertion unit |
| 64 | Packet generation unit |
| 65 | Lane distribution unit |
| 72 | Header generation unit |
| 83-0 to 83-N | Signal processing unit |
| 91 | Control code insertion unit |
| 92 | 8B10B symbol encoder |
| 93 | Synchronization unit |
| 94 | Transmission unit |
| 102-0 to 102-N | Signal processing unit |
| 111 | Reception unit |
| 112 | Clock generation unit |

| | |
|---|---|
| 113 | Synchronization unit |
| 114 | Symbol synchronization unit |
| 115 | 10B8B symbol decoder |
| 116 | Skew correction unit |
| 117 | Control code removal unit |
| 122 | Lane integration unit |
| 123 | Packet separation unit |
| 124 | Payload error correction unit |
| 125 | Byte to Pixel conversion unit |
| 132 | Header error correction unit |

**Claims**

**1.** An image output device (11) comprising:

an imaging unit (21);
a header generation unit (72) configured to generate a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

a packet generation unit (64) configured to generate a packet that includes, in a payload, pixel data for one line configuring an image obtained by imaging by the imaging unit, and into which the header is added; and
an output unit (94) configured to output the packet generated by the packet generation unit to an image processing device (12);
wherein the header generation unit is configured to generate the header including a plurality of sets of the header information and the error detection code.

**2.** The image output device according to claim 1, wherein each of the first frame information, the second frame information, and the first line information is one-bit information, and
the second line information is 13-bit information.

**3.** The image output device according to claim 1, further comprising an addition unit (91) configured to add a start code indicating a start position of a packet to a head of the packet generated by the packet generation unit (64), and to add an end code indicating an end position of a packet to a tail end of the packet.

**4.** The image output device according to claim 3, wherein the addition unit (91) adds a padding code to the payload of the packet when a transmission rate of data of a transmission line between the image output device (11) and the image processing device (12) is larger than a transmission rate of the pixel data output by the imaging unit (21).

**5.** The image output device according to claim 4, wherein the addition unit (91) adds a skew code following the end code, the skew code being used in the image processing device (12) in order to secure synchronization of data of the packet transmitted through a plurality of the transmission lines, and
the output unit (94) outputs, to the image processing device, data of the packet to which at least the start code, the end code, and the skew code are added using a plurality of the transmission lines simultaneously.

**6.** The image output device according to claim 5, wherein, among a plurality of symbols that is known information configured from arrangement of a predetermined number of bits,
the addition unit (91) generates the start code and the end code by combining four of three kinds of the symbols, and adds the start code and the end code to the packet,
generates the padding code by combining four of four kinds of the symbols, and adds the padding code to the payload of the packet, and
generates the skew code by combining two of the predetermined symbols, and adds the skew code to the packet.

7. The image output device according to claim 6, wherein the addition unit (91) generates the start code, the end code, and the skew code so as to include at least one of the same kind of the symbols.

8. The image output device according to claim 5, further comprising a distribution unit (65) configured to allocate data of the packet generated by the packet generation unit to a plurality of the transmission lines,
wherein, corresponding to a plurality of the transmission lines, the same number of the addition units (91) and the output units (94) as the number of the transmission lines are provided.

9. The image output device according to claim 1, wherein the imaging unit (21) outputs a plurality of pixel data as data of pixels at the same position, and
the header generation unit (72) generates the header further including identification information of pixel data included in a payload.

10. The image output device according to claim 9, wherein the imaging unit (21) outputs a plurality of pixel data obtained by performing A/D conversion using different gains, a plurality of pixel data obtained by performing A/D conversion with different resolutions, a plurality of pixel data obtained by performing exposures in different shutter speeds, a plurality of pixel data obtained by a pixel having a vertical spectroscopic arrangement, or when pixels at a same position are made of a plurality of pixels having different sensitivities, a plurality of pixel data obtained from the respective pixels.

11. The image output device according to claim 1, wherein the header generation unit (72) generates the header further including identification information of an area in the imaging unit (21) where pixel data included in a payload is obtained.

12. An image output method, comprising the steps of:

imaging (S1) ;
generating (S11) a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

generating (S15) a packet that includes, in a payload, pixel data for one line configuring an image obtained by imaging, and into which the header is added; and
outputting (S19) the generated packet to an image processing device;
wherein during said step of generating a header, the header is generated so as to include a plurality of sets of the header information and the error detection code.

13. A program for causing a computer to execute processing including the steps of:

imaging (S1);
generating (S11) a header including

header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and
an error detection code to be used for error detection of the header information;

generating (S15) a packet that includes, in a payload, pixel data for one line configuring an image obtained by imaging, and into which the header is added; and
outputting (S19) the generated packet to an image processing device;
wherein during said step of generating a header, the header is generated so as to include a plurality of sets of the header information and the error detection code.

**14.** An image processing device (12) comprising:

a reception unit (31) configured to receive a packet generated in an image output device (11) provided in the same apparatus and output from the image output device, and having a header including header information including first frame information indicating whether pixel data included in a payload is pixel data of a head line of one frame, second frame information indicating whether pixel data included in a payload is pixel data of a terminal end line of one frame, first line information indicating whether pixel data included in a payload is data of an effective pixel, and second line information indicating a line number of a line made of pixel data included in a payload, and an error detection code to be used for error detection of the header information, the header being added to a payload including pixel data for one line configuring an image obtained by imaging by an imaging unit (21) of the image output device and the header including a plurality of sets of the header information and the error detection code; and
an image processing unit (32) configured to process the image configured from a line made of the pixel data included in the payload of the packet received by the reception unit.

## Patentansprüche

**1.** Bildausgabevorrichtung (11), umfassend:

eine Abbildungseinheit (21);
eine Dateikopferzeugungseinheit (72), die konfiguriert ist, einen Dateikopf zu erzeugen, enthaltend

Dateikopfinformationen, enthaltend erste Frame-Informationen, die anzeigen, ob Pixeldaten, die in Nutzdaten enthalten sind, Pixeldaten einer Kopfzeile eines Frames sind, zweite Frame-Informationen, die anzeigen, ob Pixeldaten, die in Nutzdaten enthalten sind, Pixeldaten einer Endgerät-Endzeile eines Frames sind, erste Zeileninformationen, die anzeigen, ob Pixeldaten, die in Nutzdaten enthalten sind, Daten eines effektiven Pixels sind, und zweite Zeileninformationen, die eine Zeilenzahl einer Zeile anzeigen, die aus Pixeldaten besteht, die in Nutzdaten enthalten sind, und
einen Fehlererfassungscode, der zur Fehlererfassung der Dateikopfinformationen verwendet werden soll;
eine Paketerzeugungseinheit (64), die konfiguriert ist, ein Paket zu erzeugen, das, in Nutzdaten, Pixeldaten für eine Zeile enthält, die ein Bild konfiguriert, das durch Abbilden durch die Abbildungseinheit erhalten wird, und in das der Dateikopf eingefügt wird; und
eine Ausgabeeinheit (94), die konfiguriert ist, das Paket, das durch die Paketerzeugungseinheit erzeugt wird, an eine Bildverarbeitungsvorrichtung (12) auszugeben;
wobei die Dateikopferzeugungseinheit konfiguriert ist, den Dateikopf zu erzeugen, der mehrere Sätze der Dateikopfinformationen und den Fehlererfassungscode enthält.

**2.** Bildausgabevorrichtung nach Anspruch 1,
wobei jede der ersten Frame-Informationen, der zweiten Frame-Informationen und der ersten Zeileninformationen Ein-Bit-Informationen sind,
und
die zweiten Zeileninformationen 13-Bit-Informationen sind.

**3.** Bildausgabevorrichtung nach Anspruch 1,
ferner umfassend eine Hinzufügungseinheit (91), die konfiguriert ist, einen Startcode, der eine Startposition eines Pakets anzeigt, zu einem Dateikopf des Pakets, das durch die Paketerzeugungseinheit (64) erzeugt wird, hinzuzufügen, und einen Endcode, der eine Endposition eines Pakets anzeigt, an einem hinteren Ende des Pakets hinzuzufügen.

**4.** Bildausgabevorrichtung nach Anspruch 3,
wobei die Hinzufügungseinheit (91) einen Padding (erzwungene Leerstellen)-Code den Nutzdaten des Pakets hinzufügt, wenn eine Übertragungsrate von Daten einer Übertragungsleitung zwischen der Bildausgabevorrichtung (11) und der Bildverarbeitungsvorrichtung (12) größer ist als eine Übertragungsrate der Pixeldatenausgabe durch die Abbildungseinheit (21).

5. Bildausgabevorrichtung nach Anspruch 4,
wobei die Hinzufügungseinheit (91) einen Skew(Schräglauf)-Code hinzufügt, der dem Endcode folgt, wobei der Skew-Code in der Bildverarbeitungsvorrichtung (12) verwendet wird, um eine Synchronisation von Daten des Pakets, das durch mehrere der Übertragungsleitungen übertragen wird, sicherzustellen, und
die Ausgabeeinheit (94) an die Bildverarbeitungsvorrichtung Daten des Pakets, welchen zumindest der Startcode, der Endcode und der Skew-Code hinzugefügt sind, unter gleichzeitiger Verwendung mehrerer der Übertragungsleitungen ausgibt.

6. Bildausgabevorrichtung nach Anspruch 5,
wobei aus mehreren Symbolen, die bekannte Informationen sind, die aus einer Anordnung einer vorbestimmten Zahl an Bits konfiguriert sind,
die Hinzufügungseinheit (91) den Startcode und den Endcode durch Kombinieren von vier aus drei Arten der Symbole erzeugt und den Startcode und den Endcode zum Paket hinzufügt,
den Padding-Code durch Kombinieren von vier aus vier Arten der Symbole erzeugt und den Padding-Code zu den Nutzdaten des Pakets hinzufügt, und
den Skew-Code durch Kombinieren von zwei der vorbestimmten Symbole erzeugt und den Skew-Code zum Paket hinzufügt.

7. Bildausgabevorrichtung nach Anspruch 6,
wobei die Hinzufügungseinheit (91) den Startcode, den Endcode und den Skew-Code erzeugt, um zumindest eines derselben Art der Symbole zu enthalten.

8. Bildausgabevorrichtung nach Anspruch 5,
ferner umfassend eine Verteilungseinheit (65), die konfiguriert ist, Daten des Pakets, das durch die Paketerzeugungseinheit erzeugt wird, mehreren der Übertragungsleitungen zuzuweisen,
wobei dieselbe Zahl der Hinzufügungseinheiten (91) und Ausgabeeinheiten (94) wie die Zahl der Übertragungsleitungen, entsprechend mehreren der Übertragungsleitungen, bereitgestellt ist.

9. Bildausgabevorrichtung nach Anspruch 1,
wobei die Abbildungseinheit (21) mehrere Pixeldaten als Daten von Pixeln an derselben Position ausgibt, und
die Dateikopferzeugungseinheit (72) den Dateikopf erzeugt, der ferner Identifizierungsinformationen von Pixeldaten enthält, die in Nutzdaten enthalten sind.

10. Bildausgabevorrichtung nach Anspruch 9,
wobei die Abbildungseinheit (21) mehrere Pixeldaten, die durch Ausführen einer A/D-Umwandlung unter Verwendung verschiedener Verstärkungen erhalten werden, mehrere Pixeldaten, die durch Ausführen einer A/D-Umwandlung mit verschiedenen Auflösungen erhalten werden, mehrere Pixeldaten, die durch Ausführen von Belichtungen bei verschiedenen Verschlussgeschwindigkeiten erhalten werden, mehrere Pixeldaten, die dadurch erhalten werden, dass ein Pixel eine vertikale spektroskopische Anordnung hat, oder wenn Pixel an einer selben Position aus mehreren Pixeln mit verschiedenen Empfindlichkeiten bestehen, mehrere Pixeldaten, die von den entsprechenden Pixeln erhalten werden, ausgibt.

11. Bildausgabevorrichtung nach Anspruch 1,
wobei die Dateikopferzeugungseinheit (72) den Dateikopf erzeugt, der ferner Identifizierungsinformationen eines Bereichs in der Abbildungseinheit (21) enthält, wo Pixeldaten, die in Nutzdaten enthalten sind, erhalten werden.

12. Bildausgabeverfahren, umfassend die Schritte:

Abbilden (S1);
Erzeugen (S11) eines Dateikopfs, enthaltend

Dateikopfinformationen, enthaltend erste Frame-Informationen, die anzeigen, ob Pixeldaten, die in Nutzdaten enthalten sind, Pixeldaten einer Kopfzeile eines Frames sind, zweite Frame-Informationen, die anzeigen, ob Pixeldaten, die in Nutzdaten enthalten sind, Pixeldaten einer Endgerät-Endzeile eines Frames sind, erste Zeileninformationen, die anzeigen, ob Pixeldaten, die in Nutzdaten enthalten sind, Daten eines effektiven Pixels sind, und zweite Zeileninformationen, die eine Zeilenzahl einer Zeile anzeigen, die aus Pixeldaten besteht, die in Nutzdaten enthalten sind, und
einen Fehlererfassungscode, der zur Fehlererfassung der Dateikopfinformationen verwendet werden soll;

Erzeugen (S15) eines Pakets, das, in Nutzdaten, Pixeldaten für eine Zeile enthält, die ein Bild konfiguriert, das durch Abbilden erhalten wird, und in das der Dateikopf eingefügt ist; und
Ausgeben (S19) des erzeugten Pakets an eine Bildverarbeitungsvorrichtung;
wobei während des Schritts des Erzeugens eines Dateikopfs der Dateikopf erzeugt wird, um mehrere Sätze der Dateikopfinformationen und den Fehlererfassungscode zu enthalten.

**13.** Programm zum Veranlassen eines Rechners eine Verarbeitung auszuführen, enthaltend die Schritte:

Abbilden (S1);
Erzeugen (S11) eines Dateikopfs, enthaltend

Dateikopfinformationen, enthaltend erste Frame-Informationen, die anzeigen, ob Pixeldaten, die in Nutzdaten enthalten sind, Pixeldaten einer Kopfzeile eines Frames sind, zweite Frame-Informationen, die anzeigen, ob Pixeldaten, die in Nutzdaten enthalten sind, Pixeldaten einer Endgerät-Endzeile eines Frames sind, erste Zeileninformationen, die anzeigen, ob Pixeldaten, die in Nutzdaten enthalten sind, Daten eines effektiven Pixels sind, und zweite Zeileninformationen, die eine Zeilenzahl einer Zeile anzeigen, die aus Pixeldaten besteht, die in Nutzdaten enthalten sind, und
einen Fehlererfassungscode, der zur Fehlererfassung der Dateikopfinformationen verwendet werden soll;

Erzeugen (S15) eines Pakets, das, in Nutzdaten, Pixeldaten für eine Zeile enthält, die ein Bild konfiguriert, das durch Abbilden erhalten wird, und in das der Dateikopf eingefügt ist; und
Ausgeben (S19) des erzeugten Pakets an eine Bildverarbeitungsvorrichtung;
wobei während des Schritts des Erzeugens eines Dateikopfs der Dateikopf erzeugt wird, um mehrere Sätze der Dateikopfinformationen und den Fehlererfassungscode zu enthalten.

**14.** Bildverarbeitungsvorrichtung (12), umfassend:

eine Empfangseinheit (31), die konfiguriert ist, ein Paket zu empfangen, das in einer Bildausgabevorrichtung (11) erzeugt wird, die in demselben Apparat bereitgestellt ist, und von der Bildausgabevorrichtung ausgegeben wird, und das einen Dateikopf hat, der Dateikopfinformationen enthält, enthaltend erste Frame-Informationen, die anzeigen, ob Pixeldaten, die in Nutzdaten enthalten sind, Pixeldaten einer Kopfzeile eines Frames sind, zweite Frame-Informationen, die anzeigen, ob Pixeldaten, die in Nutzdaten enthalten sind, Pixeldaten einer Endgerät-Endzeile eines Frames sind, erste Zeileninformationen, die anzeigen, ob Pixeldaten, die in Nutzdaten enthalten sind, Daten eines effektiven Pixels sind, und zweite Zeileninformationen, die eine Zeilenzahl einer Zeile anzeigen, die aus Pixeldaten besteht, die in Nutzdaten enthalten sind, und einen Fehlererfassungscode, der zur Fehlererfassung der Dateikopfinformationen verwendet werden soll, wobei der Dateikopf zu Nutdaten hinzugefügt ist, die Pixeldaten für eine Zeile enthalten, die ein Bild konfiguriert, das durch Abbilden durch eine Abbildungseinheit (21) der Bildausgabevorrichtung erhalten wird, und der Dateikopf mehrere Sätze der Dateikopfinformationen und den Fehlererfassungscode enthält; und
eine Bildverarbeitungseinheit (32), die konfiguriert ist, das Bild zu verarbeiten, das aus einer Zeile konfiguriert ist, die aus den Pixeldaten besteht, die in den Nutzdaten des Pakets enthalten sind, das von der Empfangseinheit empfangen wird.

## Revendications

**1.** Dispositif de sortie d'image (11) comprenant :

une unité d'imagerie (21) ;
une unité de génération d'en-tête (72) configurée pour générer un en-tête comportant

des informations d'en-tête comportant des premières informations de trame indiquant si des données de pixel incluses dans une charge utile sont des données de pixel d'une première ligne d'une trame, des secondes informations de trame indiquant si des données de pixel incluses dans une charge utile sont des données de pixel d'une ligne d'extrémité terminale d'une trame, des premières informations de ligne indiquant si des données de pixel incluses dans une charge utile sont des données d'un pixel effectif et des secondes informations de ligne indiquant un numéro de ligne d'une ligne composée de données de pixel incluses dans une charge utile et

un code de détection d'erreur qui doit être utilisé pour détecter une erreur des informations d'en-tête ;

une unité de génération de paquet (64) configurée pour générer un paquet qui comprend, dans une charge utile, des données de pixel pour une ligne configurant une image obtenue par imagerie par l'unité d'imagerie et dans laquelle l'en-tête est ajouté ; et
une unité de sortie (94) configurée pour transmettre le paquet généré par l'unité de génération de paquet à un dispositif de traitement d'image (12) ;
dans lequel l'unité de génération de paquet est configurée pour générer l'en-tête comprenant une pluralité d'ensembles d'informations d'en-tête et le code de détection d'erreur.

**2.** Dispositif de sortie d'image selon la revendication 1,
dans lequel les premières informations de trame, les secondes informations de trame et les premières informations de ligne sont chacune des informations à un bit et
les secondes informations de ligne sont des informations à 13 bits.

**3.** Dispositif de sortie d'image selon la revendication 1,
comprenant en outre une unité d'ajout (91) configurée pour ajouter un code de début indiquant une position de début d'un paquet à un en-tête du paquet généré par l'unité de génération de paquet (64) et pour ajouter un code de fin indiquant une position de fin d'un paquet à une extrémité de queue du paquet.

**4.** Dispositif de sortie d'image selon la revendication 3,
dans lequel l'unité d'ajout (91) ajoute un code de remplissage à la charge utile du paquet lorsqu'une vitesse de transmission de données d'une ligne de transmission entre le dispositif de sortie d'image (11) et le dispositif de traitement d'image (12) est supérieure à une vitesse de transmission de données de pixel sorties par l'unité d'imagerie (21).

**5.** Dispositif de sortie d'image selon la revendication 4,
dans lequel l'unité d'ajout (91) ajoute un code de décalage après le code de fin, le code de décalage étant utilisé dans le dispositif de traitement d'image (12) afin de garantir une synchronisation de données du paquet transmis au moyen d'une pluralité de lignes de transmission et
l'unité de sortie (94) transmet, au dispositif de traitement d'image, des données du paquet auquel au moins le code de début, le code de fin et le code de décalage sont ajoutés en même temps à l'aide d'une pluralité de lignes de transmission.

**6.** Dispositif de sortie d'image selon la revendication 5,
dans lequel, parmi une pluralité de symboles qui sont des informations connues configurées à partir d'un agencement d'un nombre prédéterminé de bits,
l'unité d'ajout (91) génère le code de début et le code de fin en combinant quatre symboles des trois types de symboles et ajoute le code de début et le code de fin au paquet,
génère le code de remplissage en combinant quatre symboles des quatre types de symboles et ajoute le code de remplissage à la charge utile du paquet et
génère le code de décalage en combinant deux des symboles prédéterminés et ajoute le code de décalage au paquet.

**7.** Dispositif de sortie d'image selon la revendication 6,
dans lequel l'unité d'ajout (91) génère le code de début, le code de fin et le code de décalage de sorte à inclure au moins un symbole du même type de symboles.

**8.** Dispositif de sortie d'image selon la revendication 5,
comprenant en outre une unité de distribution (65) configurée pour attribuer des données du paquet généré par l'unité de génération de paquet à une pluralité de lignes de transmission,
dans lequel, correspondant à une pluralité de lignes de transmission, le même nombre d'unités d'ajout (91) et d'unités de sortie (94) que le nombre de lignes de transmission est fourni.

**9.** Dispositif de sortie d'image selon la revendication 1,
dans lequel l'unité d'imagerie (21) transmet une pluralité de données de pixel en tant que données de pixels à la même position et
l'unité de génération d'en-tête (72) génère l'en-tête comportant des informations d'identification de données de pixel incluses dans une charge utile.

**10.** Dispositif de sortie d'image selon la revendication 9,
dans lequel l'unité d'imagerie (21) transmet une pluralité de données de pixel obtenues en effectuant une conversion A/N à l'aide de différents gains, une pluralité de données de pixel obtenues en effectuant une conversion A/N avec différentes résolutions, une pluralité de données de pixel obtenues en réalisant des expositions à différentes vitesses d'obturation, une pluralité de données de pixel obtenues par un pixel ayant un agencement spectroscopique vertical ou lorsque des pixels à une même position sont composés d'une pluralité de pixels ayant des sensibilités différentes, une pluralité de données de pixel obtenues des pixels respectifs.

**11.** Dispositif de sortie d'image selon la revendication 1,
dans lequel l'unité de génération d'en-tête (72) génère l'en-tête comportant en outre des informations d'identification d'une zone dans l'unité d'imagerie (21) où des données de pixels incluses dans une charge utile sont obtenues.

**12.** Procédé de sortie d'image, comprenant les étapes consistant :

à imager (S1) ;
à générer (S11) un en-tête comportant

des informations d'en-tête comportant des premières informations de trame indiquant si des données de pixel incluses dans une charge utile sont des données de pixel d'une première ligne d'une trame, des secondes informations de trame indiquant si des données de pixel incluses dans une charge utile sont des données de pixel d'une ligne d'extrémité terminale d'une trame, des premières informations de ligne indiquant si des données de pixel incluses dans une charge utile sont des données d'un pixel effectif et des secondes informations de ligne indiquant un numéro de ligne d'une ligne composée de données de pixel incluses dans une charge utile et
un code de détection d'erreur qui doit être utilisé pour détecter une erreur des informations d'en-tête ;

à générer (S15) un paquet qui comprend, dans une charge utile, des données de pixel pour une ligne configurant une image obtenue par imagerie et dans laquelle l'en-tête est ajouté ; et
à transmettre (S19) le paquet généré à un dispositif de traitement d'image ;
dans lequel pendant ladite étape de génération d'un en-tête, l'en-tête est généré de sorte à comprendre une pluralité d'ensembles d'informations d'en-tête et le code de détection d'erreur.

**13.** Programme pour contraindre un ordinateur à exécuter un traitement comprenant les étapes consistant :

à imager (S1) ;
à générer (S11) un en-tête comportant

des informations d'en-tête comportant des premières informations de trame indiquant si des données de pixel incluses dans une charge utile sont des données de pixel d'une première ligne d'une trame, des secondes informations de trame indiquant si des données de pixel incluses dans une charge utile sont des données de pixel d'une ligne d'extrémité terminale d'une trame, des premières informations de ligne indiquant si des données de pixel incluses dans une charge utile sont des données d'un pixel effectif et des secondes informations de ligne indiquant un numéro de ligne d'une ligne composée de données de pixel incluses dans une charge utile et
un code de détection d'erreur qui doit être utilisé pour détecter une erreur des informations d'en-tête ;

à générer (S15) un paquet qui comprend, dans une charge utile, des données de pixel pour une ligne configurant une image obtenue par imagerie et dans laquelle l'en-tête est ajouté ; et
à transmettre (S19) le paquet généré à un dispositif de traitement d'image ;
dans lequel pendant ladite étape de génération d'un en-tête, l'en-tête est généré de sorte à comprendre une pluralité d'ensembles d'informations d'en-tête et le code de détection d'erreur.

**14.** Dispositif de traitement d'image (12) comprenant :

une unité de réception (31) configurée pour recevoir un paquet généré dans un dispositif de sortie d'image (11) disposé dans le même appareil et transmis à partir du dispositif de sortie d'image et ayant un en-tête comportant des informations d'en-tête comportant des premières informations de trame indiquant si des données de pixel incluses dans une charge utile sont des données de pixel d'une première ligne d'une trame, des secondes informations de trame indiquant si des données de pixel incluses dans une charge utile sont des données de pixel d'une ligne d'extrémité terminale d'une trame, des premières informations de ligne indiquant si des données de pixel incluses dans une charge utile sont des données d'un pixel effectif et des secondes informations de ligne indiquant un numéro de ligne d'une ligne composée de données de pixel incluses dans une charge utile et un code de détection d'erreur qui doit être utilisé pour détecter une erreur des informations d'en-tête, l'en-tête étant ajouté à une charge utile comportant des données de pixel pour une ligne configurant une image obtenue par imagerie par une unité d'imagerie (21) du dispositif de sortie d'image et l'en-tête comprenant une pluralité d'ensembles d'informations d'en-tête et le code de détection d'erreur ; et
une unité de traitement d'image (32) configurée pour traiter l'image configurée à partir d'une ligne composée des données de pixel incluses dans la charge utile du paquet reçu par l'unité de réception.

FIG. 1

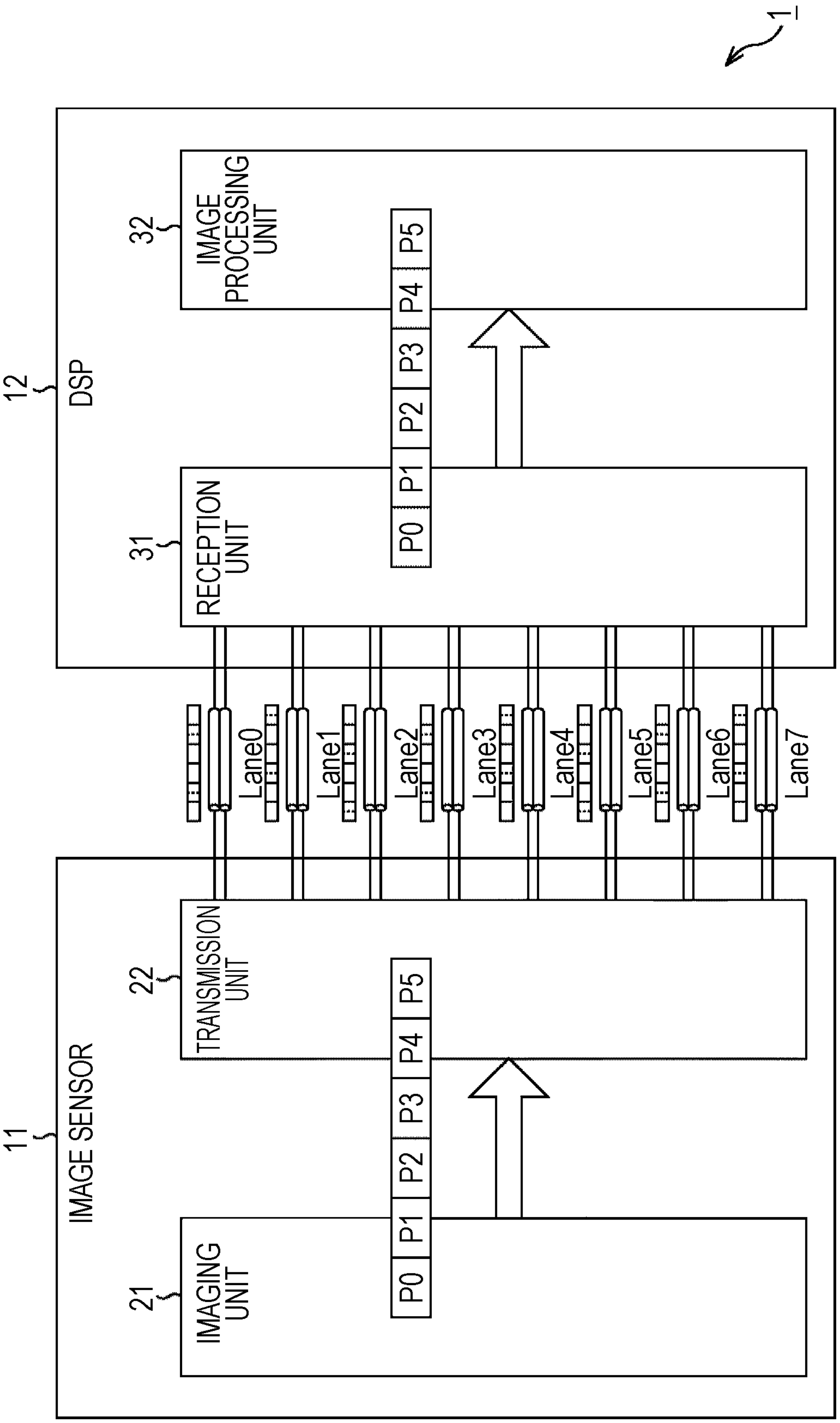
1
12
DSP
31
RECEPTION UNIT
32
IMAGE PROCESSING UNIT
P0
P1
P2
P3
P4
P5
Lane0
Lane1
Lane2
Lane3
Lane4
Lane5
Lane6
Lane7
11
IMAGE SENSOR
21
IMAGING UNIT
22
TRANSMISSION UNIT
P0
P1
P2
P3
P4
P5

FIG. 2

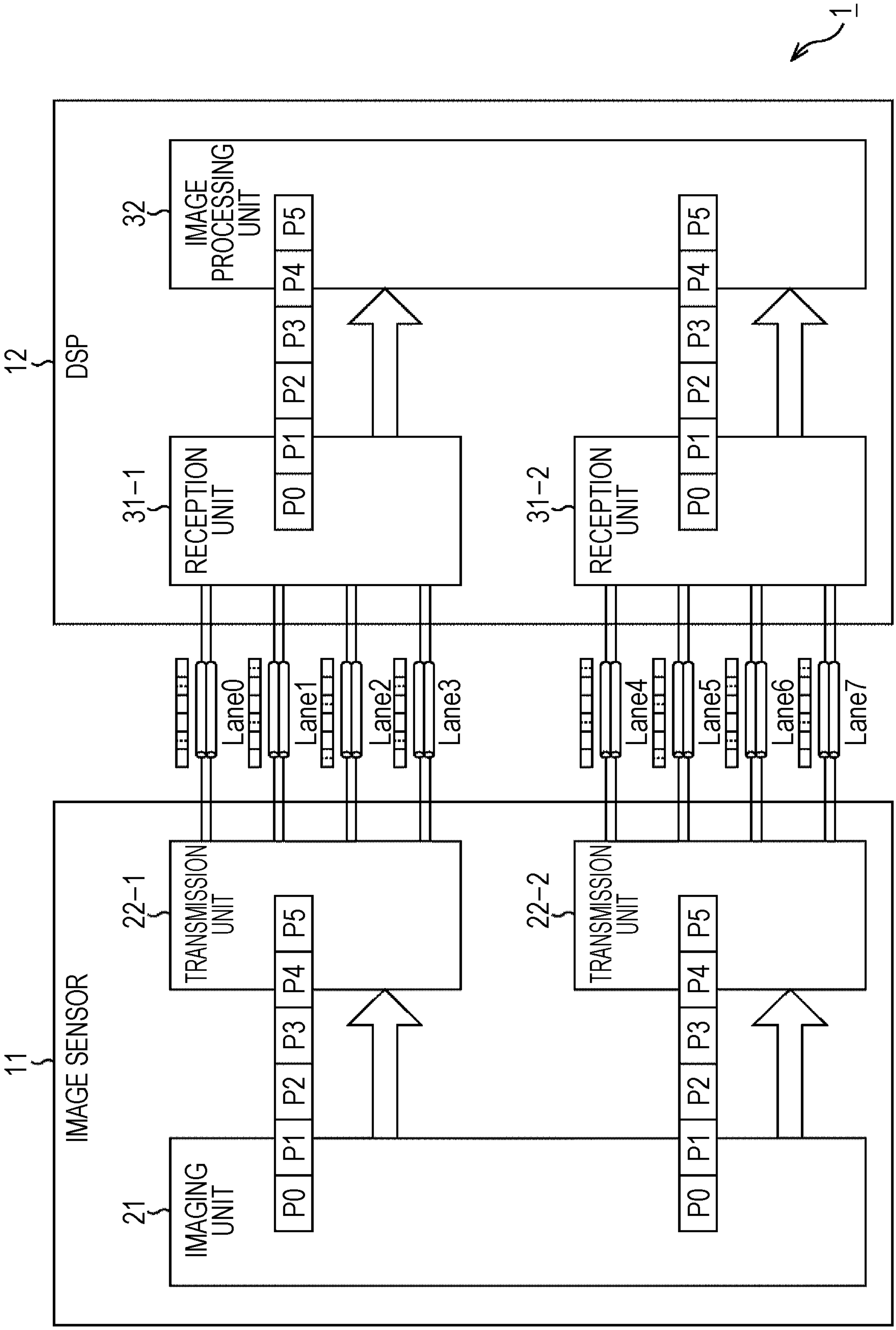
1
12
DSP
32
IMAGE PROCESSING UNIT
31-1
RECEPTION UNIT
31-2
RECEPTION UNIT
P0
P1
P2
P3
P4
P5
Lane0
Lane1
Lane2
Lane3
Lane4
Lane5
Lane6
Lane7
11
IMAGE SENSOR
22-1
TRANSMISSION UNIT
22-2
TRANSMISSION UNIT
21
IMAGING UNIT

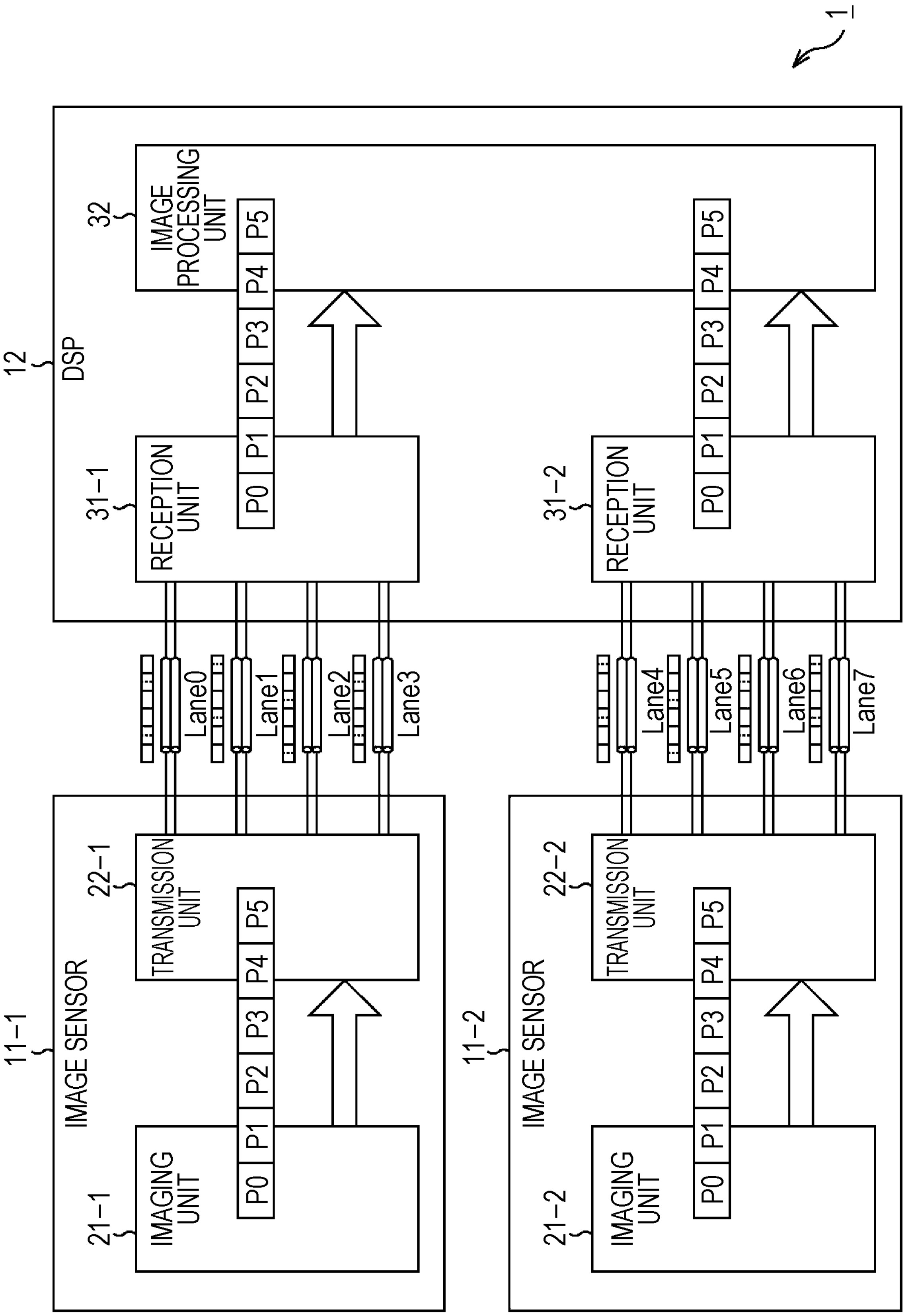
1
12
DSP
32
IMAGE PROCESSING UNIT
31-1
RECEPTION UNIT
31-2
RECEPTION UNIT
P0
P1
P2
P3
P4
P5
Lane0
Lane1
Lane2
Lane3
Lane4
Lane5
Lane6
Lane7
11-1
IMAGE SENSOR
11-2
IMAGE SENSOR
21-1
IMAGING UNIT
22-1
TRANSMISSION UNIT
21-2
IMAGING UNIT
22-2
TRANSMISSION UNIT

FIG. 3

FIG. 4

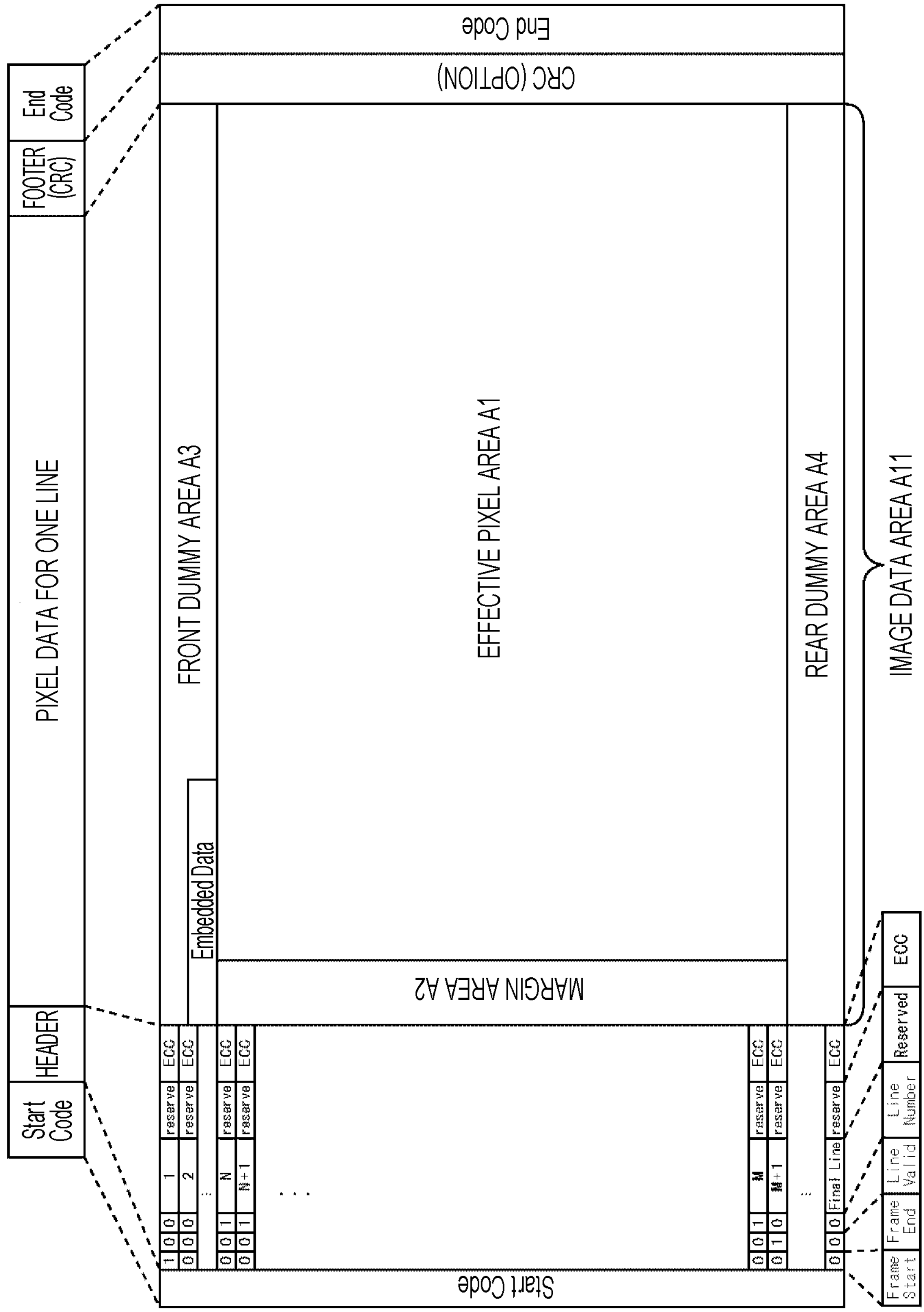
Start Code
HEADER
PIXEL DATA FOR ONE LINE
FOOTER (CRC)
End Code
Start Code
End Code
CRC (OPTION)
FRONT DUMMY AREA A3
Embedded Data
EFFECTIVE PIXEL AREA A1
MARGIN AREA A2
REAR DUMMY AREA A4
IMAGE DATA AREA A11
reserve
ECC
Final Line
Frame Start
Frame End
Line Valid
Line Number
Reserved
ECC

FIG. 5

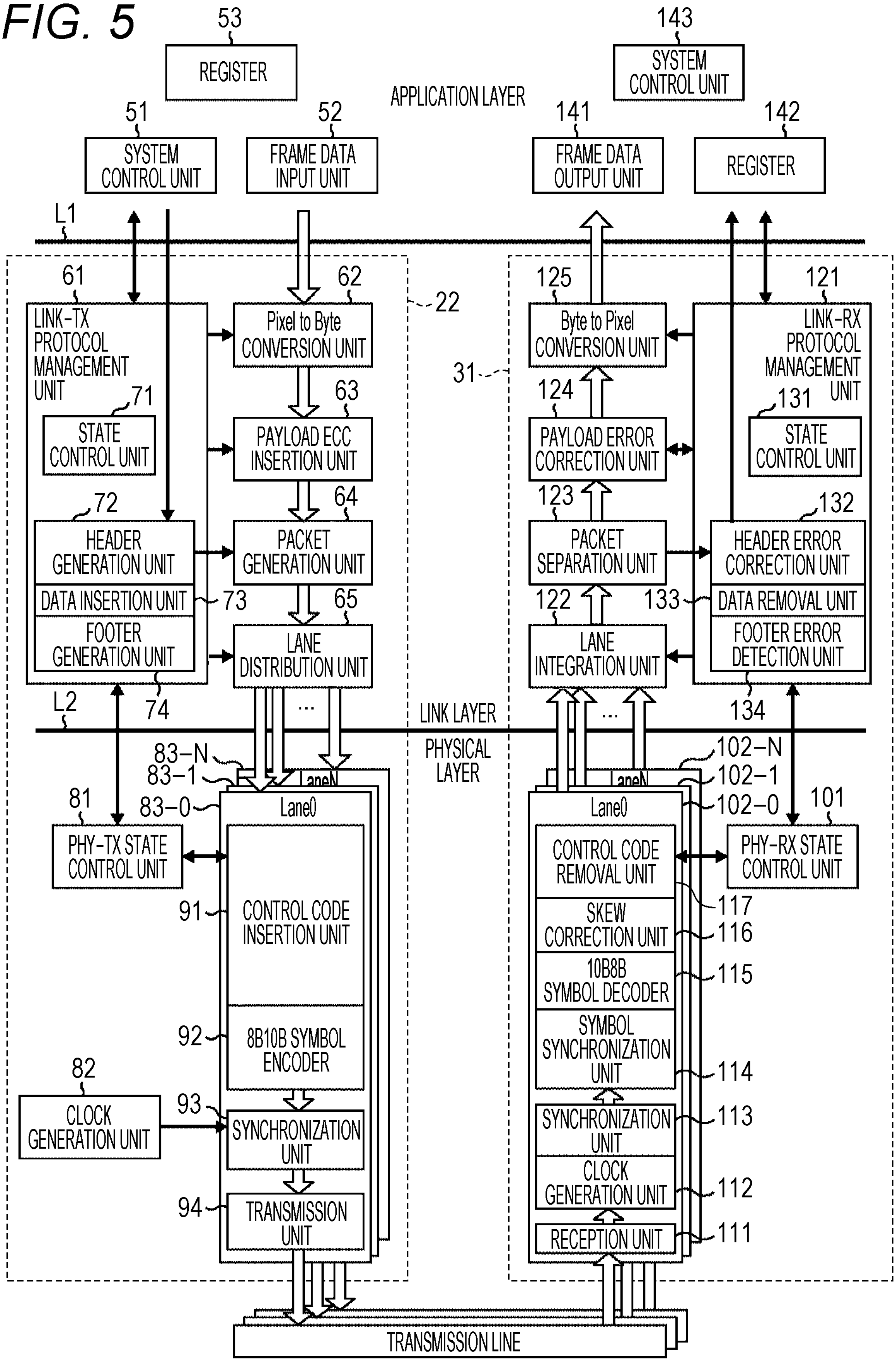
53
REGISTER
APPLICATION LAYER
143
SYSTEM CONTROL UNIT
51
SYSTEM CONTROL UNIT
52
FRAME DATA INPUT UNIT
141
FRAME DATA OUTPUT UNIT
142
REGISTER
L1
61
LINK-TX PROTOCOL MANAGEMENT UNIT
71
STATE CONTROL UNIT
62
Pixel to Byte CONVERSION UNIT
22
63
PAYLOAD ECC INSERTION UNIT
64
72
HEADER GENERATION UNIT
PACKET GENERATION UNIT
DATA INSERTION UNIT
73
65
FOOTER GENERATION UNIT
LANE DISTRIBUTION UNIT
74
L2
125
Byte to Pixel CONVERSION UNIT
121
LINK-RX PROTOCOL MANAGEMENT UNIT
31
124
PAYLOAD ERROR CORRECTION UNIT
131
STATE CONTROL UNIT
123
PACKET SEPARATION UNIT
132
HEADER ERROR CORRECTION UNIT
122
133
DATA REMOVAL UNIT
LANE INTEGRATION UNIT
FOOTER ERROR DETECTION UNIT
134
LINK LAYER
PHYSICAL LAYER
83-N
83-1
83-0
LaneN
Lane0
81
PHY-TX STATE CONTROL UNIT
91
CONTROL CODE INSERTION UNIT
92
8B10B SYMBOL ENCODER
82
CLOCK GENERATION UNIT
93
SYNCHRONIZATION UNIT
94
TRANSMISSION UNIT
102-N
102-1
102-0
101
PHY-RX STATE CONTROL UNIT
CONTROL CODE REMOVAL UNIT
117
SKEW CORRECTION UNIT
116
10B8B SYMBOL DECODER
115
SYMBOL SYNCHRONIZATION UNIT
114
SYNCHRONIZATION UNIT
113
CLOCK GENERATION UNIT
112
RECEPTION UNIT
111
TRANSMISSION LINE

FIG. 6

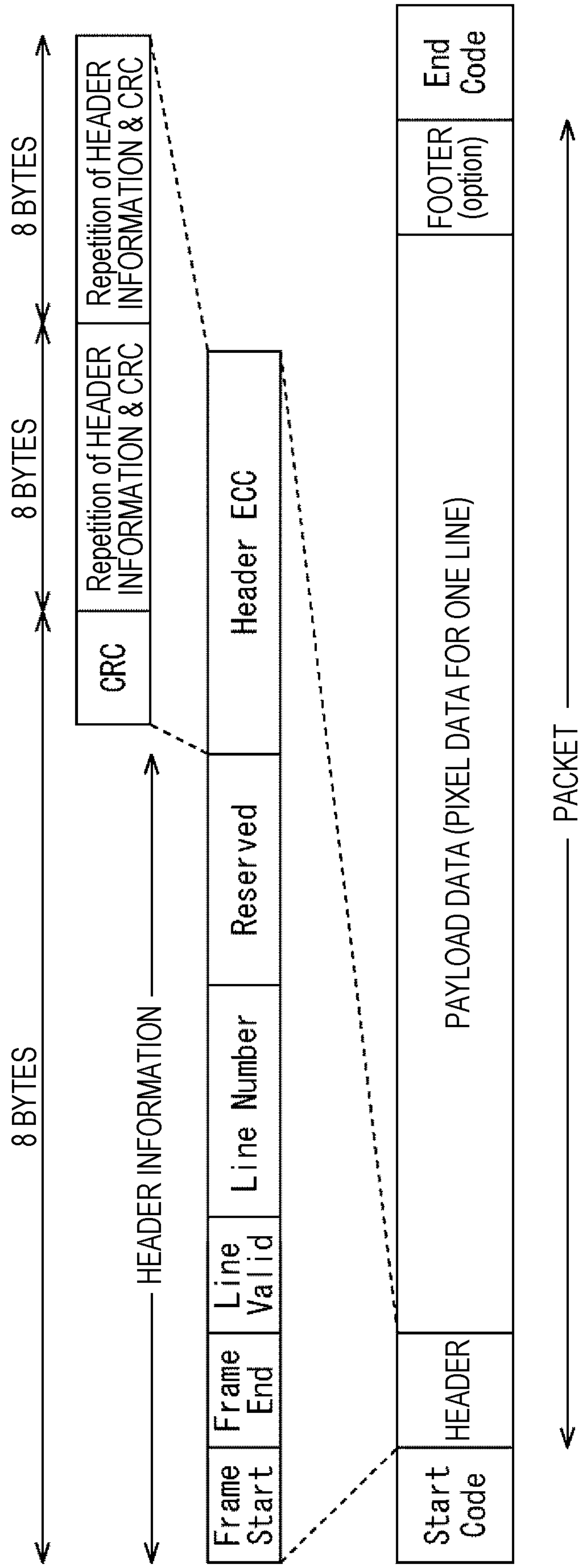
8 BYTES
8 BYTES
8 BYTES
CRC
Repetition of HEADER INFORMATION & CRC
Repetition of HEADER INFORMATION & CRC
HEADER INFORMATION
Frame Start
Frame End
Line Valid
Line Number
Reserved
Header ECC
Start Code
HEADER
PAYLOAD DATA (PIXEL DATA FOR ONE LINE)
FOOTER (option)
End Code
PACKET

FIG. 7

| LARGE ITEM | SMALL ITEM | AMOUNT OF INFORMATION | CONTENT |
|---|---|---|---|
| FRAME INFORMATION | Frame Start | 1bit | INDICATES FRAME HEAD (EX: FIRST LINE) |
| | Frame End | 1bit | INDICATES FRAME TERMINAL END (EX: LINE BEFORE REAR DUMMY) |
| LINE INFORMATION | Line Valid | 1bit | INDICATES VALIDITY/INVALIDITY OF LINE |
| | Line Number | 13bit | INDICATES LINE NUMBER |
| OTHERS | Reserved | 32bit | SECURED FOR FUTURE EXTENSIBILITY |
| | Harder ECC | 18byte | ECC OF HEADER INFORMATION |

FIG. 8

| Byte | Bit | Contents |
|---|---|---|
| H7 | 63 | Frame Start |
| | 62 | Frame End |
| | 61 | Line Valid |
| | 60 | Line Number [12] |
| | 59 | Line Number [11] |
| | 58 | Line Number [10] |
| | 57 | Line Number [9] |
| | 56 | Line Number [8] |
| H6 | 55 | Line Number [7] |
| | 54 | Line Number [6] |
| | 53 | Line Number [5] |
| | 52 | Line Number [4] |
| | 51 | Line Number [3] |
| | 50 | Line Number [2] |
| | 49 | Line Number [1] |
| | 48 | Line Number [0] |

| Byte | Bit | Contents |
|---|---|---|
| H5 | 47 | Reserved [31] |
| | 46 | Reserved [30] |
| | 45 | Reserved [29] |
| | 44 | Reserved [28] |
| | 43 | Reserved [27] |
| | 42 | Reserved [26] |
| | 41 | Reserved [25] |
| | 40 | Reserved [24] |
| H4 | 39 | Reserved [23] |
| | 38 | Reserved [22] |
| | 37 | Reserved [21] |
| | 36 | Reserved [20] |
| | 35 | Reserved [19] |
| | 34 | Reserved [18] |
| | 33 | Reserved [17] |
| | 32 | Reserved [16] |

| Byte | Bit | Contents |
|---|---|---|
| H3 | 31 | Reserved [15] |
| | 30 | Reserved [14] |
| | 29 | Reserved [13] |
| | 28 | Reserved [12] |
| | 27 | Reserved [11] |
| | 26 | Reserved [10] |
| | 25 | Reserved [9] |
| | 24 | Reserved [8] |
| H2 | 23 | Reserved [7] |
| | 22 | Reserved [6] |
| | 21 | Reserved [5] |
| | 20 | Reserved [4] |
| | 19 | Reserved [3] |
| | 18 | Reserved [2] |
| | 17 | Reserved [1] |
| | 16 | Reserved [0] |

| Byte | Bit | Contents | |
|---|---|---|---|
| H1 | 15 | CRC [15] | X^15 |
| | 14 | CRC [14] | X^14 |
| | 13 | CRC [13] | X^13 |
| | 12 | CRC [12] | X^12 |
| | 11 | CRC [11] | X^11 |
| | 10 | CRC [10] | X^10 |
| | 9 | CRC [9] | X^9 |
| | 8 | CRC [8] | X^8 |
| H0 | 7 | CRC [7] | X^7 |
| | 6 | CRC [6] | X^6 |
| | 5 | CRC [5] | X^5 |
| | 4 | CRC [4] | X^4 |
| | 3 | CRC [3] | X^3 |
| | 2 | CRC [2] | X^2 |
| | 1 | CRC [1] | X^1 |
| | 0 | CRC [0] | X^0 |

*FIG. 9*

| Pixel | Bit |
|---|---|
| Pixel N | Data[0] |
| | Data[1] |
| | Data[2] |
| | Data[3] |
| | Data[4] |
| | Data[5] |
| | Data[6] |
| | Data[7] |

| Byte | Bit |
|---|---|
| Byte N | Data[0] |
| | Data[1] |
| | Data[2] |
| | Data[3] |
| | Data[4] |
| | Data[5] |
| | Data[6] |
| | Data[7] |

# FIG. 10

| Pixel | Bit |
|---|---|
| Pixel N | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| Pixel N+1 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| Pixel N+2 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| Pixel N+3 | Data[0] |
| | Data[1] |
| | Data[2] |
| | Data[3] |
| | Data[4] |
| | Data[5] |
| | Data[6] |
| | Data[7] |
| | Data[8] |
| | Data[9] |

| Byte | Bit | |
|---|---|---|
| Byte 1.25*N | Data[2] | Pixel N |
| | Data[3] | |
| | Data[4] | |
| | Data[5] | |
| | Data[6] | |
| | Data[7] | |
| | Data[8] | |
| | Data[9] | |
| Byte 1.25*N+1 | Data[2] | Pixel N+1 |
| | Data[3] | |
| | Data[4] | |
| | Data[5] | |
| | Data[6] | |
| | Data[7] | |
| | Data[8] | |
| | Data[9] | |
| Byte 1.25*N+2 | Data[2] | Pixel N+2 |
| | Data[3] | |
| | Data[4] | |
| | Data[5] | |
| | Data[6] | |
| | Data[7] | |
| | Data[8] | |
| | Data[9] | |
| Byte 1.25*N+3 | Data[2] | Pixel N+3 |
| | Data[3] | |
| | Data[4] | |
| | Data[5] | |
| | Data[6] | |
| | Data[7] | |
| | Data[8] | |
| | Data[9] | |
| Byte 1.25*N+4 | Data[0] | Pixel N |
| | Data[1] | |
| | Data[0] | Pixel N+1 |
| | Data[1] | |
| | Data[0] | Pixel N+2 |
| | Data[1] | |
| | Data[0] | Pixel N+3 |
| | Data[1] | |

# FIG. 11

| Pixel | Bit |
|---|---|
| Pixel N | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| Pixel N+1 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |

⇨

| Byte | Bit | |
|---|---|---|
| Byte 1.5*N | Data[4] | Pixel N |
| | Data[5] | |
| | Data[6] | |
| | Data[7] | |
| | Data[8] | |
| | Data[9] | |
| | Data[10] | |
| | Data[11] | |
| Byte 1.5*N+1 | Data[4] | Pixel N+1 |
| | Data[5] | |
| | Data[6] | |
| | Data[7] | |
| | Data[8] | |
| | Data[9] | |
| | Data[10] | |
| | Data[11] | |
| Byte 1.5*N+2 | Data[0] | Pixel N |
| | Data[1] | |
| | Data[2] | |
| | Data[3] | |
| | Data[0] | Pixel N+1 |
| | Data[1] | |
| | Data[2] | |
| | Data[3] | |

# FIG. 12

| Pixel | Bit |
|---|---|
| Pixel N | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| | Data[12] |
| | Data[13] |
| Pixel N+1 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| | Data[12] |
| | Data[13] |
| Pixel N+2 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| | Data[12] |
| | Data[13] |
| Pixel N+3 | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| | Data[12] |
| | Data[13] |

→

| Byte | Bit | |
|---|---|---|
| Byte 1.75*N | Data[6] | Pixel N |
| | Data[7] | |
| | Data[8] | |
| | Data[9] | |
| | Data[10] | |
| | Data[11] | |
| | Data[12] | |
| | Data[13] | |
| Byte 1.75*N+1 | Data[6] | Pixel N+1 |
| | Data[7] | |
| | Data[8] | |
| | Data[9] | |
| | Data[10] | |
| | Data[11] | |
| | Data[12] | |
| | Data[13] | |
| Byte 1.75*N+2 | Data[6] | Pixel N+2 |
| | Data[7] | |
| | Data[8] | |
| | Data[9] | |
| | Data[10] | |
| | Data[11] | |
| | Data[12] | |
| | Data[13] | |
| Byte 1.75*N+3 | Data[6] | Pixel N+3 |
| | Data[7] | |
| | Data[8] | |
| | Data[9] | |
| | Data[10] | |
| | Data[11] | |
| | Data[12] | |
| | Data[13] | |
| Byte 1.75*N+4 | Data[0] | Pixel N |
| | Data[1] | |
| | Data[2] | |
| | Data[3] | |
| | Data[4] | |
| | Data[5] | |
| | Data[0] | Pixel N+1 |
| | Data[1] | |
| Byte 1.75*N+5 | Data[2] | |
| | Data[3] | |
| | Data[4] | |
| | Data[5] | |
| | Data[0] | Pixel N+2 |
| | Data[1] | |
| | Data[2] | |
| | Data[3] | |
| Byte 1.75*N+6 | Data[4] | |
| | Data[5] | |
| | Data[0] | Pixel N+3 |
| | Data[1] | |
| | Data[2] | |
| | Data[3] | |
| | Data[4] | |
| | Data[5] | |

FIG. 13

| Pixel | Bit |
|---|---|
| Pixel N | Data[0] |
| | Data[1] |
| | Data[2] |
| | Data[3] |
| | Data[4] |
| | Data[5] |
| | Data[6] |
| | Data[7] |
| | Data[8] |
| | Data[9] |
| | Data[10] |
| | Data[11] |
| | Data[12] |
| | Data[13] |
| | Data[14] |
| | Data[15] |

| Byte | Bit |
|---|---|
| Byte 2*N | Data[0] |
| | Data[1] |
| | Data[2] |
| | Data[3] |
| | Data[4] |
| | Data[5] |
| | Data[6] |
| | Data[7] |
| Byte 2*N+1 | Data[8] |
| | Data[9] |
| | Data[10] |
| | Data[11] |
| | Data[12] |
| | Data[13] |
| | Data[14] |
| | Data[15] |

FIG. 14

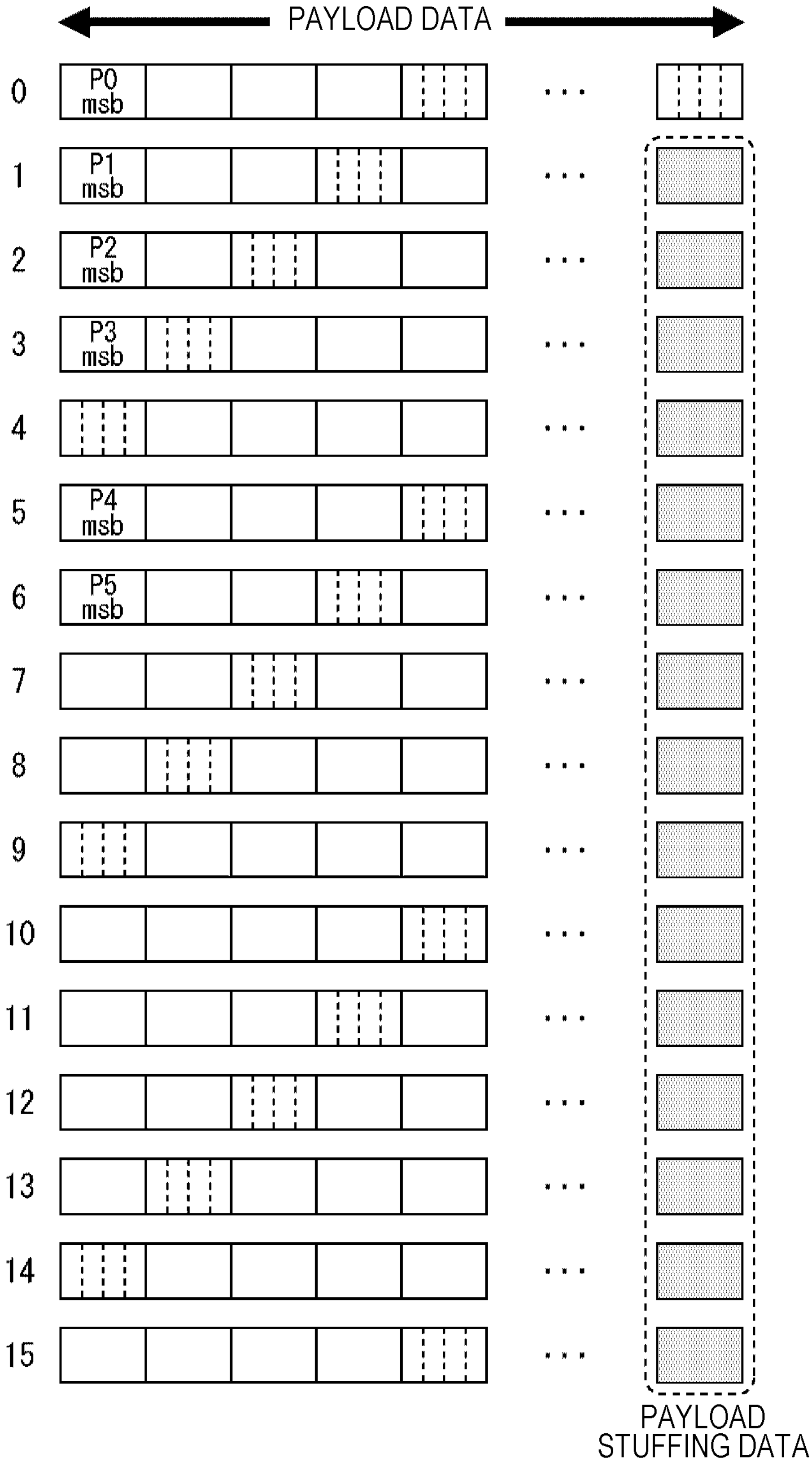
PAYLOAD DATA
0
P0
msb
1
P1
msb
2
P2
msb
3
P3
msb
4
5
P4
msb
6
P5
msb
7
8
9
10
11
12
13
14
15
PAYLOAD
STUFFING DATA

FIG. 15

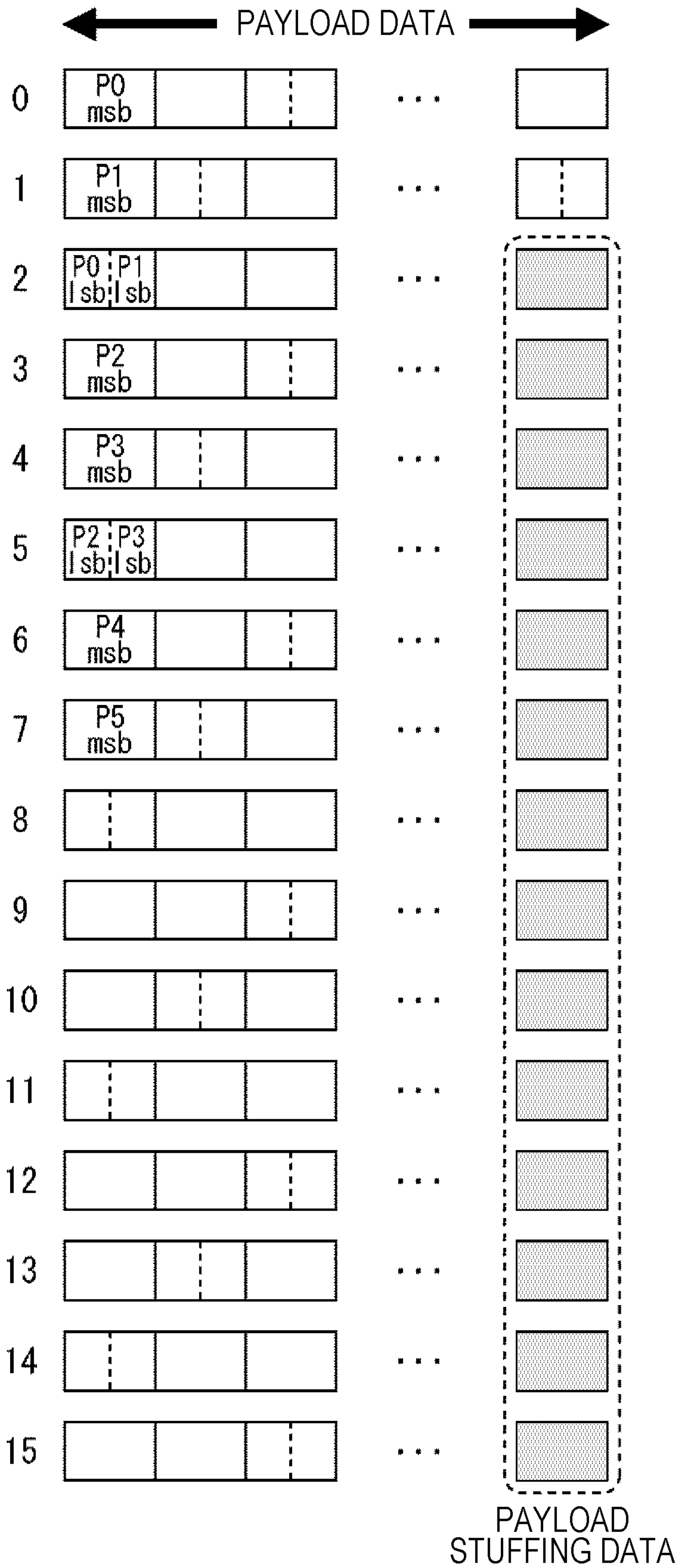
PAYLOAD DATA
0
P0 msb
1
P1 msb
2
P0 lsb
P1 lsb
3
P2 msb
4
P3 msb
5
P2 lsb
P3 lsb
6
P4 msb
7
P5 msb
8
9
10
11
12
13
14
15
...
PAYLOAD STUFFING DATA

FIG. 16

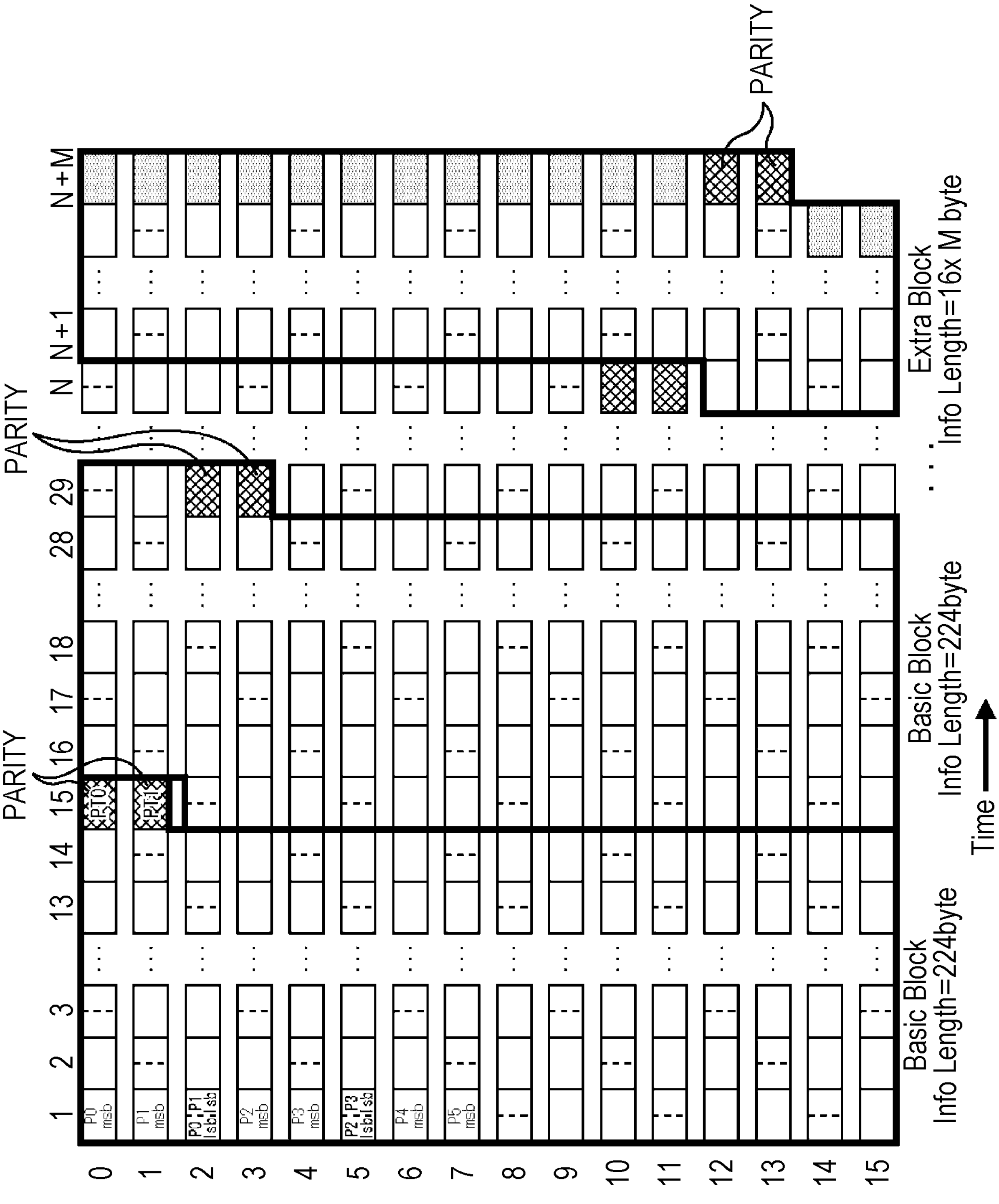
PARITY
PARITY
PARITY
1
2
3
13
14
15
16
17
18
28
29
N
N+1
N+M
0
1
2
3
4
5
6
7
8
9
10
11
12
13
14
15
P0 msb
P1 msb
P0 lsb P1 lsb
P2 msb
P3 msb
P2 lsb P3 lsb
P4 msb
P5 msb
PT0
PT1
Basic Block
Info Length=224byte
Basic Block
Info Length=224byte
Extra Block
Info Length=16x M byte
Time

FIG. 17

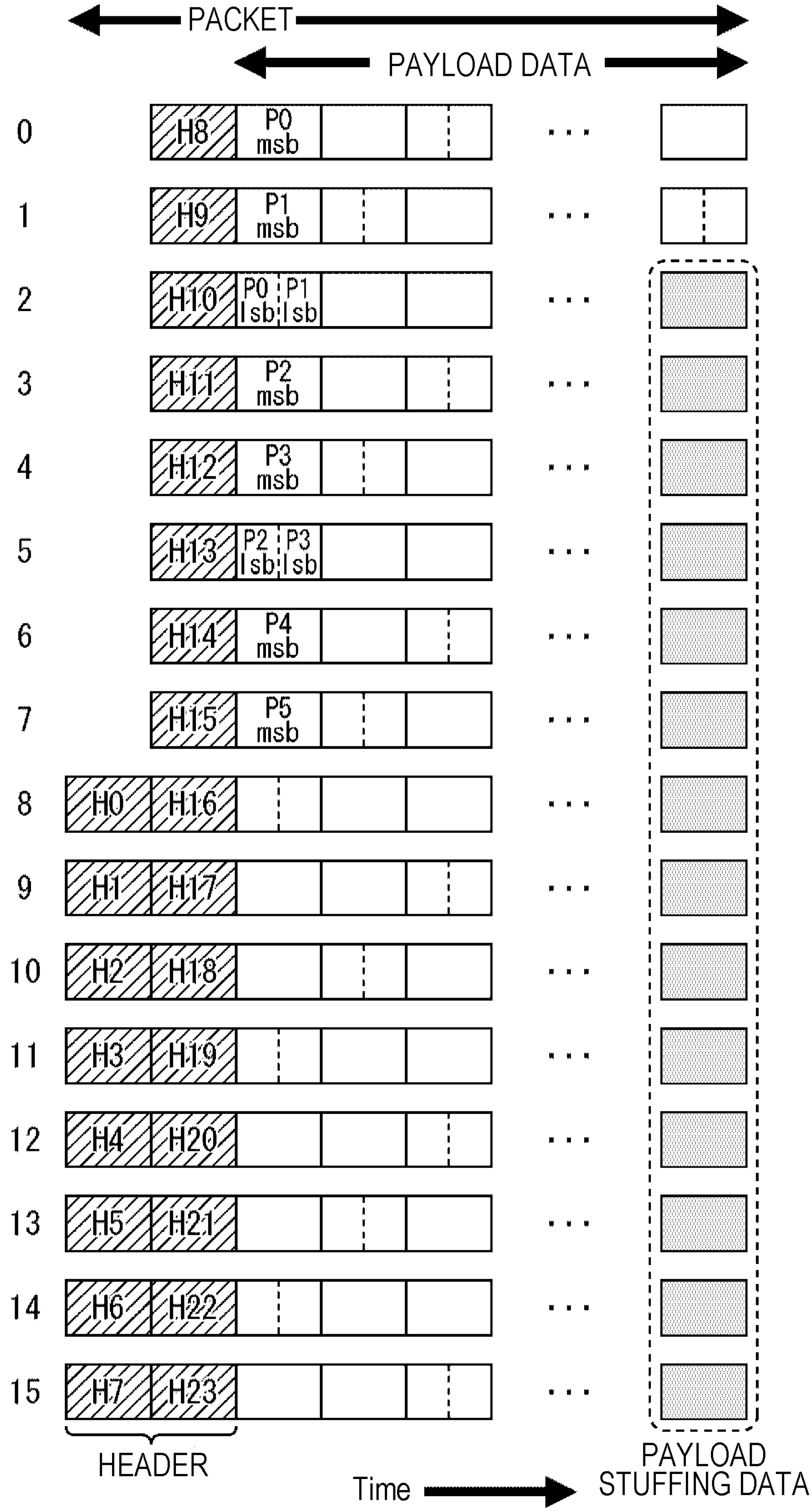
PACKET
PAYLOAD DATA
0 H8 P0 msb
1 H9 P1 msb
2 H10 P0 lsb P1 lsb
3 H11 P2 msb
4 H12 P3 msb
5 H13 P2 lsb P3 lsb
6 H14 P4 msb
7 H15 P5 msb
8 H0 H16
9 H1 H17
10 H2 H18
11 H3 H19
12 H4 H20
13 H5 H21
14 H6 H22
15 H7 H23
HEADER
Time
PAYLOAD STUFFING DATA

FIG. 18

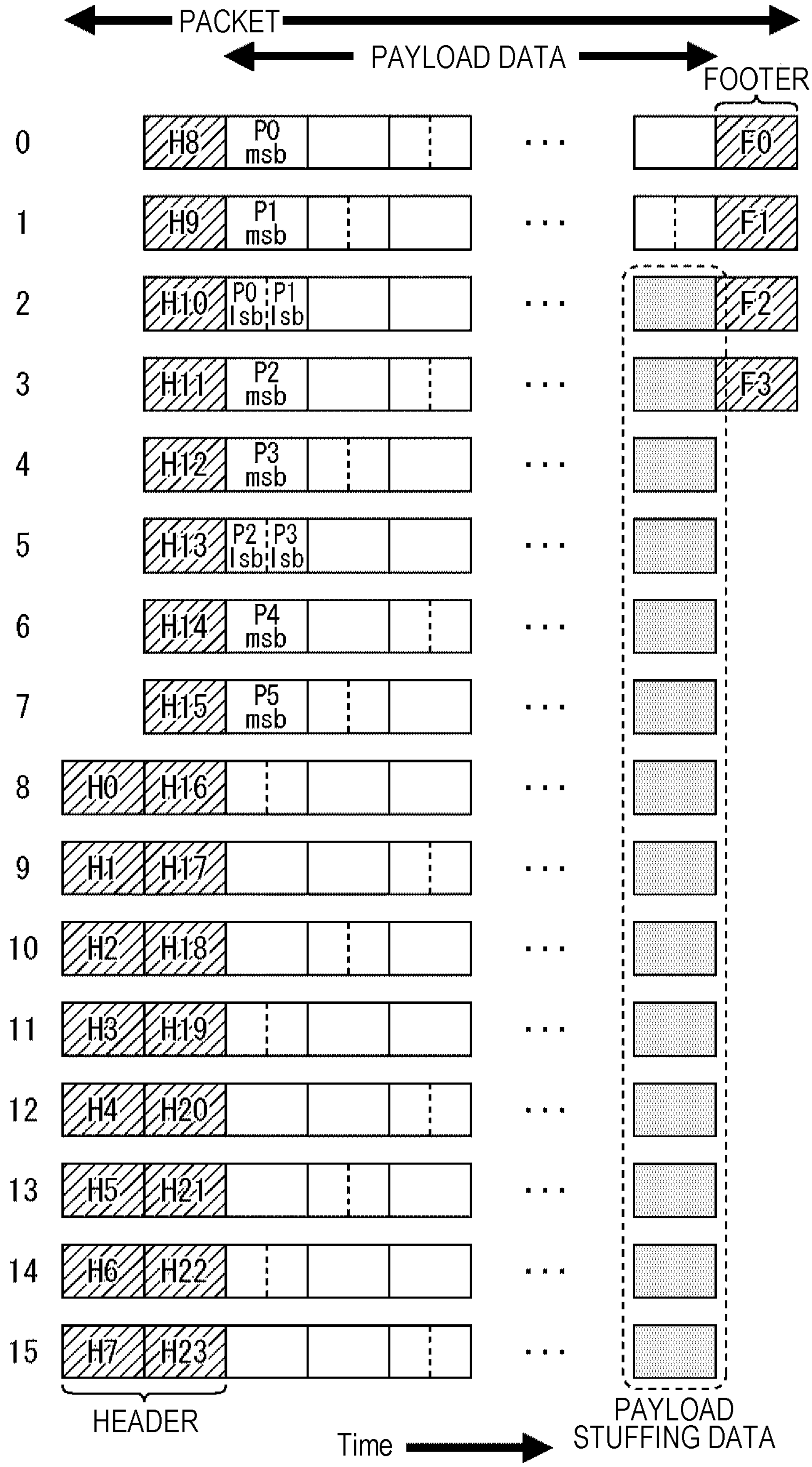
PACKET
PAYLOAD DATA
FOOTER
0
1
2
3
4
5
6
7
8
9
10
11
12
13
14
15
H0
H1
H2
H3
H4
H5
H6
H7
H8
H9
H10
H11
H12
H13
H14
H15
H16
H17
H18
H19
H20
H21
H22
H23
P0 msb
P1 msb
P0 lsb
P1 lsb
P2 msb
P3 msb
P2 lsb
P3 lsb
P4 msb
P5 msb
F0
F1
F2
F3
HEADER
Time
PAYLOAD STUFFING DATA

FIG. 19

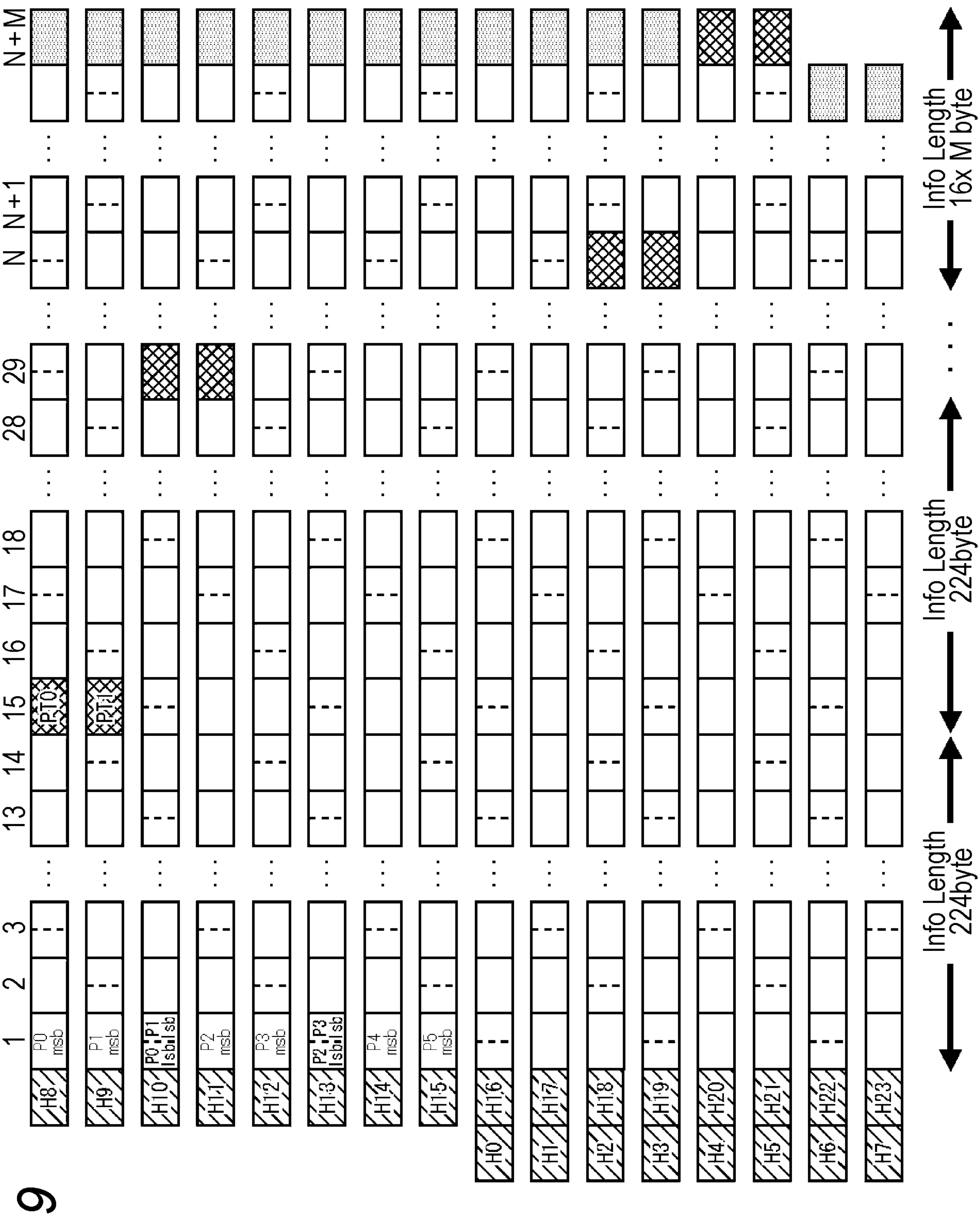
1
2
3
13
14
15
16
17
18
28
29
N
N+1
N+M
H8
H9
H10
H11
H12
H13
H14
H15
H16
H17
H18
H19
H20
H21
H22
H23
H0
H1
H2
H3
H4
H5
H6
H7
P0 msb
P1 msb
P0 P1 lsb lsb
P2 msb
P3 msb
P2 P3 lsb lsb
P4 msb
P5 msb
PT0
PT1
Info Length 224byte
Info Length 224byte
Info Length 16x M byte

FIG. 20

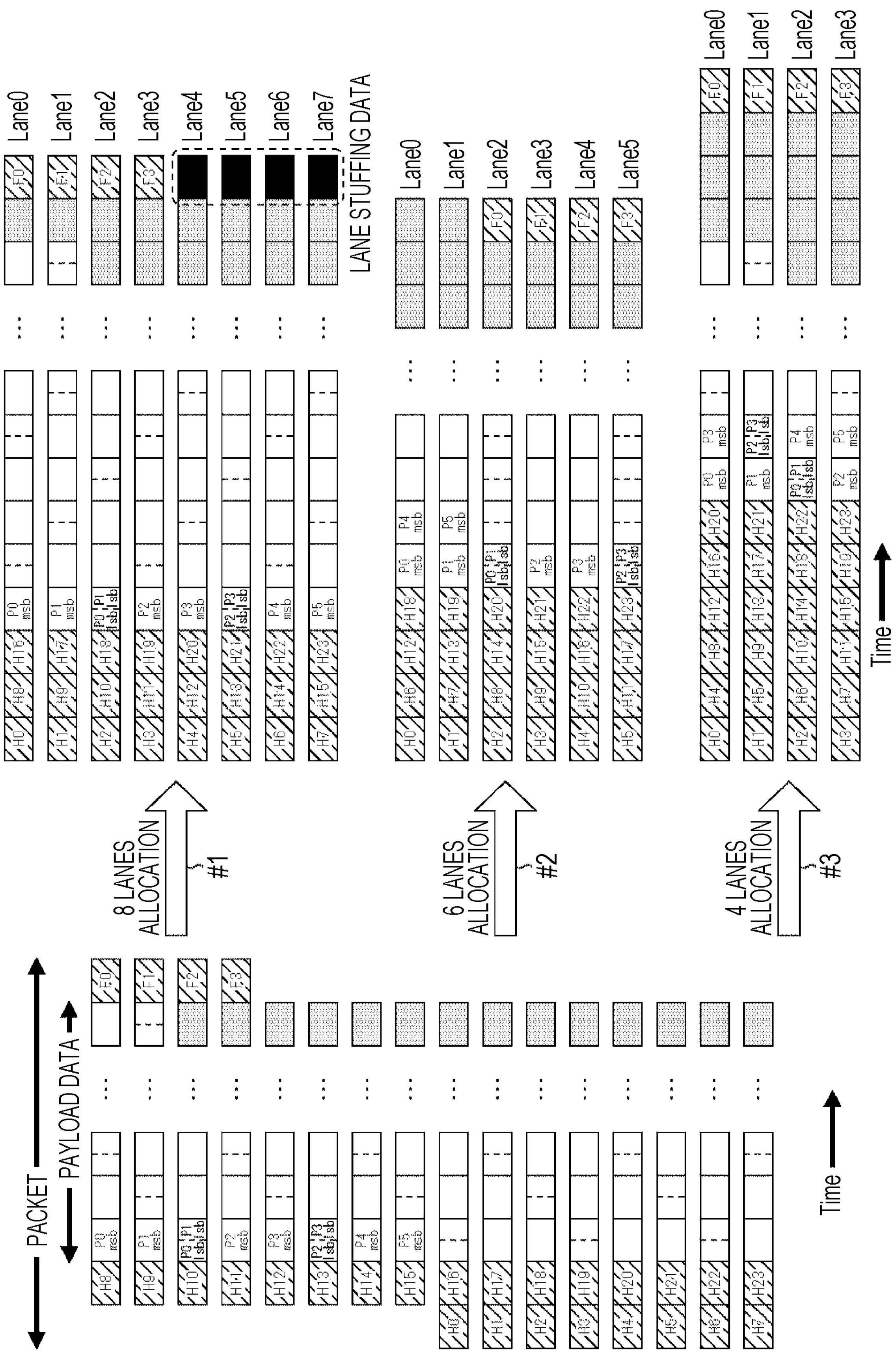
PACKET
PAYLOAD DATA
8 LANES ALLOCATION
#1
6 LANES ALLOCATION
#2
4 LANES ALLOCATION
#3
Lane0
Lane1
Lane2
Lane3
Lane4
Lane5
Lane6
Lane7
LANE STUFFING DATA
Time

FIG. 21

| PHY CONTROL CODE | PURPOSE OF USE | 8B10B SYMBOL CONFIGURATION | | | |
|---|---|---|---|---|---|
| Idle Code | SYMBOL GROUP FOR CONTINUING TO TOGGLE OUTPUT SIGNAL AT TIME OTHER THAN TIME OF PACKET TRANSMISSION (MARGIN PERIOD AND THE LIKE) | D00.0 | | | |
| Start Code | INDICATES START OF PACKET (LINE/H) | K28.5 | K27.7 | K28.2 | K27.7 |
| End Code | INDICATES END OF PACKET (LINE/H) | K28.5 | K29.7 | K30.7 | K29.7 |
| Pad Code | Padding SYMBOL GROUP INSERTED FOR FILLING DIFFERENCE BETWEEN PIXEL DATA (PAYLOAD DATA) BAND AND PHY TRANSMISSION BAND | K23.7 | K28.4 | K28.6 | K28.7 |
| Sync Code | SYMBOL GROUP FOR ESTABLISHING BIT SYNCHRONIZATION OF I/F AND 8B10B SYMBOL SYNCHRONIZATION | K28.5 | Any** | ← | ← |
| Deskew Code | SYMBOL GROUP USED AS MARKING FOR ADJUSTING Data Skew BETWEEN LANES | K28.5 | Any** | ← | ← |
| Standby Code | SYMBOL GROUP FOR NOTIFYING RX SIDE THAT TX OUTPUT BECOMES High-Z | K28.5 | Any** | ← | ← |

# FIG. 22

Control Symbol

| Code | 8B HGF_EDCBA | 10B abcdei_fghj | | memo |
|---|---|---|---|---|
| | | RD− | RD+ | |
| K23.7 | 11110111 | 1110101000 | 0001010111 | Used in Pad Code |
| K27.7 | 11111011 | 1101101000 | 0010010111 | Used in Start Code |
| K28.0 | 00011100 | 0011110100 | 1100001011 | Reserved |
| K28.1 | 00111100 | 0011111001 | 1100000110 | Reserved |
| K28.2 | 01011100 | 0011110101 | 1100001010 | Used in Start Code |
| K28.3 | 01111100 | 0011110011 | 1100001100 | Reserved |
| K28.4 | 10011100 | 0011110010 | 1100001101 | Used in Pad Code |
| K28.5 | 10111100 | 0011111010 | 1100000101 | Comma Character |
| K28.6 | 11011100 | 0011110110 | 1100001001 | Used in Pad Code |
| K28.7 | 11111100 | 0011111000 | 1100000111 | Used in Pad Code |
| K29.7 | 11111101 | 1011101000 | 0100010111 | Used in End Code |
| K30.7 | 11111110 | 0111101000 | 1000010111 | Used in End Code |

FIG. 23

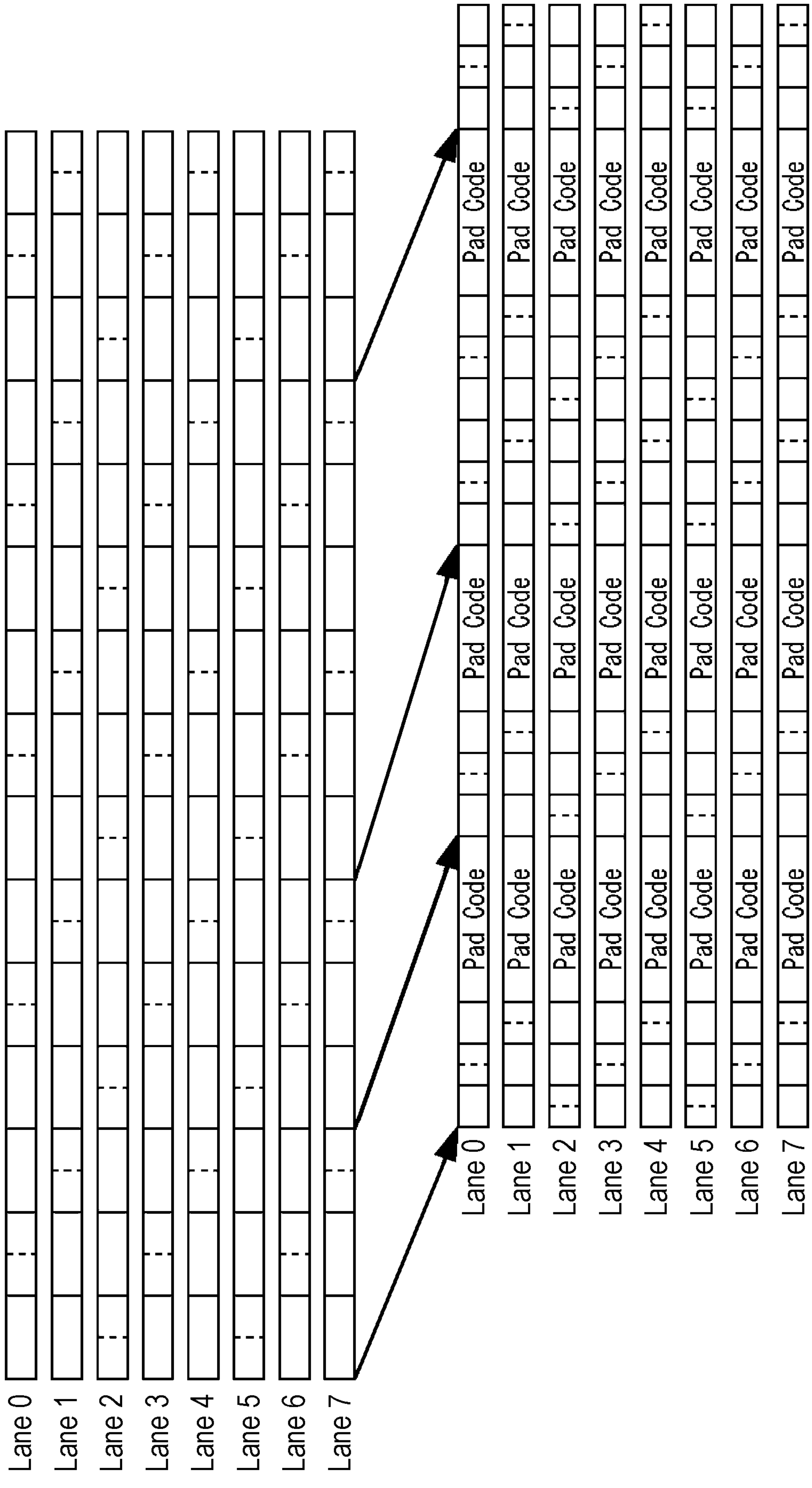

FIG. 24

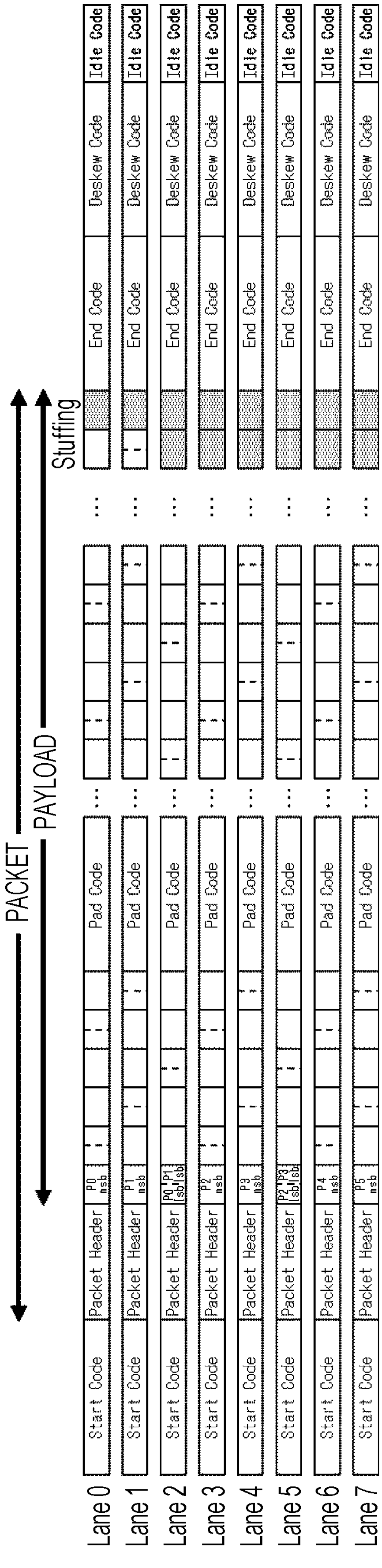
PACKET
PAYLOAD
Stuffing
Lane 0
Lane 1
Lane 2
Lane 3
Lane 4
Lane 5
Lane 6
Lane 7
Start Code
Packet Header
Pad Code
End Code
Deskew Code
Idle Code

FIG. 25

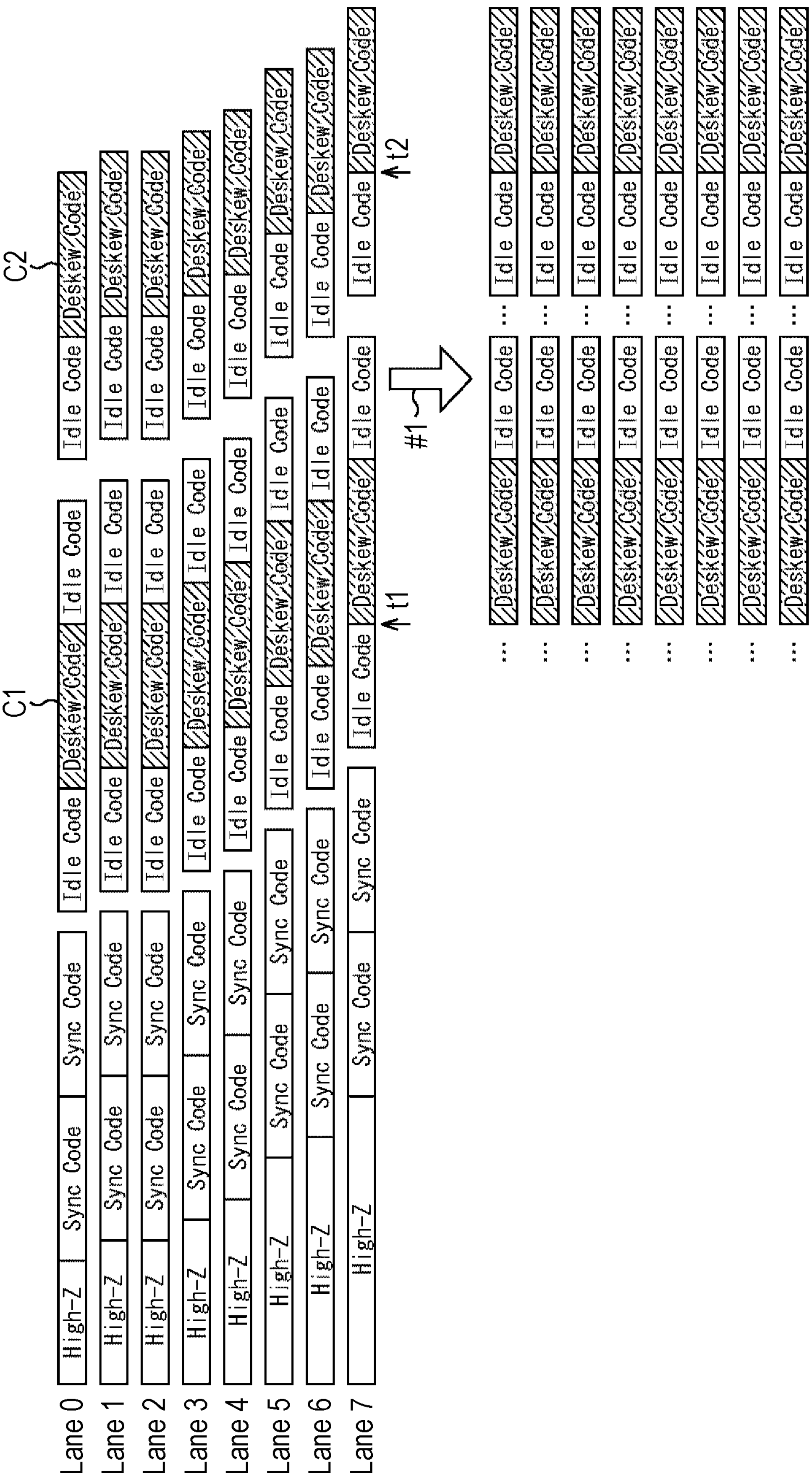
Lane 0
Lane 1
Lane 2
Lane 3
Lane 4
Lane 5
Lane 6
Lane 7
High-Z
Sync Code
Idle Code
Deskew Code
C1
C2
t1
t2
#1

FIG. 26

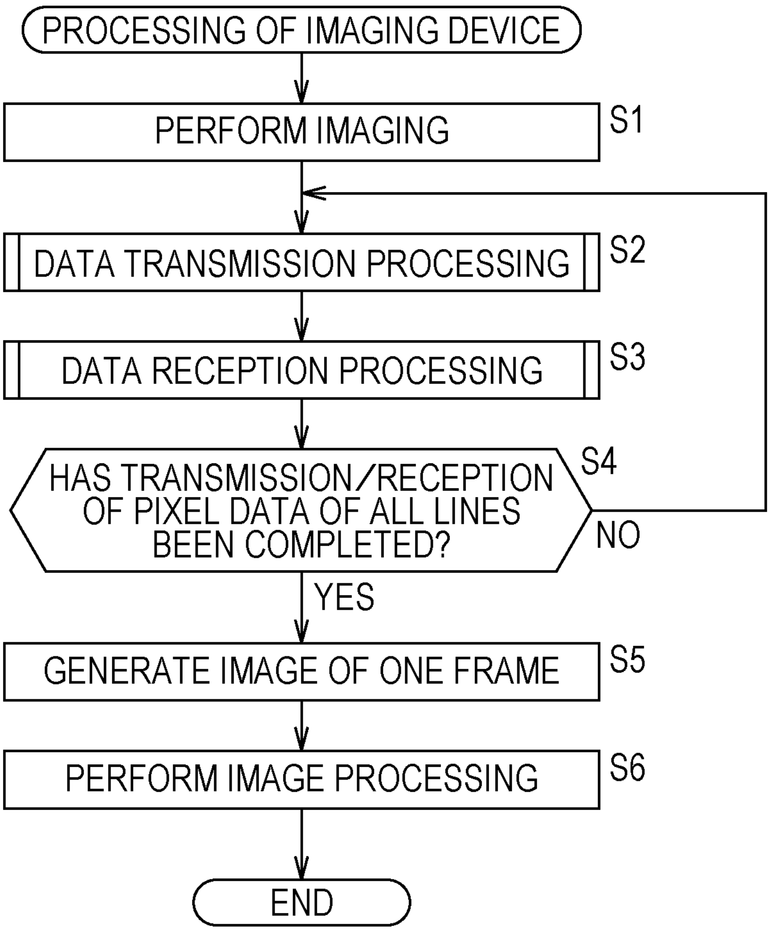
PROCESSING OF IMAGING DEVICE
PERFORM IMAGING
S1
DATA TRANSMISSION PROCESSING
S2
DATA RECEPTION PROCESSING
S3
HAS TRANSMISSION/RECEPTION OF PIXEL DATA OF ALL LINES BEEN COMPLETED?
S4
NO
YES
GENERATE IMAGE OF ONE FRAME
S5
PERFORM IMAGE PROCESSING
S6
END

FIG. 27

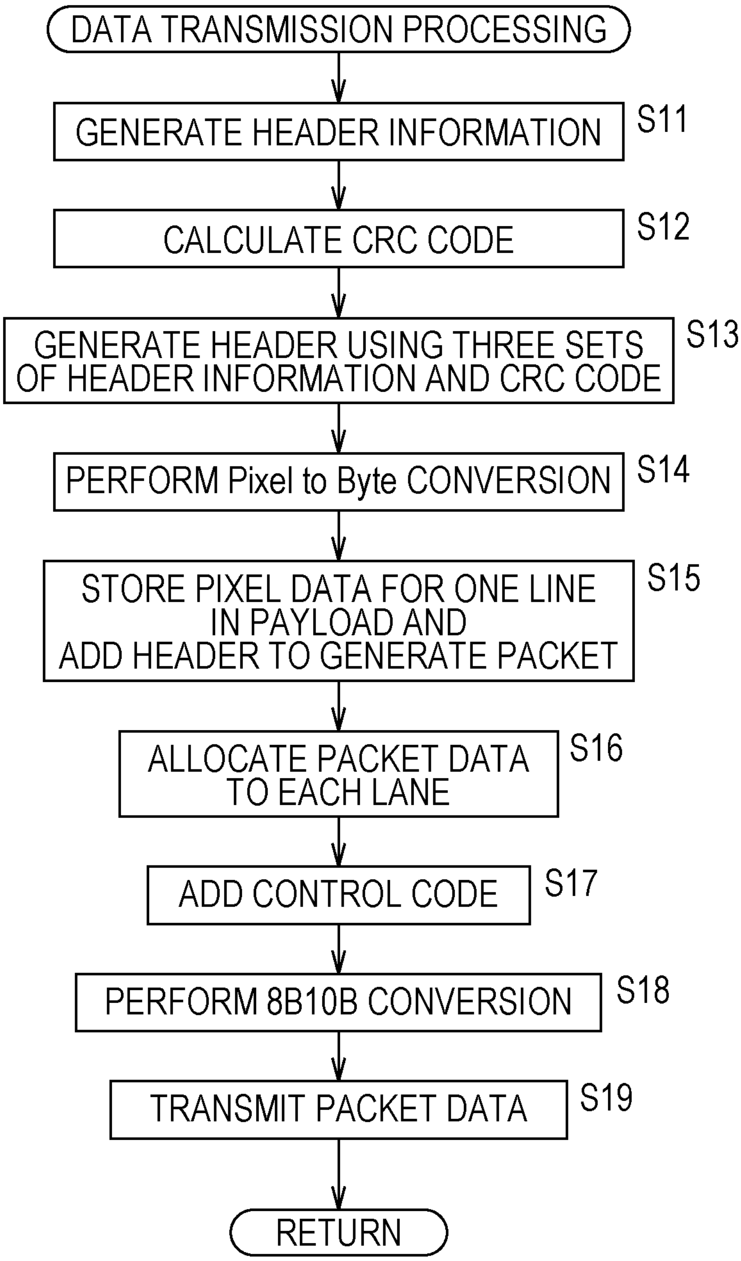
DATA TRANSMISSION PROCESSING
GENERATE HEADER INFORMATION
S11
CALCULATE CRC CODE
S12
GENERATE HEADER USING THREE SETS OF HEADER INFORMATION AND CRC CODE
S13
PERFORM Pixel to Byte CONVERSION
S14
STORE PIXEL DATA FOR ONE LINE IN PAYLOAD AND ADD HEADER TO GENERATE PACKET
S15
ALLOCATE PACKET DATA TO EACH LANE
S16
ADD CONTROL CODE
S17
PERFORM 8B10B CONVERSION
S18
TRANSMIT PACKET DATA
S19
RETURN

FIG. 28

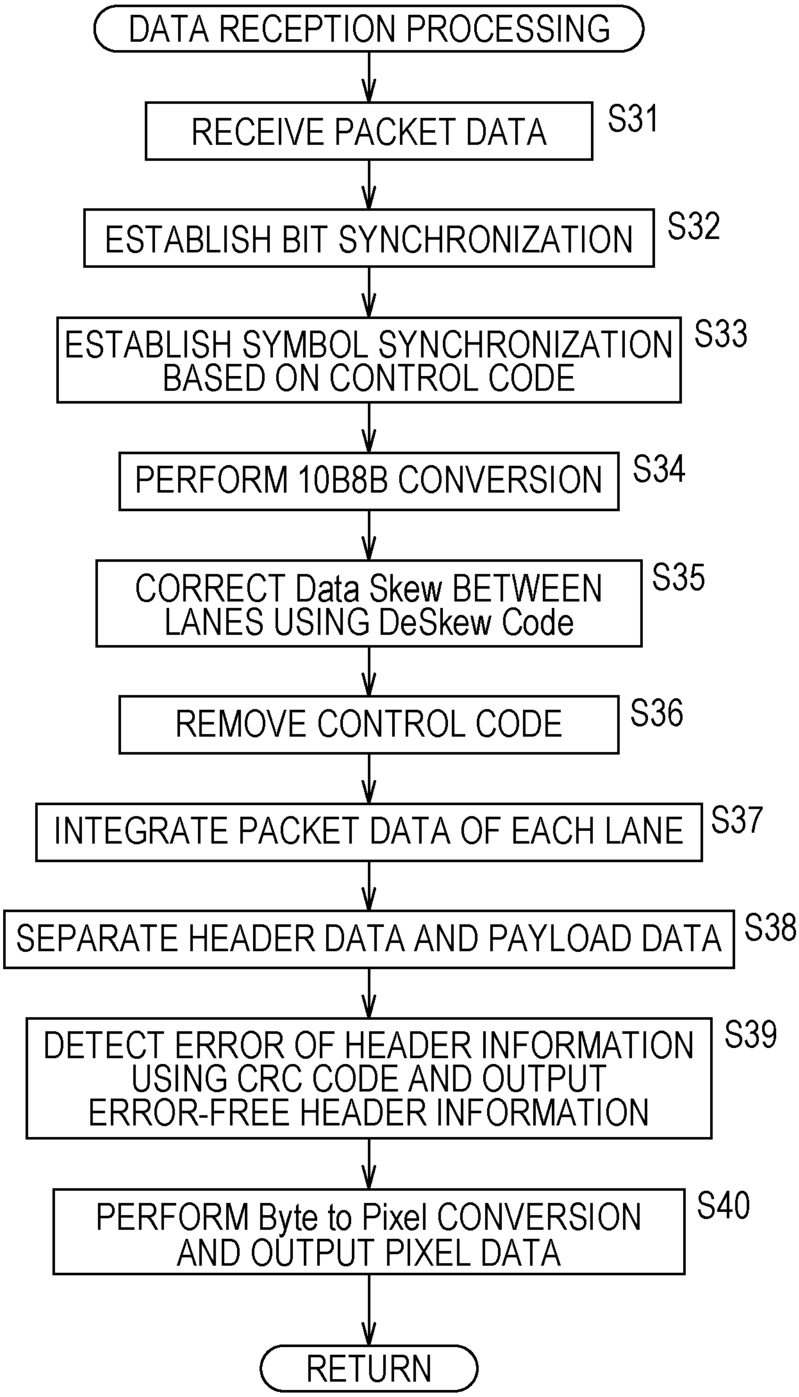
DATA RECEPTION PROCESSING
RECEIVE PACKET DATA
S31
ESTABLISH BIT SYNCHRONIZATION
S32
ESTABLISH SYMBOL SYNCHRONIZATION BASED ON CONTROL CODE
S33
PERFORM 10B8B CONVERSION
S34
CORRECT Data Skew BETWEEN LANES USING DeSkew Code
S35
REMOVE CONTROL CODE
S36
INTEGRATE PACKET DATA OF EACH LANE
S37
SEPARATE HEADER DATA AND PAYLOAD DATA
S38
DETECT ERROR OF HEADER INFORMATION USING CRC CODE AND OUTPUT ERROR-FREE HEADER INFORMATION
S39
PERFORM Byte to Pixel CONVERSION AND OUTPUT PIXEL DATA
S40
RETURN

FIG. 29

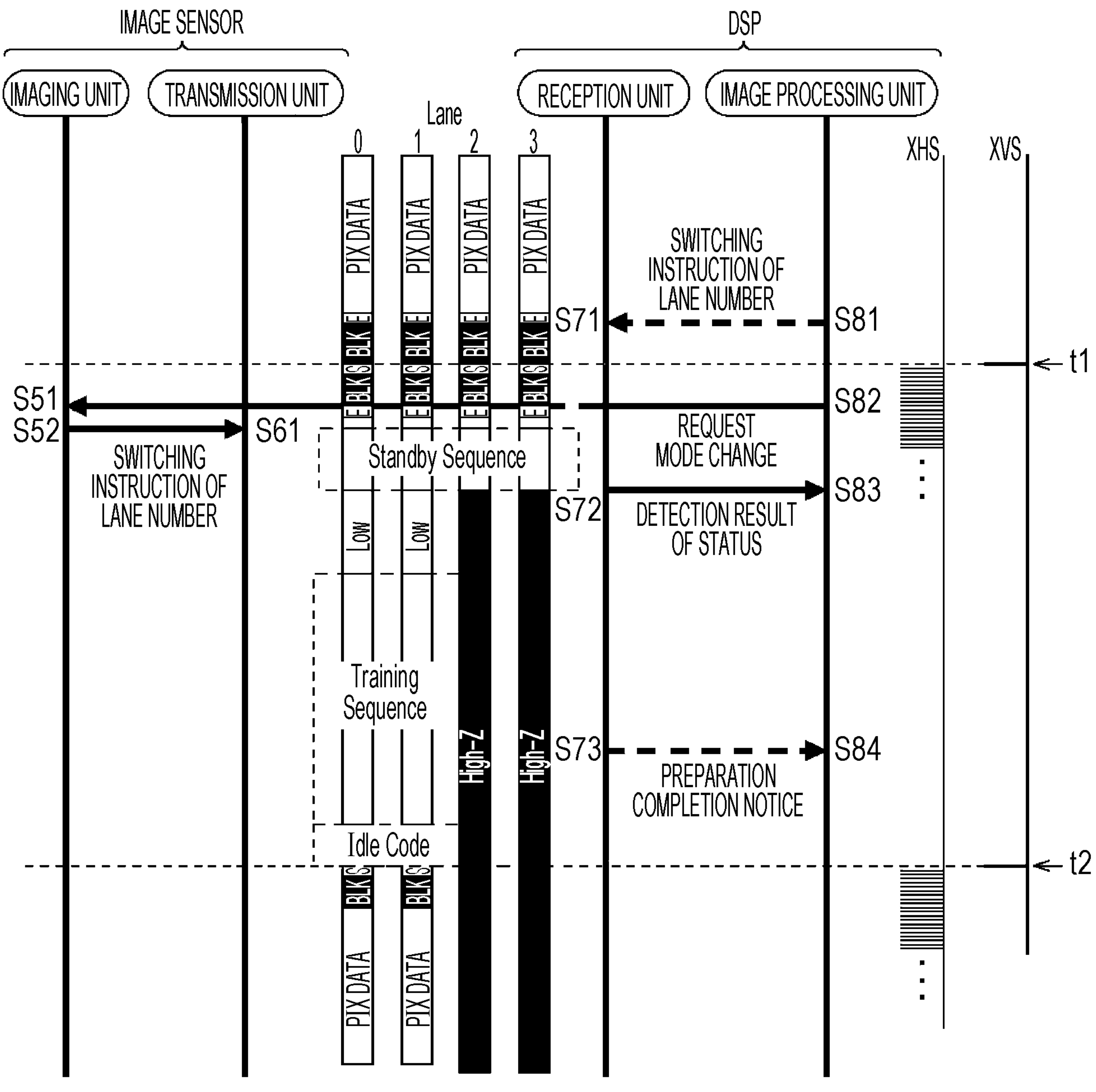

IMAGE SENSOR
DSP
IMAGING UNIT
TRANSMISSION UNIT
RECEPTION UNIT
IMAGE PROCESSING UNIT
Lane
0
1
2
3
XHS
XVS
PIX DATA
BLK E
BLK S
E
SWITCHING INSTRUCTION OF LANE NUMBER
S71
S81
t1
S51
S52
S61
S82
REQUEST MODE CHANGE
SWITCHING INSTRUCTION OF LANE NUMBER
Standby Sequence
S83
S72
DETECTION RESULT OF STATUS
Low
Training Sequence
High-Z
S73
S84
PREPARATION COMPLETION NOTICE
Idle Code
t2

FIG. 30

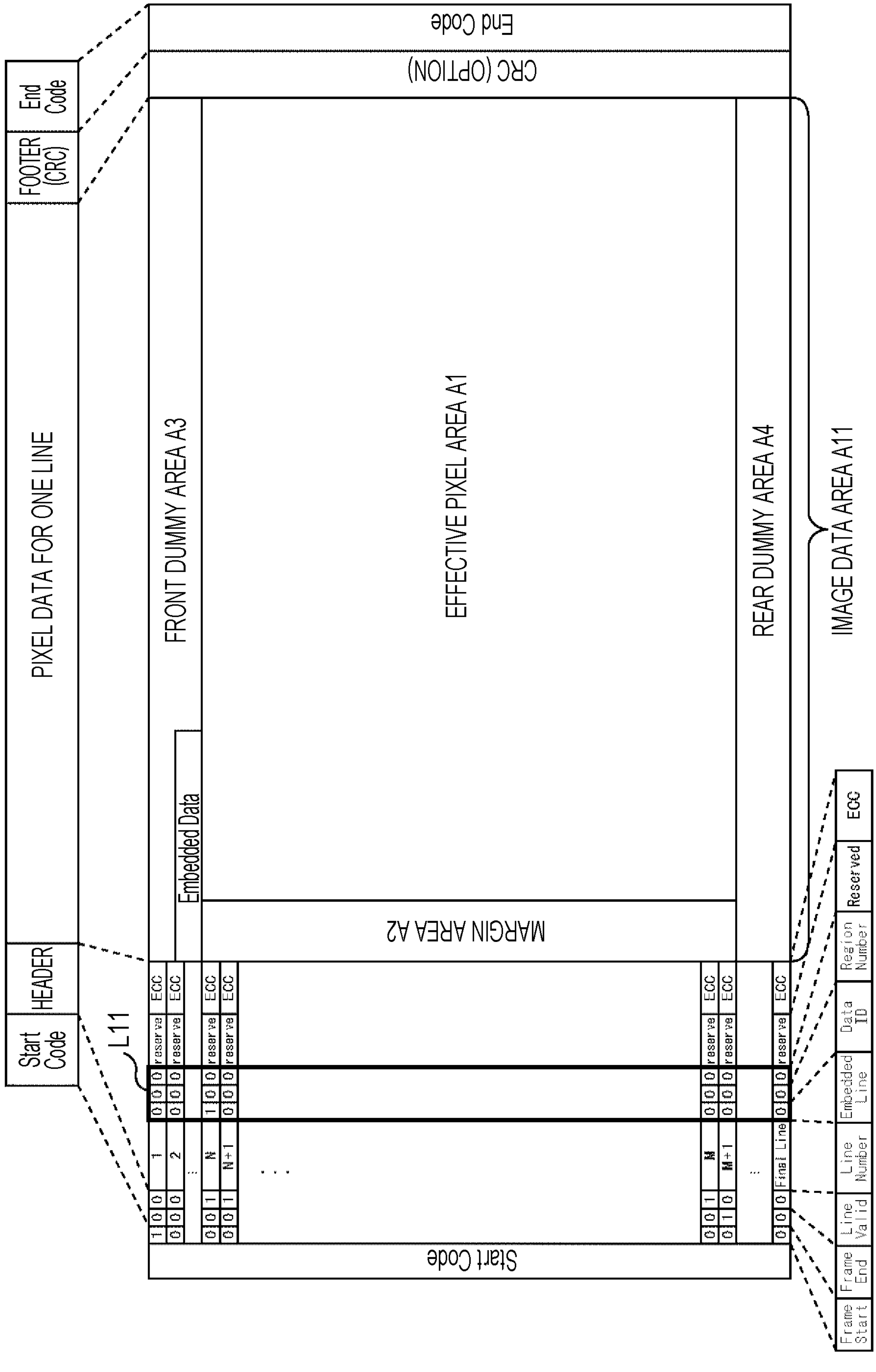
Start Code
HEADER
PIXEL DATA FOR ONE LINE
FOOTER (CRC)
End Code
L11
FRONT DUMMY AREA A3
Embedded Data
EFFECTIVE PIXEL AREA A1
MARGIN AREA A2
REAR DUMMY AREA A4
IMAGE DATA AREA A11
CRC (OPTION)
Final Line
reserve
ECC
Frame Start
Frame End
Line Valid
Line Number
Embedded Line
Data ID
Region Number
Reserved
ECC

FIG. 31

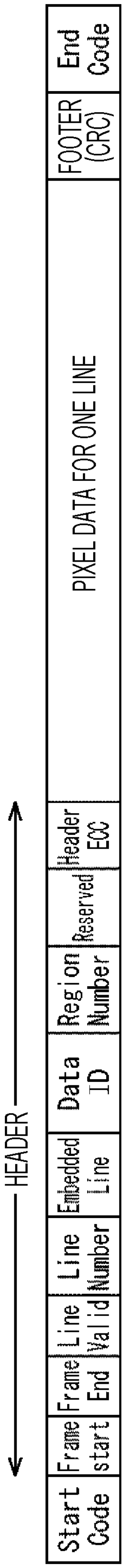
HEADER
Start Code
Frame start
Frame End
Line Valid
Line Number
Embedded Line
Data ID
Region Number
Reserved
Header ECC
PIXEL DATA FOR ONE LINE
FOOTER (CRC)
End Code

FIG. 32

| LARGE ITEM | SMALL ITEM | AMOUNT OF INFORMATION | CONTENT |
|---|---|---|---|
| FRAME INFORMATION | Frame Start | 1bit | INDICATES FRAME HEAD (EX: FIRST LINE) |
| | Frame End | 1bit | INDICATES FRAME TERMINAL END (EX: LINE BEFORE REAR DUMMY) |
| LINE INFORMATION | Line Valid | 1bit | INDICATES VALIDITY/INVALIDITY OF LINE |
| | Line Number | 13bit | INDICATES LINE NUMBER |
| | Embedded Line | 1bit | INDICATES EMBEDDED LINE NUMBER |
| DATA INFORMATION | Data ID | Pbit | INDICATES DATA IDENTIFICATION |
| REGION INFORMATION | Region Number | 1bit | INDICATES REGION NUMBER |
| OTHERS | Reserved | 30−Pbit | SECURE FOR FUTURE EXTENSIBILITY |
| | Harder ECC | 18byte | ECC OF HEADER INFORMATION |

FIG. 33

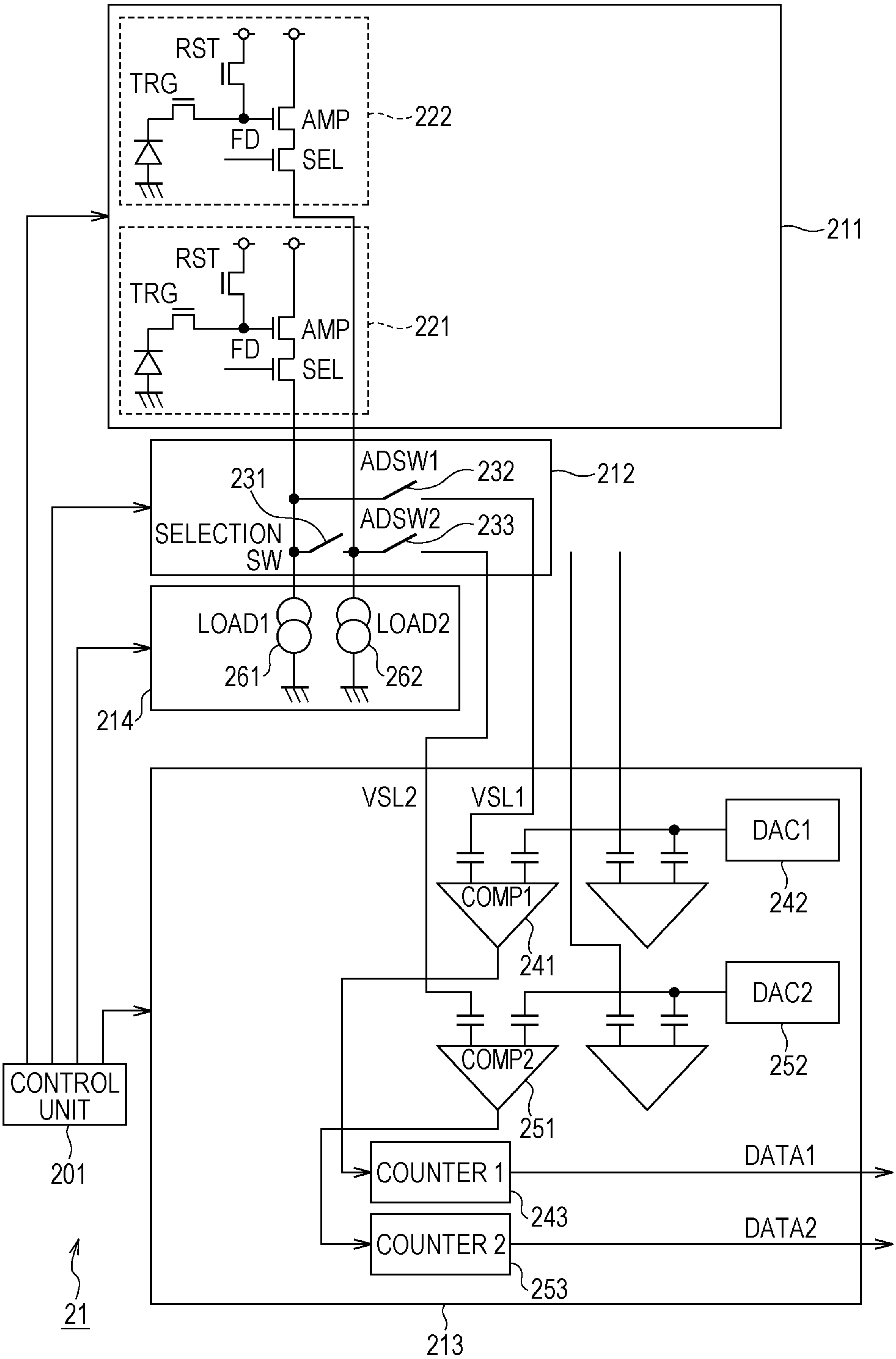
RST
TRG
FD
AMP
SEL
222
RST
TRG
FD
AMP
SEL
221
211
ADSW1
232
231
212
SELECTION SW
ADSW2
233
LOAD1
LOAD2
261
262
214
VSL2
VSL1
DAC1
COMP1
242
241
DAC2
COMP2
252
251
CONTROL UNIT
201
COUNTER 1
DATA1
243
COUNTER 2
DATA2
253
213
21

FIG. 34

| | AMOUNT OF INFORMATION | VALUE | CONTENT |
|---|---|---|---|
| Data ID | ONE BIT | 0 | DATA1 |
| | | 1 | DATA2 |

FIG. 35

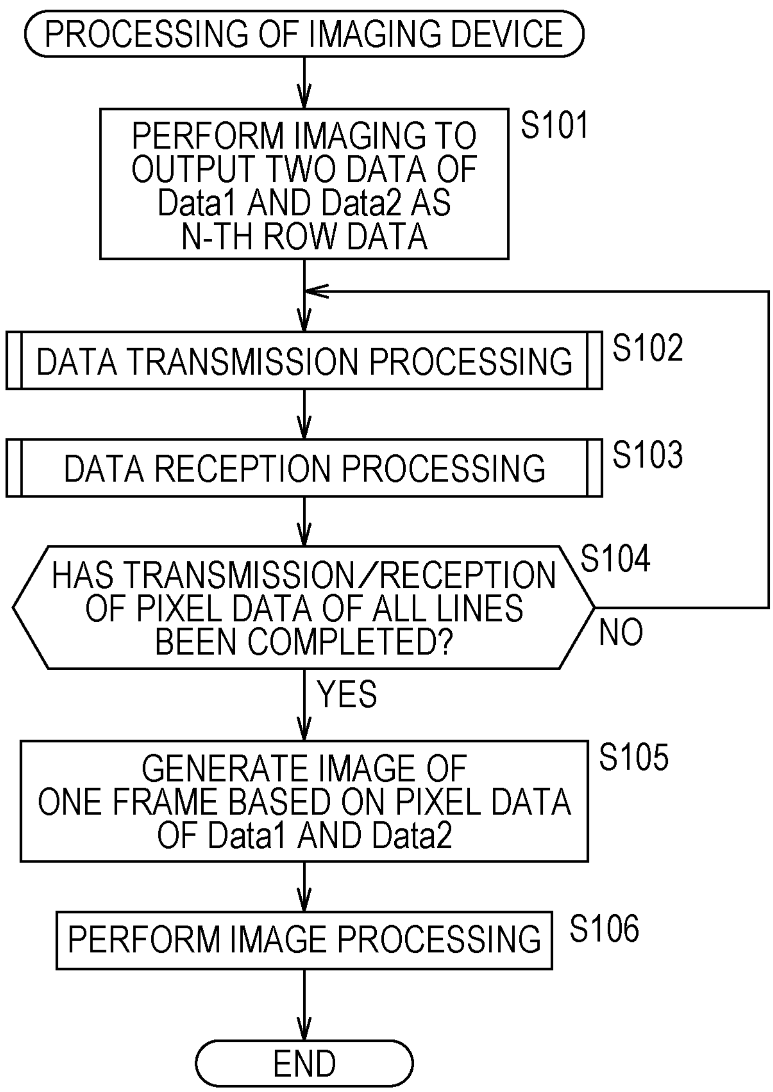

FIG. 36

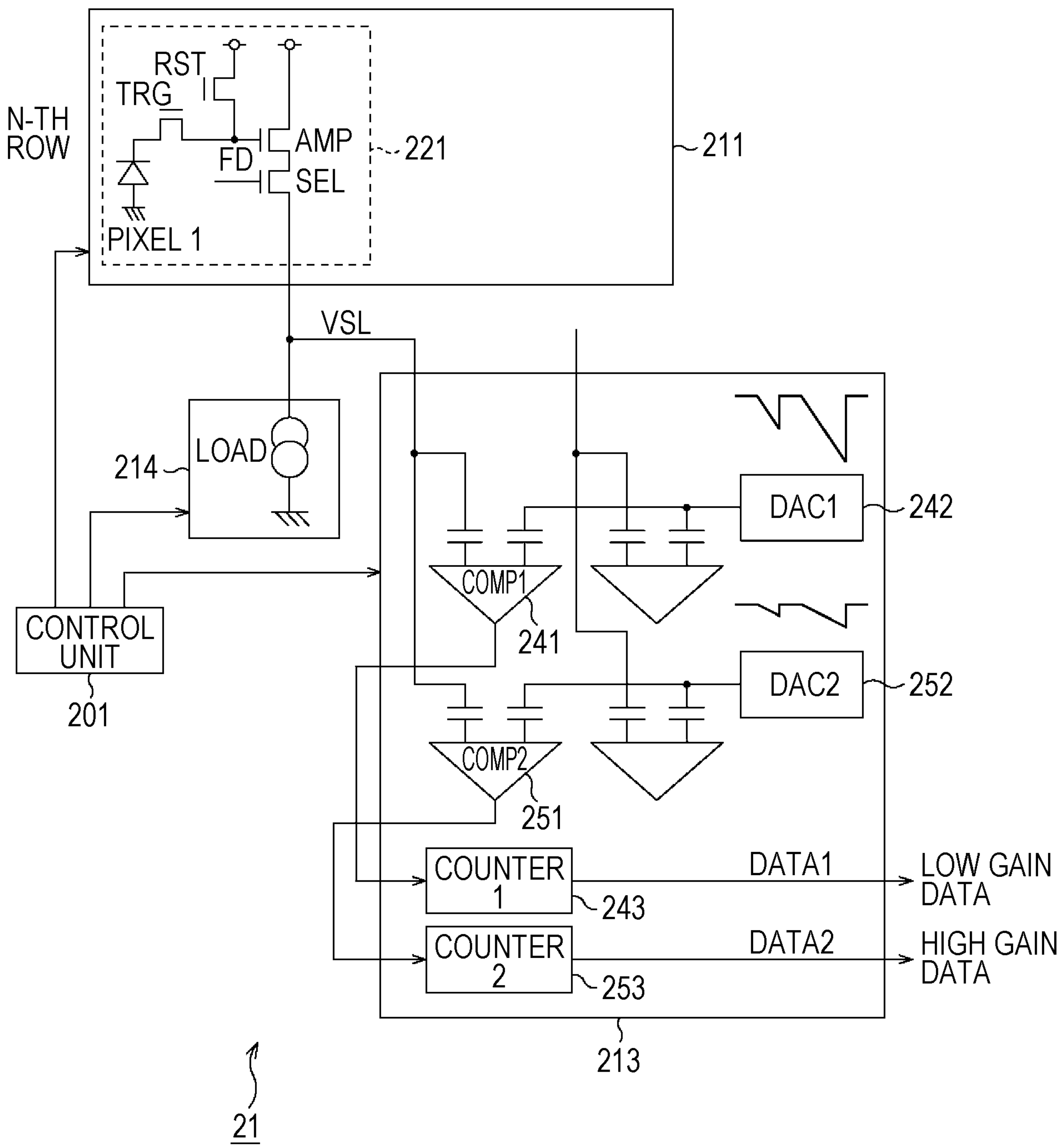
N-TH
ROW
RST
TRG
FD
AMP
SEL
PIXEL 1
221
211
VSL
214
LOAD
CONTROL
UNIT
201
DAC1
242
COMP1
241
DAC2
252
COMP2
251
COUNTER
1
243
DATA1
LOW GAIN
DATA
COUNTER
2
253
DATA2
HIGH GAIN
DATA
213
21

# FIG. 37

| | | | | | | | | | | | | |
|---|---|---|---|---|---|---|---|---|---|---|---|---|
| Start Code | 0 | 0 | 1 | N | 0 | 1 | 0 | Reserved | ECC | PIXEL DATA FOR ONE LINE (LOW GAIN DATA) | FOOTER (CRC) | End Code |
| Start Code | 0 | 0 | 0 | N | 0 | 0 | 0 | Reserved | ECC | PIXEL DATA FOR ONE LINE (HIGH GAIN DATA) | FOOTER (CRC) | End Code |

FIG. 38

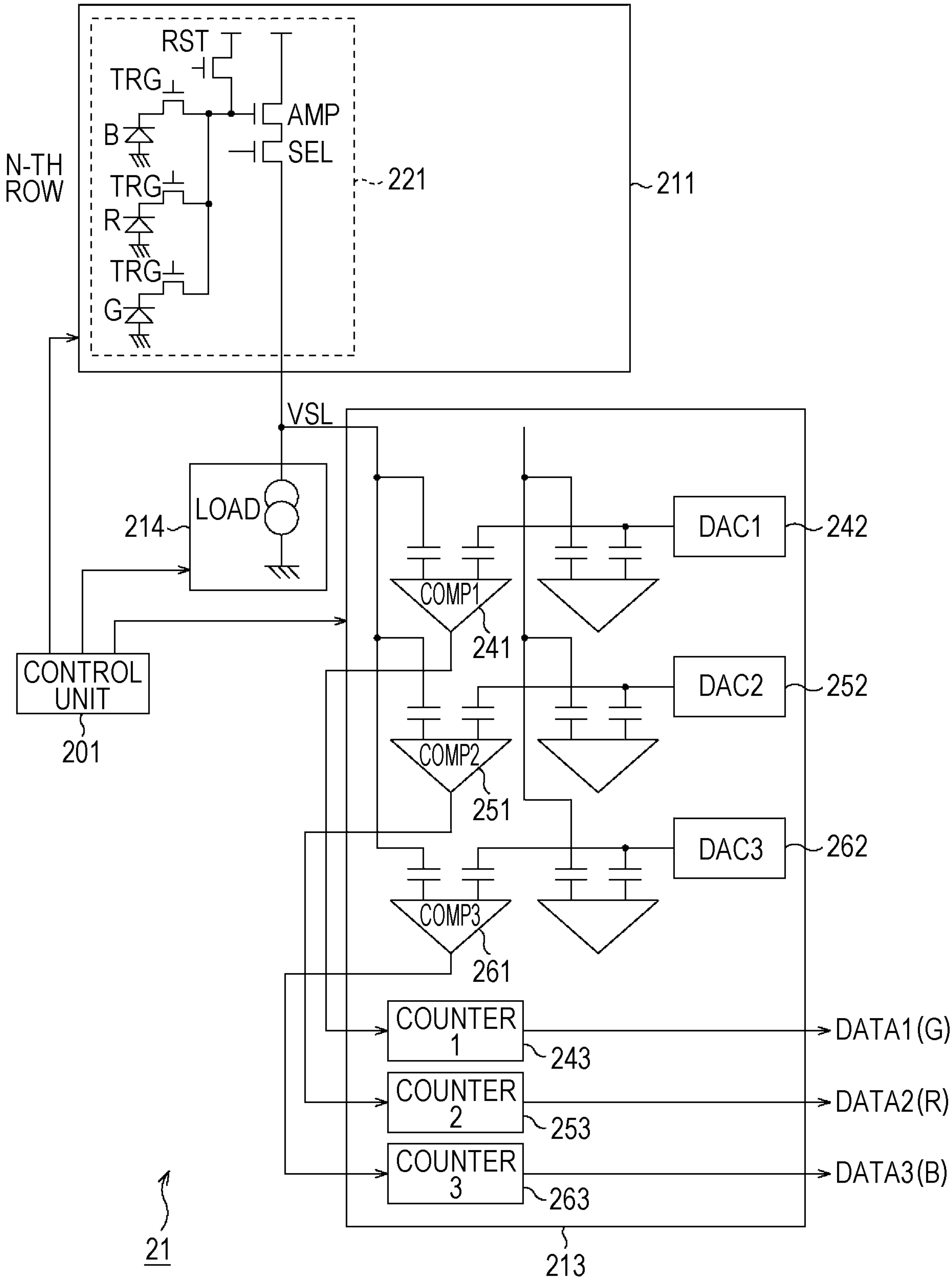

RST
TRG
AMP
SEL
B
N-TH ROW
TRG
221
211
R
TRG
G
VSL
LOAD
214
DAC1
242
COMP1
241
CONTROL UNIT
201
DAC2
252
COMP2
251
DAC3
262
COMP3
261
COUNTER 1
243
DATA1(G)
COUNTER 2
253
DATA2(R)
COUNTER 3
263
DATA3(B)
21
213

FIG. 39

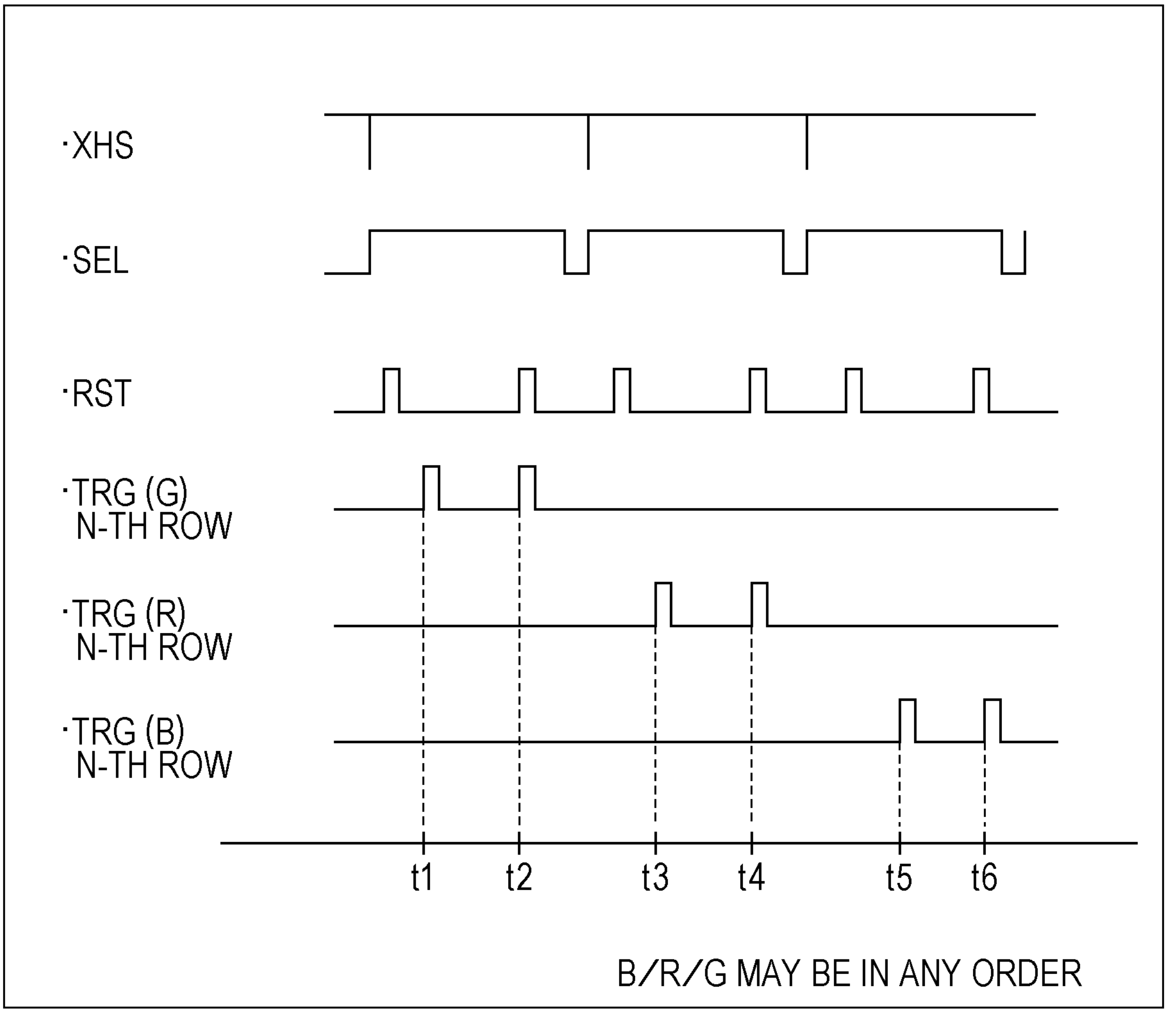
·XHS
·SEL
·RST
·TRG (G)
N-TH ROW
·TRG (R)
N-TH ROW
·TRG (B)
N-TH ROW
t1
t2
t3
t4
t5
t6
B/R/G MAY BE IN ANY ORDER

FIG. 40

| | | | | | | | | | | | | | | |
|---|---|---|---|---|---|---|---|---|---|---|---|---|---|---|
| N-TH ROW G PIXEL | Start Code | 0 | 0 | 1 | N | 0 | 0 | 0 | 0 | Reserved | ECC | PIXEL DATA FOR ONE LINE | FOOTER (CRC) | End Code |
| N-TH ROW R PIXEL | Start Code | 0 | 0 | 0 | N | 0 | 0 | 1 | 0 | Reserved | ECC | PIXEL DATA FOR ONE LINE | FOOTER (CRC) | End Code |
| N-TH ROW B PIXEL | Start Code | 0 | 0 | 1 | N | 0 | 1 | 0 | 0 | Reserved | ECC | PIXEL DATA FOR ONE LINE | FOOTER (CRC) | End Code |

CASE OF VERTICAL SPECTRUM (P=2bit)

FIG. 41

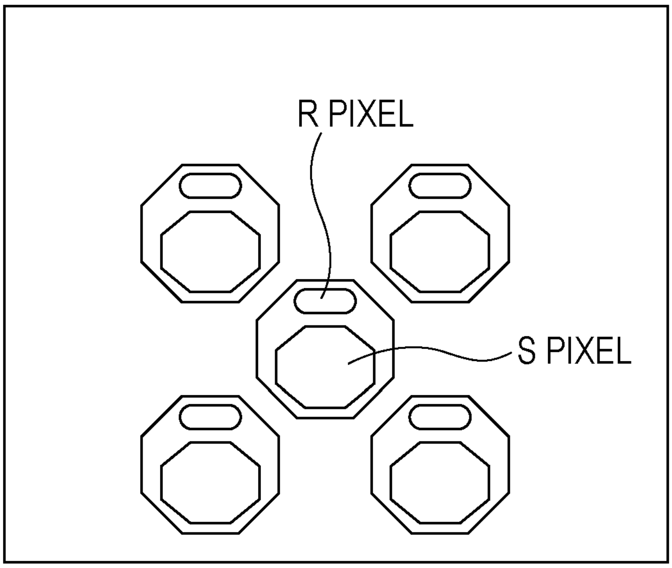

FIG. 42

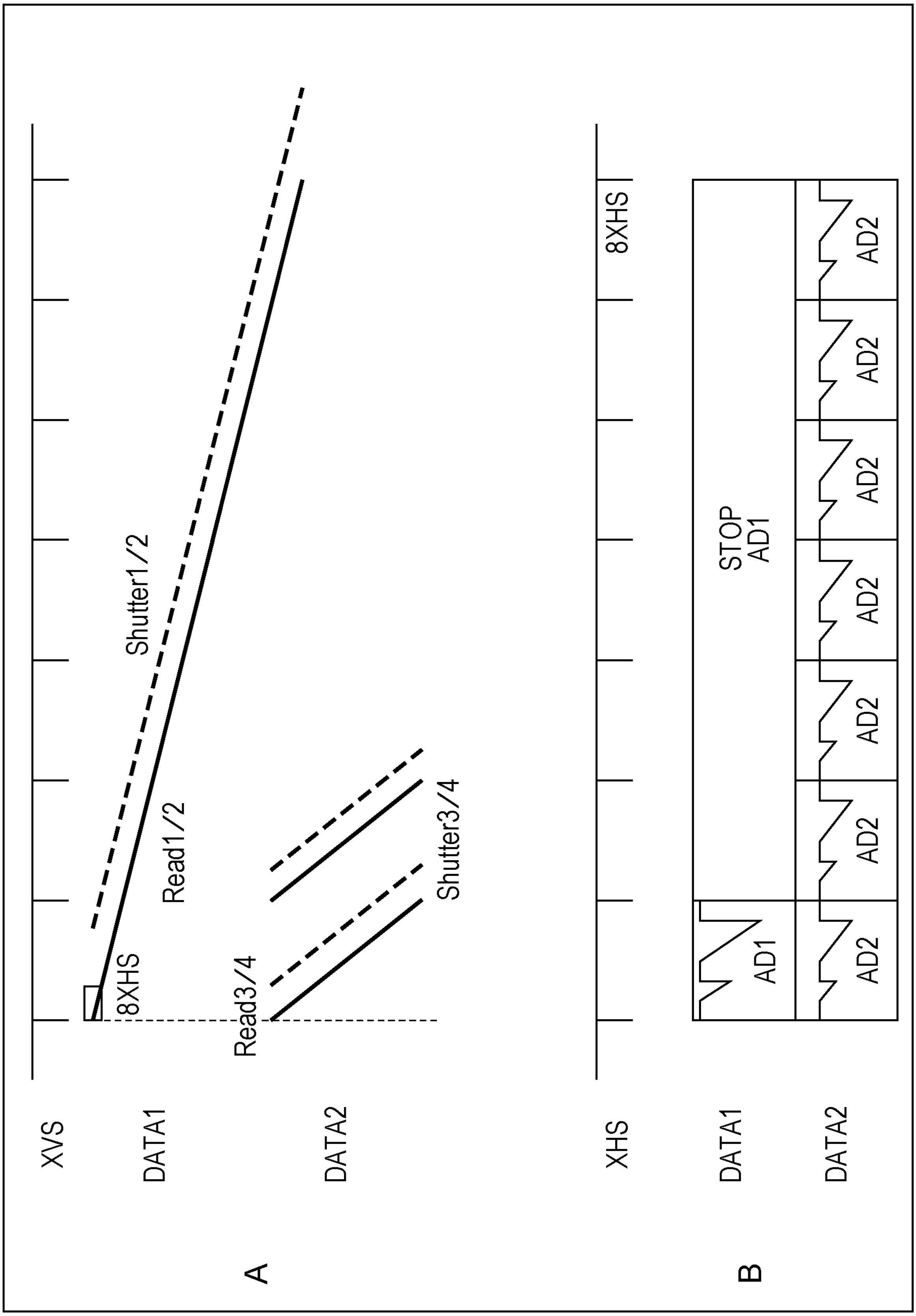
A
XVS
DATA1
DATA2
8XHS
Read3/4
Read1/2
Shutter1/2
Shutter3/4
B
XHS
DATA1
DATA2
8XHS
AD1
STOP
AD1
AD2

FIG. 43

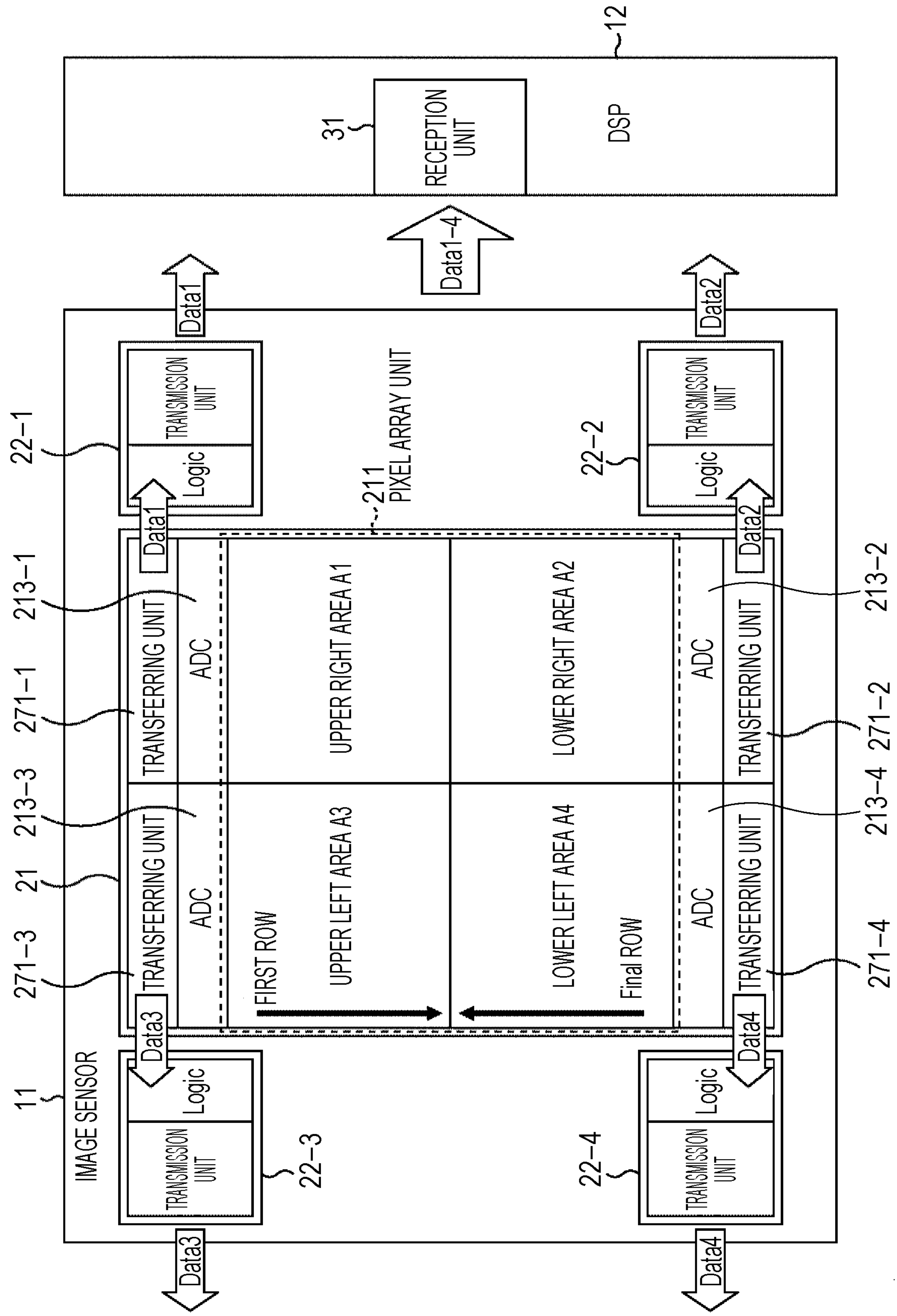
12
DSP
31
RECEPTION UNIT
Data1–4
11
IMAGE SENSOR
21
211
PIXEL ARRAY UNIT
22–1
22–2
22–3
22–4
TRANSMISSION UNIT
Logic
Data1
Data2
Data3
Data4
213–1
213–2
213–3
213–4
271–1
271–2
271–3
271–4
TRANSFERRING UNIT
ADC
UPPER RIGHT AREA A1
LOWER RIGHT AREA A2
UPPER LEFT AREA A3
LOWER LEFT AREA A4
FIRST ROW
Final ROW

FIG. 44

| | AMOUNT OF INFORMATION | VALUE | CONTENT |
|---|---|---|---|
| Region Number | ONE BIT | 0 | LEFT SIDE AREA |
| | | 1 | RIGHT SIDE AREA |

# FIG. 45

| | | | | | Line Number | | | Region Number | | | | | |
|---|---|---|---|---|---|---|---|---|---|---|---|---|---|
| Data1 | Start Code | 0 | 0 | 1 | 1 | 0 | 0 | 1 | Reserved | ECC | PIXEL DATA FOR ONE LINE | FOOTER (CRC) | End Code |
| Data2 | Start Code | 0 | 0 | 0 | Final | 0 | 0 | 1 | Reserved | ECC | PIXEL DATA FOR ONE LINE | FOOTER (CRC) | End Code |
| Data3 | Start Code | 0 | 0 | 1 | 1 | 0 | 0 | 0 | Reserved | ECC | PIXEL DATA FOR ONE LINE | FOOTER (CRC) | End Code |
| Data4 | Start Code | 0 | 0 | 0 | Final | 0 | 0 | 0 | Reserved | ECC | PIXEL DATA FOR ONE LINE | FOOTER (CRC) | End Code |

FIG. 46

Line Number

| | | | | | | | | | | | | |
|---|---|---|---|---|---|---|---|---|---|---|---|---|
| Start Code | 0 | 0 | 1 | N | 0 | 0 | 0 | Reserved | ECC | PIXEL DATA FOR ONE LINE | FOOTER (CRC) | End Code |
| Start Code | 0 | 0 | 0 | N+1 | 0 | 0 | 0 | Reserved | ECC | PIXEL DATA FOR ONE LINE | FOOTER (CRC) | End Code |
| Start Code | 0 | 0 | 1 | N+2 | 0 | 0 | 0 | Reserved | ECC | PIXEL DATA FOR ONE LINE | FOOTER (CRC) | End Code |
| Start Code | 0 | 0 | 0 | N+3 | 0 | 0 | 0 | Reserved | ECC | PIXEL DATA FOR ONE LINE | FOOTER (CRC) | End Code |

FIG. 47

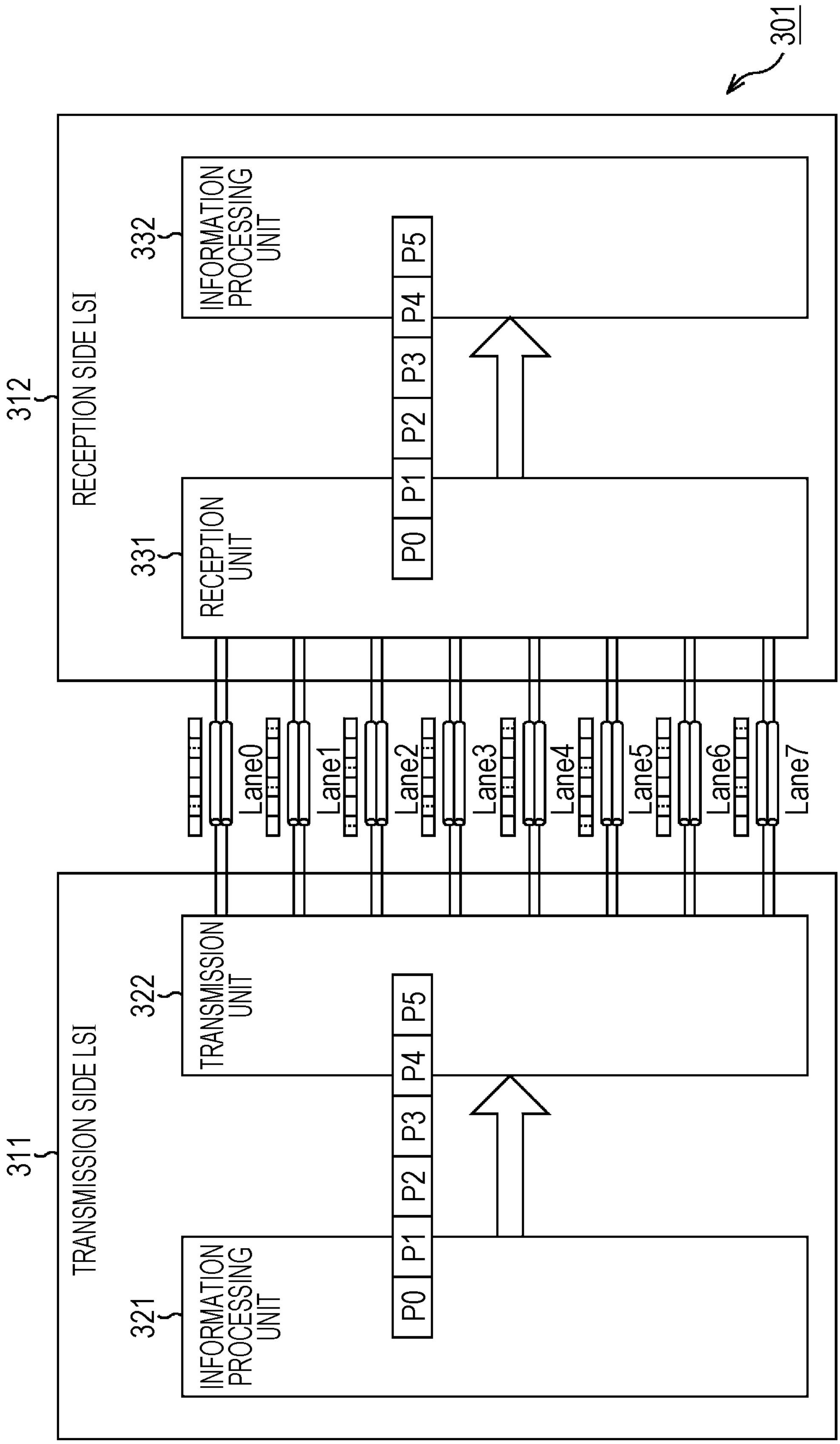
301
312
RECEPTION SIDE LSI
331
RECEPTION UNIT
332
INFORMATION PROCESSING UNIT
P0
P1
P2
P3
P4
P5
Lane0
Lane1
Lane2
Lane3
Lane4
Lane5
Lane6
Lane7
311
TRANSMISSION SIDE LSI
321
INFORMATION PROCESSING UNIT
322
TRANSMISSION UNIT
P0
P1
P2
P3
P4
P5

FIG. 48

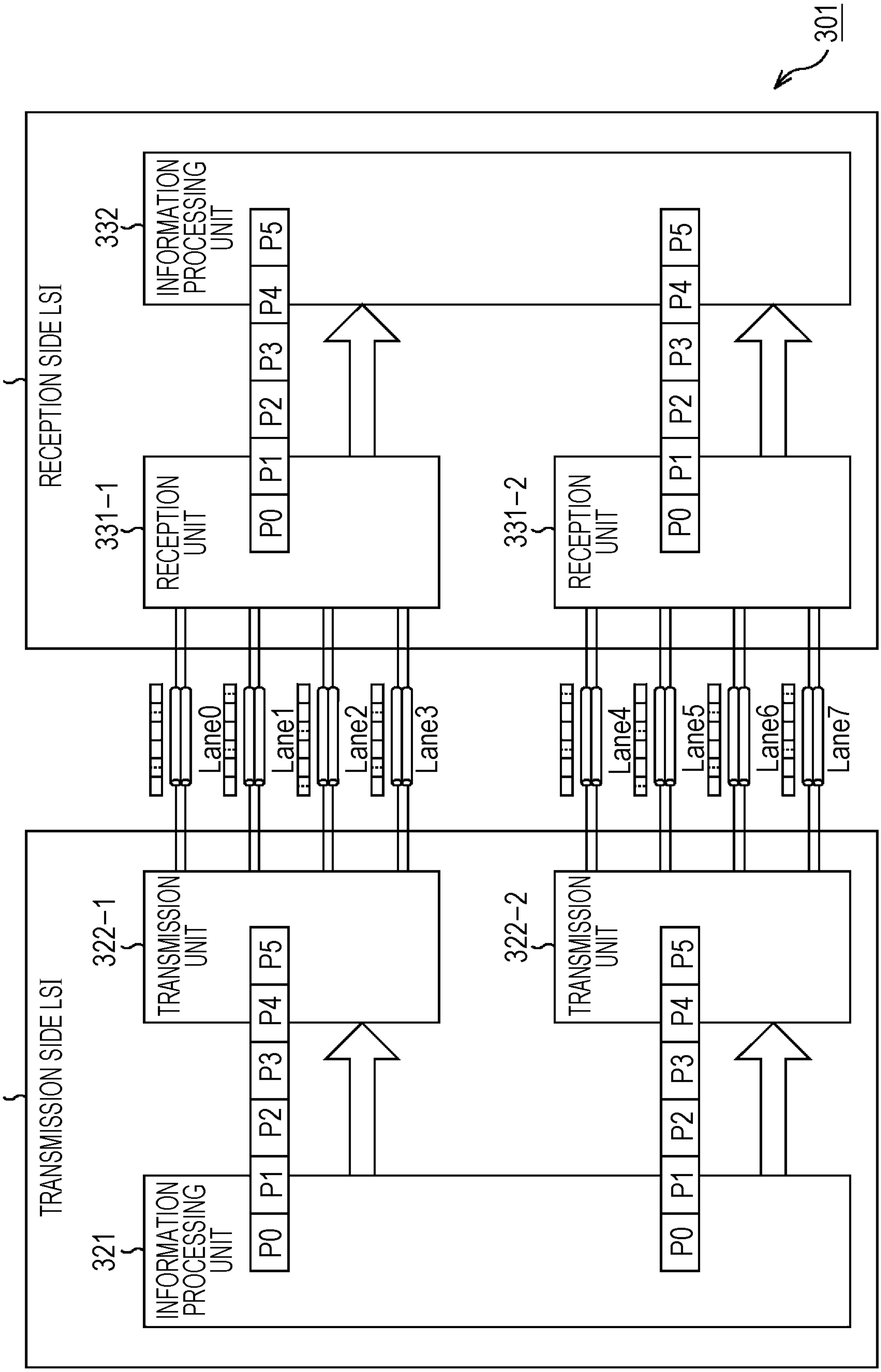
301
312
RECEPTION SIDE LSI
332
INFORMATION PROCESSING UNIT
331-1
RECEPTION UNIT
331-2
RECEPTION UNIT
P0 P1 P2 P3 P4 P5
P0 P1 P2 P3 P4 P5
Lane0
Lane1
Lane2
Lane3
Lane4
Lane5
Lane6
Lane7
311
TRANSMISSION SIDE LSI
322-1
TRANSMISSION UNIT
322-2
TRANSMISSION UNIT
321
INFORMATION PROCESSING UNIT
P0 P1 P2 P3 P4 P5
P0 P1 P2 P3 P4 P5

FIG. 49

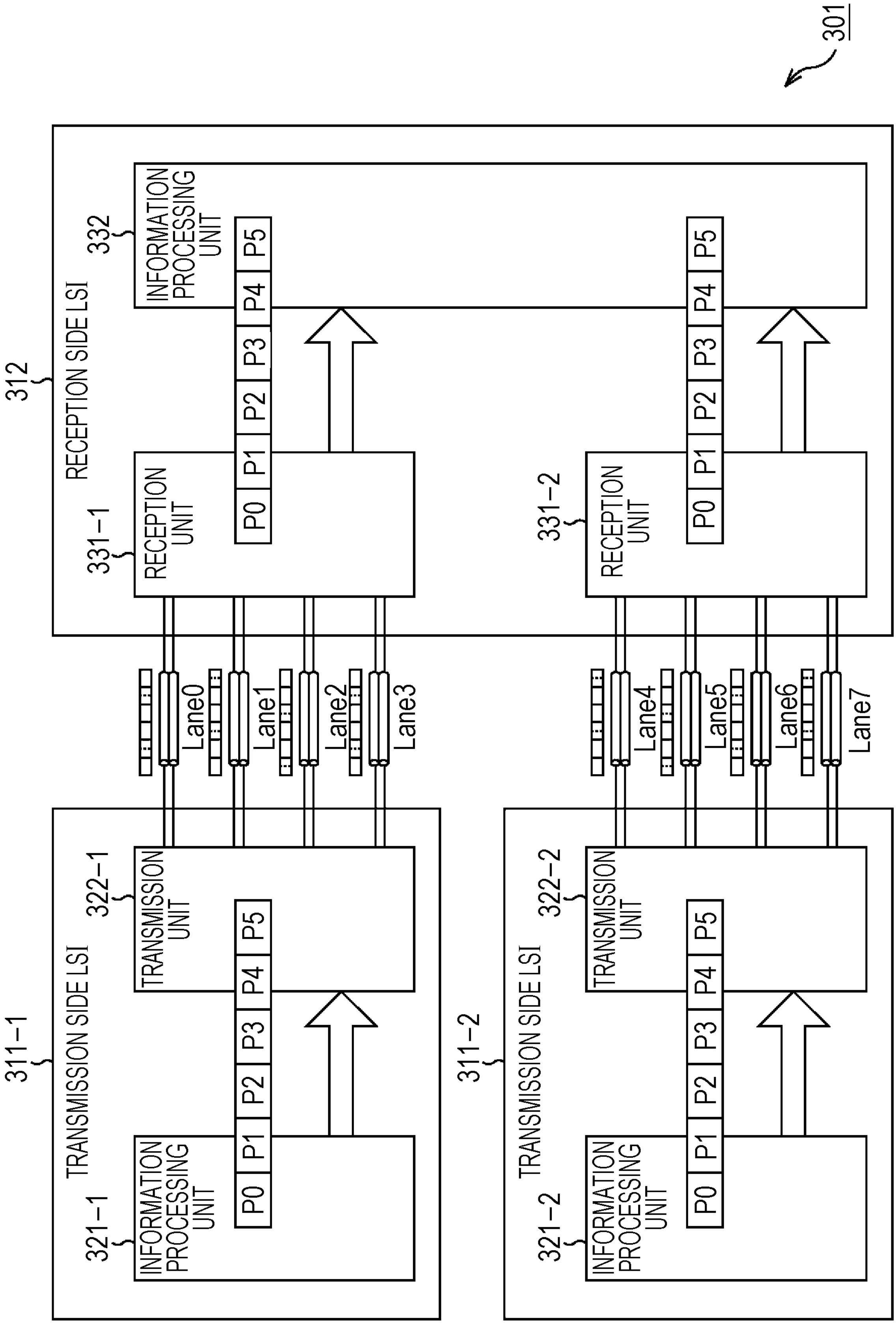
301
312
RECEPTION SIDE LSI
332
INFORMATION PROCESSING UNIT
331−1
RECEPTION UNIT
331−2
RECEPTION UNIT
P0 P1 P2 P3 P4 P5
P0 P1 P2 P3 P4 P5
Lane0
Lane1
Lane2
Lane3
Lane4
Lane5
Lane6
Lane7
311−1
TRANSMISSION SIDE LSI
321−1
INFORMATION PROCESSING UNIT
322−1
TRANSMISSION UNIT
P0 P1 P2 P3 P4 P5
311−2
TRANSMISSION SIDE LSI
321−2
INFORMATION PROCESSING UNIT
322−2
TRANSMISSION UNIT
P0 P1 P2 P3 P4 P5

FIG. 50

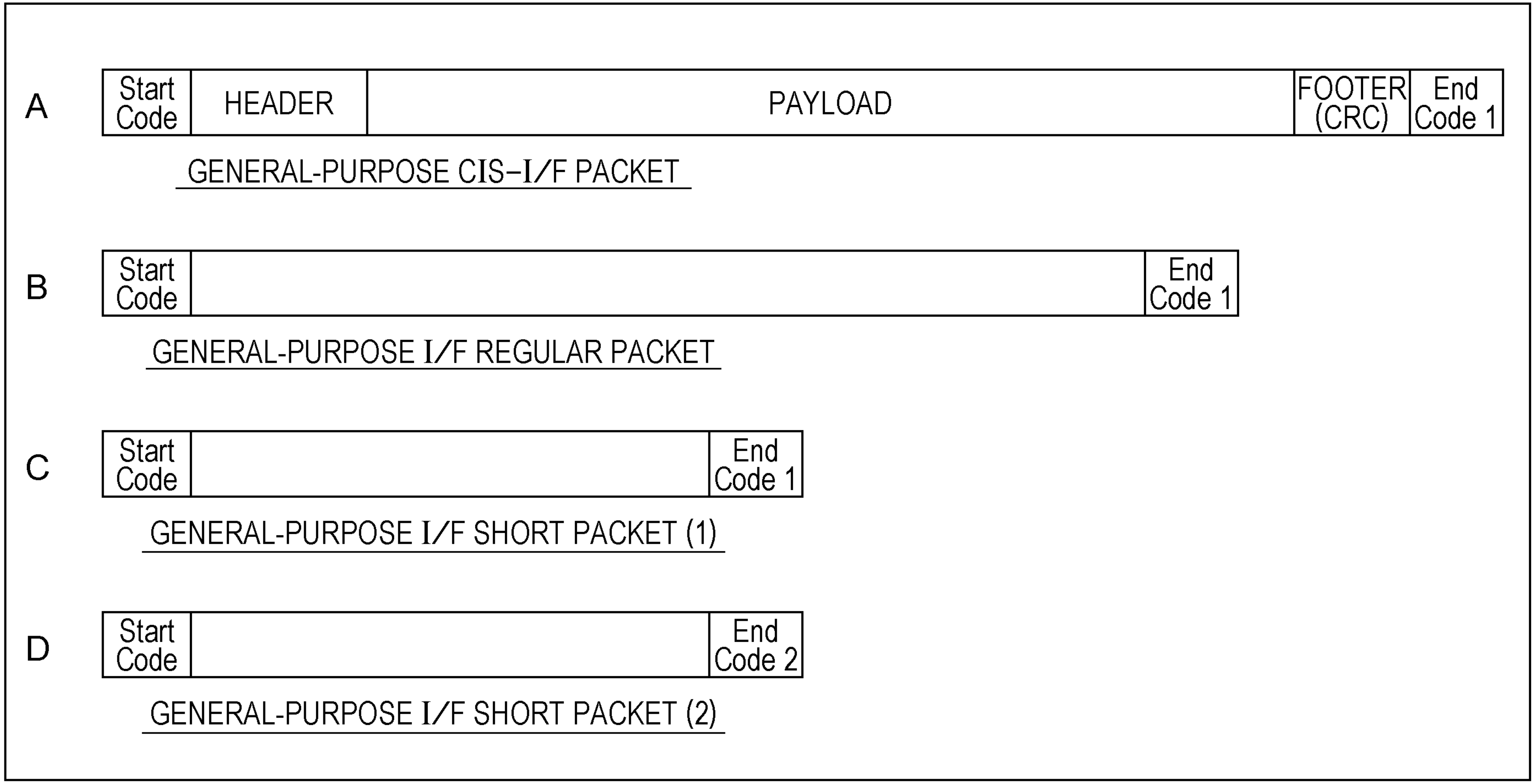
A
Start Code
HEADER
PAYLOAD
FOOTER (CRC)
End Code 1
GENERAL-PURPOSE CIS-I/F PACKET
B
Start Code
End Code 1
GENERAL-PURPOSE I/F REGULAR PACKET
C
Start Code
End Code 1
GENERAL-PURPOSE I/F SHORT PACKET (1)
D
Start Code
End Code 2
GENERAL-PURPOSE I/F SHORT PACKET (2)

FIG. 51

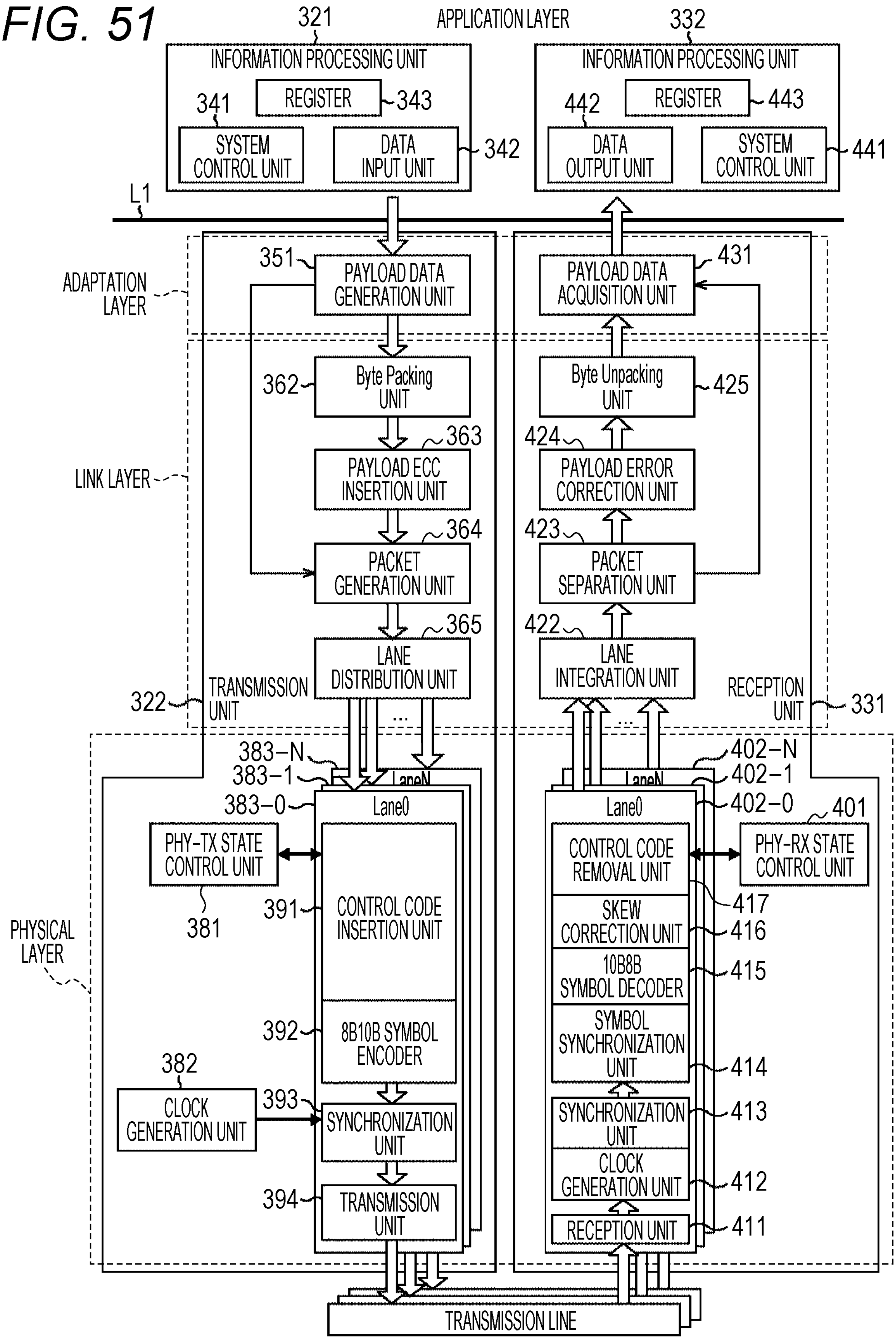

APPLICATION LAYER
321
INFORMATION PROCESSING UNIT
REGISTER
343
341
SYSTEM CONTROL UNIT
DATA INPUT UNIT
342
332
INFORMATION PROCESSING UNIT
REGISTER
443
442
DATA OUTPUT UNIT
SYSTEM CONTROL UNIT
441
L1
ADAPTATION LAYER
351
PAYLOAD DATA GENERATION UNIT
PAYLOAD DATA ACQUISITION UNIT
431
LINK LAYER
362
Byte Packing UNIT
Byte Unpacking UNIT
425
363
PAYLOAD ECC INSERTION UNIT
424
PAYLOAD ERROR CORRECTION UNIT
364
PACKET GENERATION UNIT
423
PACKET SEPARATION UNIT
365
LANE DISTRIBUTION UNIT
422
LANE INTEGRATION UNIT
322
TRANSMISSION UNIT
RECEPTION UNIT
331
383-N
383-1
383-0
LaneN
Lane0
402-N
402-1
402-0
401
PHY-TX STATE CONTROL UNIT
381
PHY-RX STATE CONTROL UNIT
PHYSICAL LAYER
391
CONTROL CODE INSERTION UNIT
392
8B10B SYMBOL ENCODER
382
CLOCK GENERATION UNIT
393
SYNCHRONIZATION UNIT
394
TRANSMISSION UNIT
CONTROL CODE REMOVAL UNIT
417
SKEW CORRECTION UNIT
416
10B8B SYMBOL DECODER
415
SYMBOL SYNCHRONIZATION UNIT
414
SYNCHRONIZATION UNIT
413
CLOCK GENERATION UNIT
412
RECEPTION UNIT
411
TRANSMISSION LINE

FIG. 52

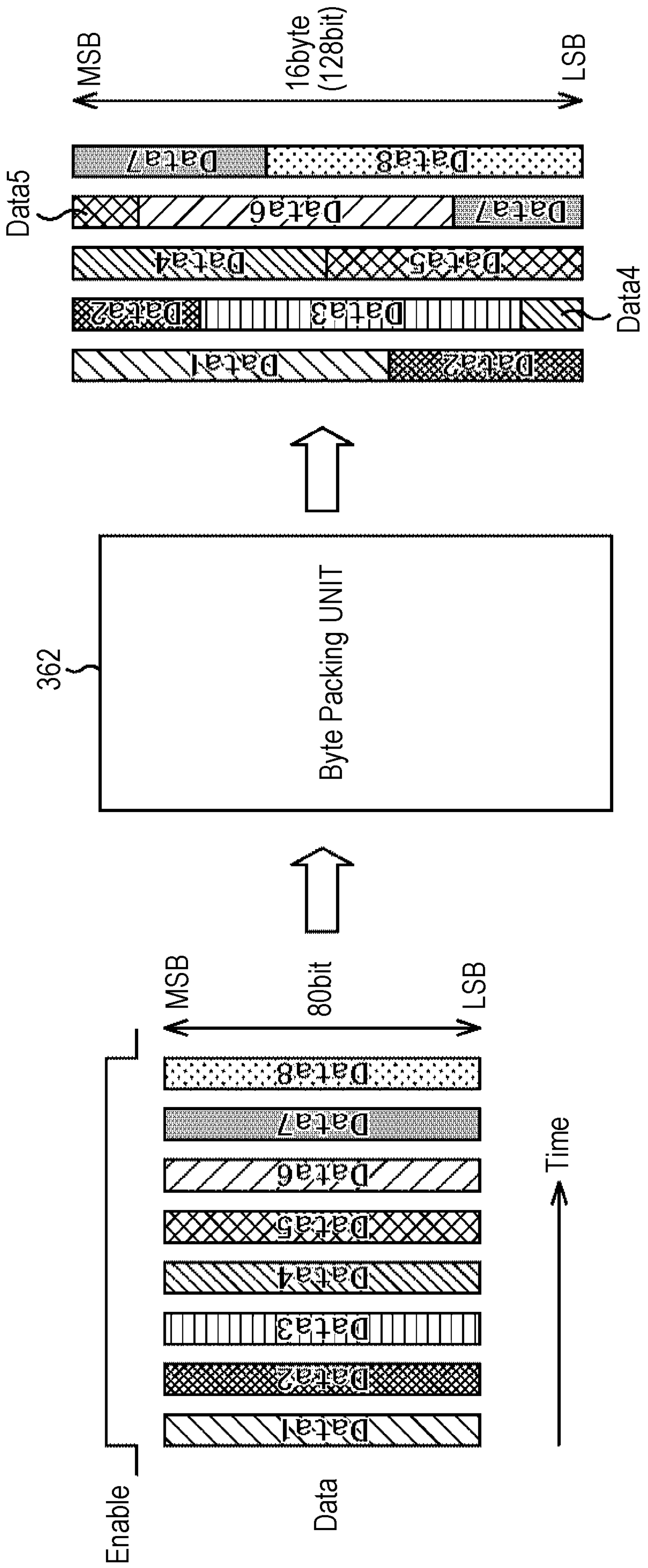
Enable
Data
Data1
Data2
Data3
Data4
Data5
Data6
Data7
Data8
MSB
80bit
LSB
Time
362
Byte Packing UNIT
Data1
Data2
Data2
Data3
Data4
Data4
Data5
Data5
Data6
Data7
Data7
Data8
MSB
16byte
(128bit)
LSB

FIG. 53

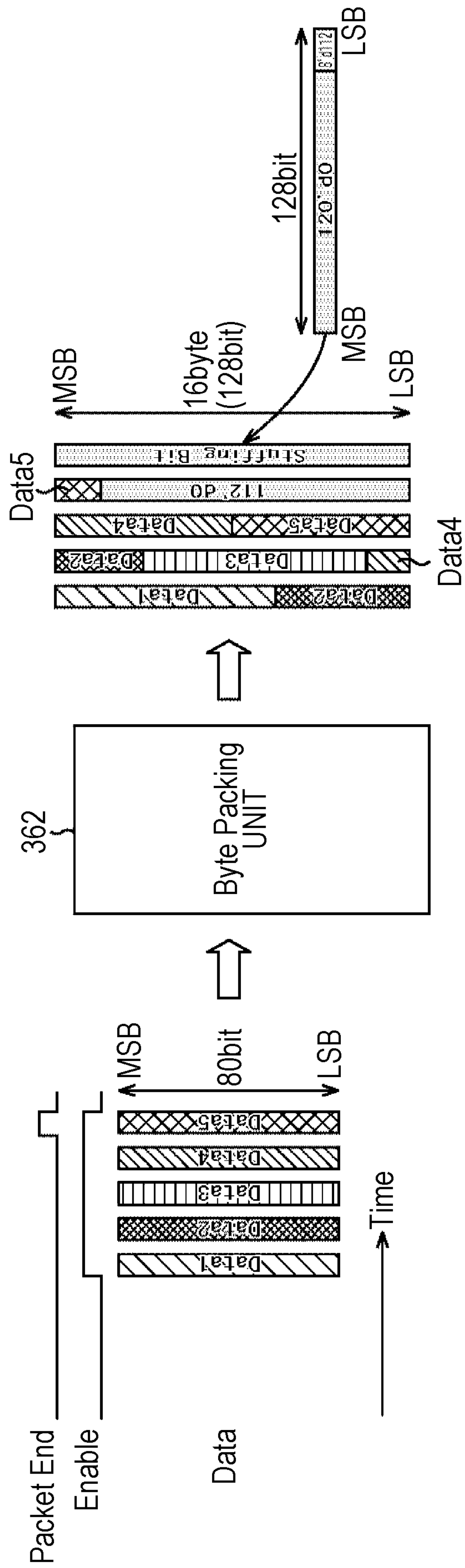
Packet End
Enable
Data
Data1
Data2
Data3
Data4
Data5
MSB
80bit
LSB
Time
362
Byte Packing UNIT
Data5
Data4
112'd0
Stuffing Bit
MSB
16byte (128bit)
LSB
128bit
120'd0
MSB
LSB

FIG. 54

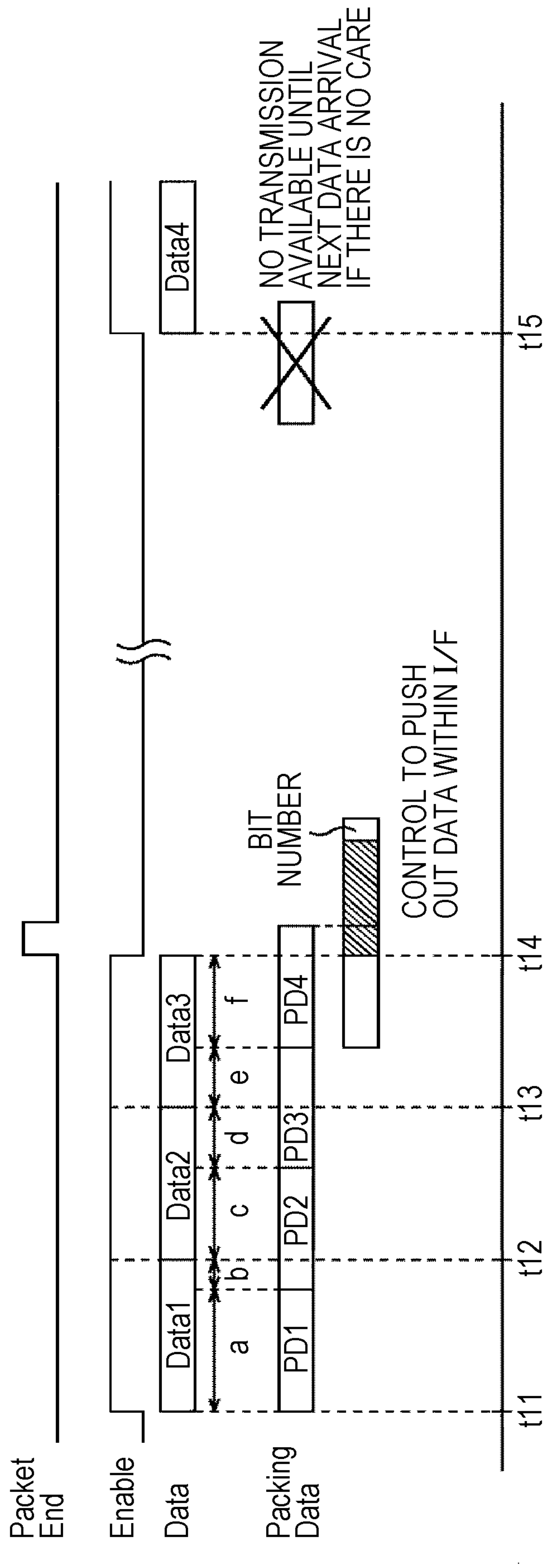

Packet End
Enable
Data
Packing Data
Data1
Data2
Data3
Data4
a
b
c
d
e
f
PD1
PD2
PD3
PD4
BIT NUMBER
CONTROL TO PUSH OUT DATA WITHIN I/F
NO TRANSMISSION AVAILABLE UNTIL NEXT DATA ARRIVAL IF THERE IS NO CARE
t11
t12
t13
t14
t15

FIG. 55

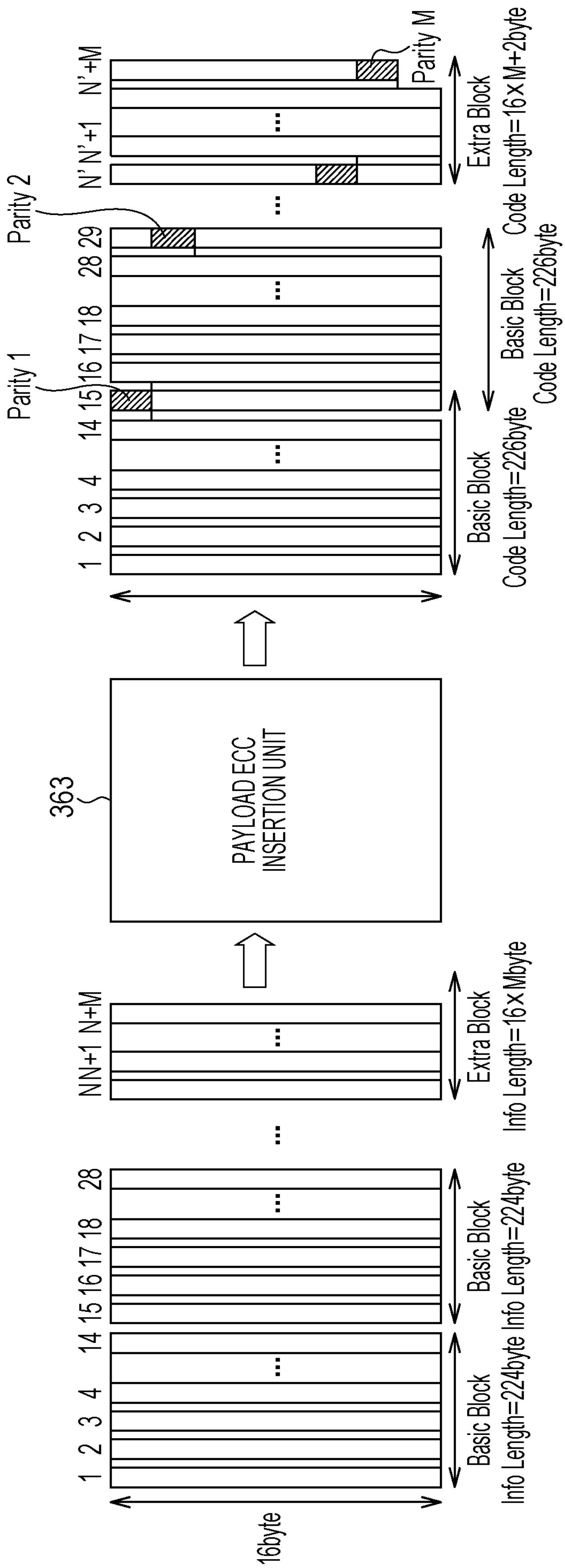
16byte
1 2 3 4 14 15 16 17 18 28
Basic Block
Info Length=224byte
Basic Block
Info Length=224byte
N N+1 N+M
Extra Block
Info Length=16×Mbyte
363
PAYLOAD ECC
INSERTION UNIT
1 2 3 4 14 15 16 17 18 28 29
Parity 1
Parity 2
Basic Block
Code Length=226byte
Basic Block
Code Length=226byte
N' N'+1 N'+M
Parity M
Extra Block
Code Length=16×M+2byte

FIG. 56

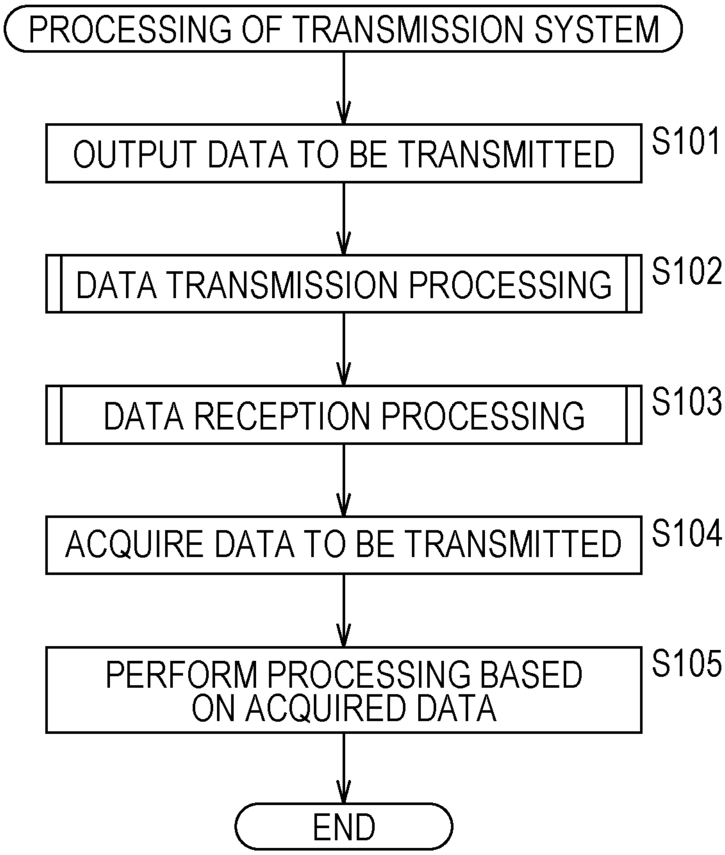
PROCESSING OF TRANSMISSION SYSTEM
OUTPUT DATA TO BE TRANSMITTED
S101
DATA TRANSMISSION PROCESSING
S102
DATA RECEPTION PROCESSING
S103
ACQUIRE DATA TO BE TRANSMITTED
S104
PERFORM PROCESSING BASED ON ACQUIRED DATA
S105
END

FIG. 57

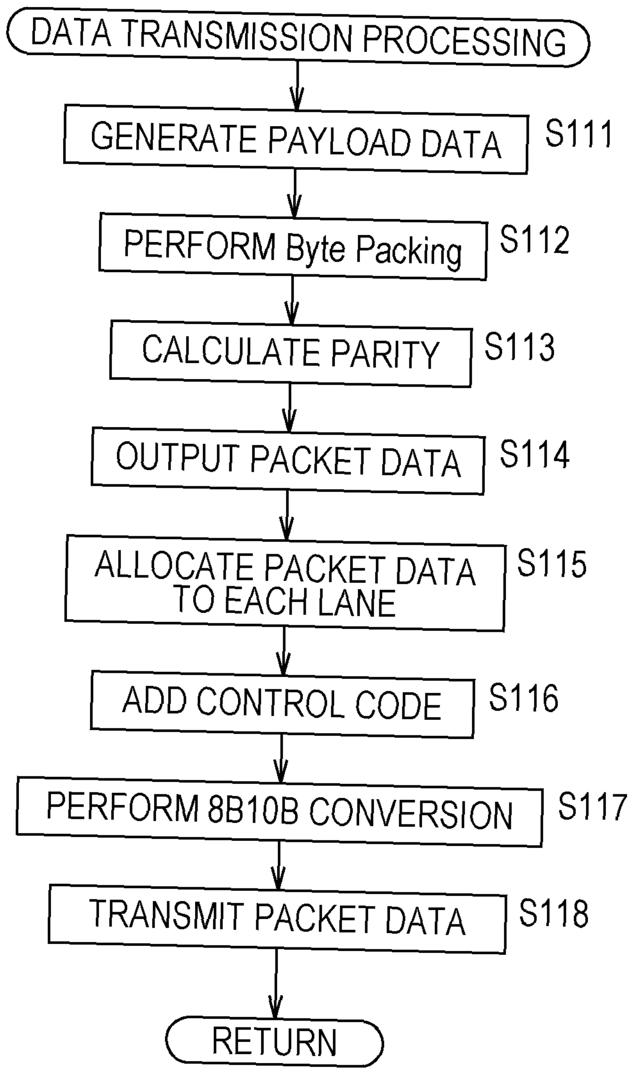
DATA TRANSMISSION PROCESSING
GENERATE PAYLOAD DATA
S111
PERFORM Byte Packing
S112
CALCULATE PARITY
S113
OUTPUT PACKET DATA
S114
ALLOCATE PACKET DATA TO EACH LANE
S115
ADD CONTROL CODE
S116
PERFORM 8B10B CONVERSION
S117
TRANSMIT PACKET DATA
S118
RETURN

FIG. 58

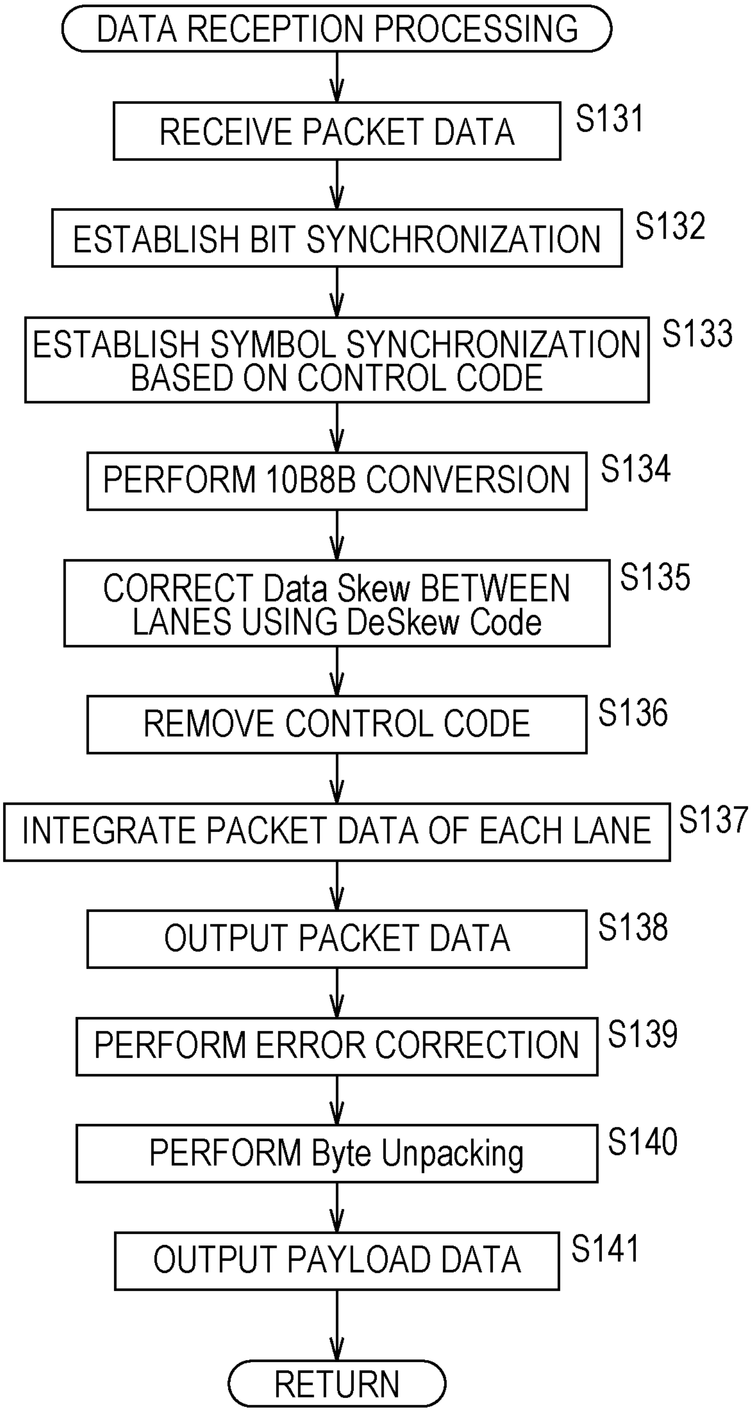
DATA RECEPTION PROCESSING
RECEIVE PACKET DATA
S131
ESTABLISH BIT SYNCHRONIZATION
S132
ESTABLISH SYMBOL SYNCHRONIZATION BASED ON CONTROL CODE
S133
PERFORM 10B8B CONVERSION
S134
CORRECT Data Skew BETWEEN LANES USING DeSkew Code
S135
REMOVE CONTROL CODE
S136
INTEGRATE PACKET DATA OF EACH LANE
S137
OUTPUT PACKET DATA
S138
PERFORM ERROR CORRECTION
S139
PERFORM Byte Unpacking
S140
OUTPUT PAYLOAD DATA
S141
RETURN

FIG. 59

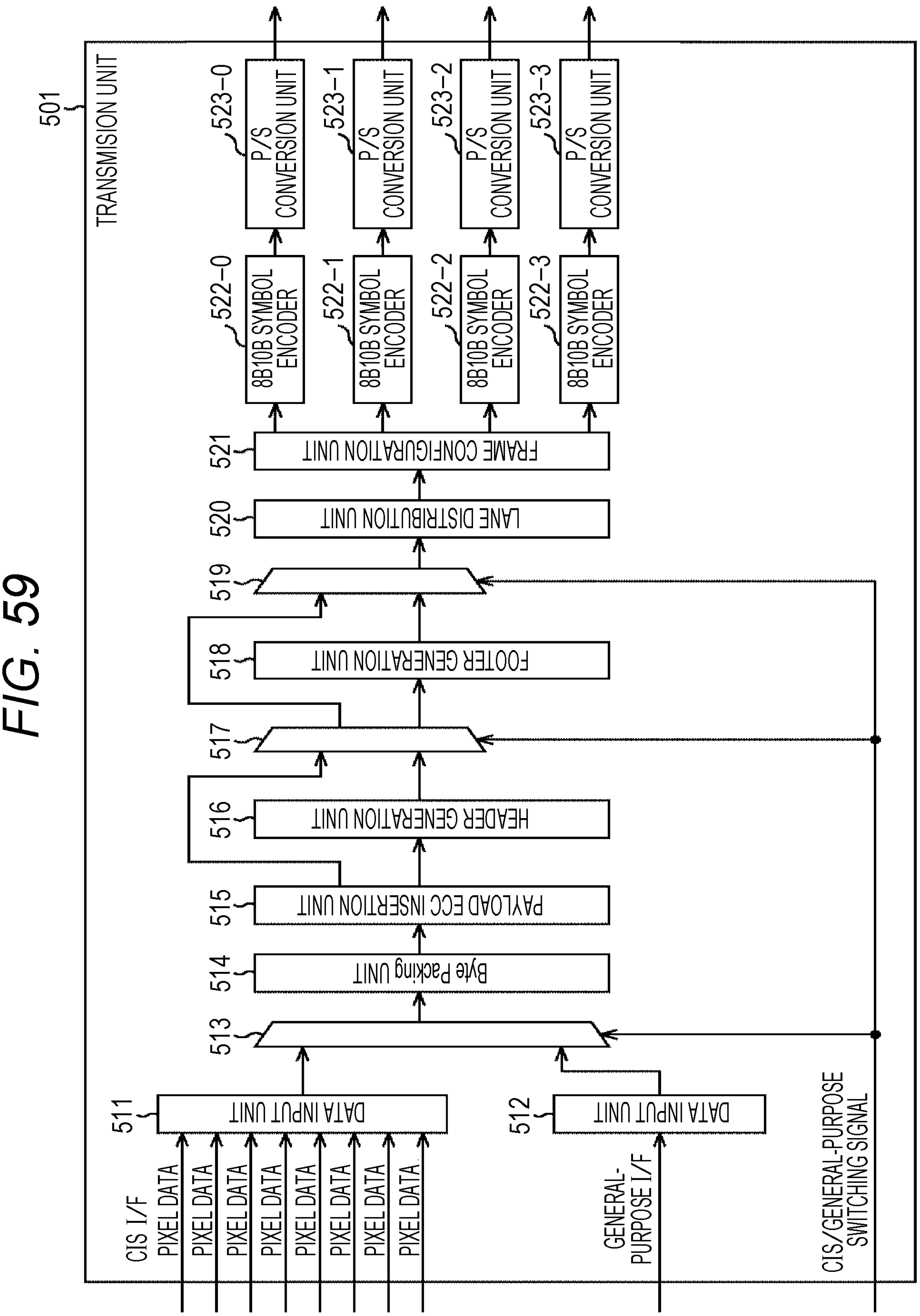
501
TRANSMISION UNIT
511
DATA INPUT UNIT
CIS I/F
PIXEL DATA
PIXEL DATA
PIXEL DATA
PIXEL DATA
PIXEL DATA
PIXEL DATA
PIXEL DATA
PIXEL DATA
512
DATA INPUT UNIT
GENERAL-PURPOSE I/F
CIS/GENERAL-PURPOSE SWITCHING SIGNAL
513
514
Byte Packing UNIT
515
PAYLOAD ECC INSERTION UNIT
516
HEADER GENERATION UNIT
517
518
FOOTER GENERATION UNIT
519
520
LANE DISTRIBUTION UNIT
521
FRAME CONFIGURATION UNIT
522-0
8B10B SYMBOL ENCODER
522-1
8B10B SYMBOL ENCODER
522-2
8B10B SYMBOL ENCODER
522-3
8B10B SYMBOL ENCODER
523-0
P/S CONVERSION UNIT
523-1
P/S CONVERSION UNIT
523-2
P/S CONVERSION UNIT
523-3
P/S CONVERSION UNIT

FIG. 60

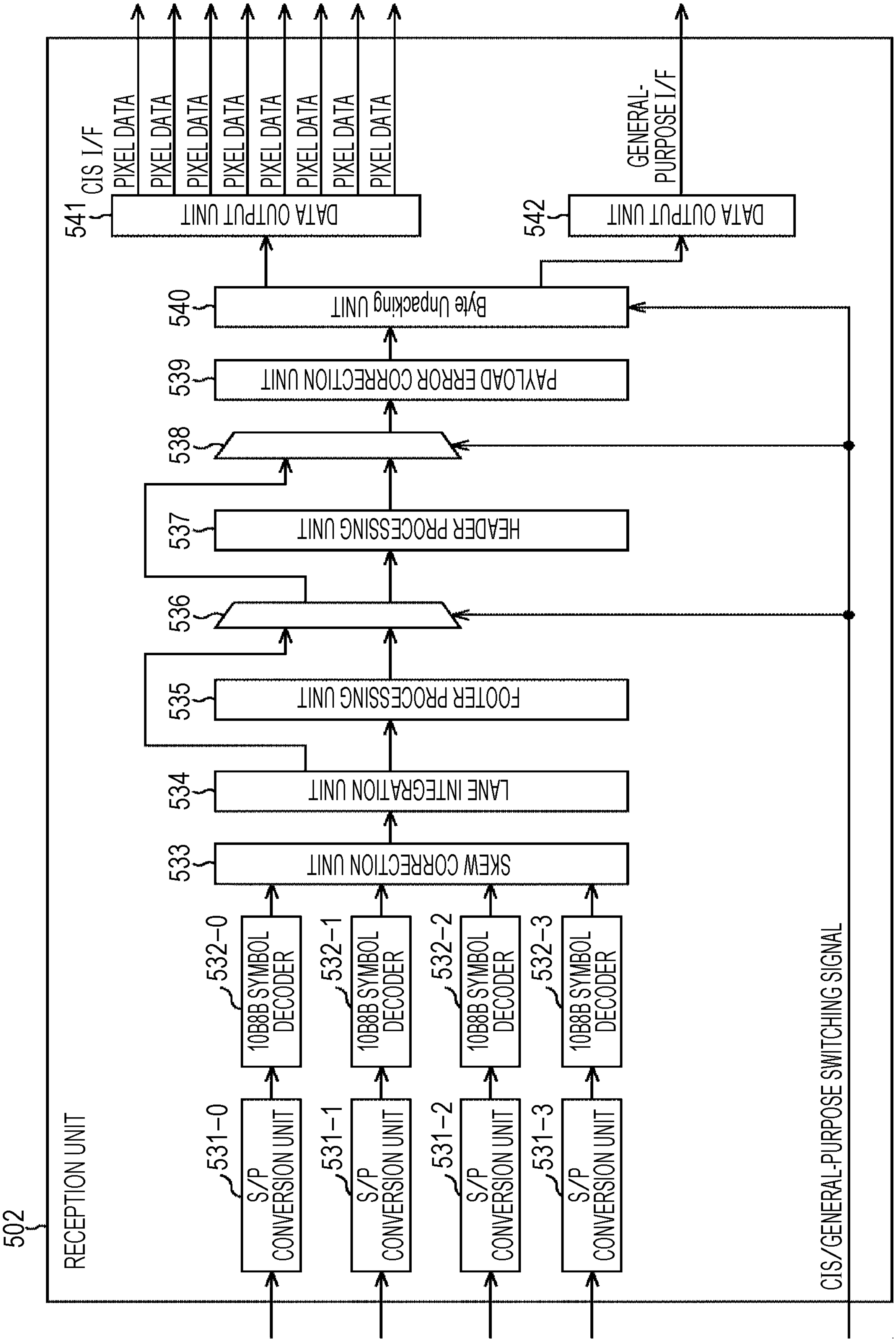
502
RECEPTION UNIT
531-0
S/P CONVERSION UNIT
531-1
S/P CONVERSION UNIT
531-2
S/P CONVERSION UNIT
531-3
S/P CONVERSION UNIT
532-0
10B8B SYMBOL DECODER
532-1
10B8B SYMBOL DECODER
532-2
10B8B SYMBOL DECODER
532-3
10B8B SYMBOL DECODER
533
SKEW CORRECTION UNIT
534
LANE INTEGRATION UNIT
535
FOOTER PROCESSING UNIT
536
537
HEADER PROCESSING UNIT
538
539
PAYLOAD ERROR CORRECTION UNIT
540
Byte Unpacking UNIT
541
DATA OUTPUT UNIT
CIS I/F
PIXEL DATA
PIXEL DATA
PIXEL DATA
PIXEL DATA
PIXEL DATA
PIXEL DATA
PIXEL DATA
PIXEL DATA
542
DATA OUTPUT UNIT
GENERAL-PURPOSE I/F
CIS/GENERAL-PURPOSE SWITCHING SIGNAL

FIG. 61

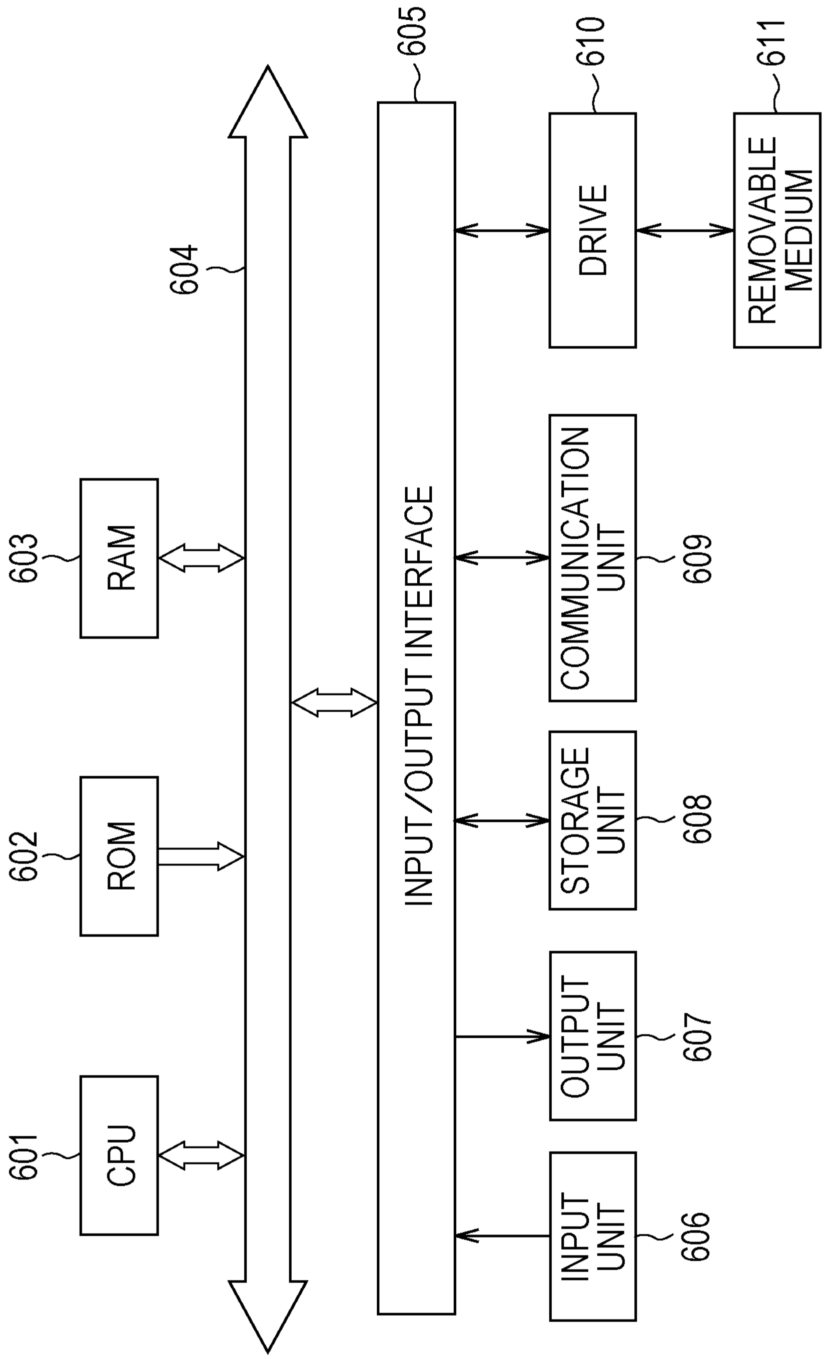
601
CPU
602
ROM
603
RAM
604
605
INPUT/OUTPUT INTERFACE
INPUT UNIT
606
OUTPUT UNIT
607
STORAGE UNIT
608
COMMUNICATION UNIT
609
DRIVE
610
REMOVABLE MEDIUM
611

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006113776 A2